# EUROPEAN PATENT APPLICATION

(11) **EP 3 388 933 A1**
(43) Date of publication of application: **17.10.2018**
(21) Application number: 17738684.4
(22) Date of filing: 13.01.2017
(51) Int. Cl.: G06F 3/0488, G06F 3/041, G06F 3/0481

(54) **METHOD FOR TOUCH INPUT-BASED OPERATION AND ELECTRONIC DEVICE THEREFOR**

(30) Priority: 14.01.2016 KR 20160004939; 13.05.2016 KR 20160058953
(71) Applicant: Samsung Electronics Co., Ltd., Suwon-si, Gyeonggi-do 16677 (KR)
(72) Inventor: KWON, Yong, Seoul 07541 (KR); KIM, Seoktae, Seoul 06241 (KR); NAM, Sangdeuk, Suwon-si Gyeonggi-do 16691 (KR); PARK, Myoung-Soo, Hwaseong-si Gyeonggi-do 18380 (KR); LEE, Sukjae, Seoul 06544 (KR); RHEE, Taik Heon, Seoul 04166 (KR); LEE, Hwajun, Seongnam-si Gyeonggi-do 13531 (KR); HAN, Insil, Seoul 06010 (KR); KO, Jeong-Won, Seoul 06635 (KR); LEE, Dong Oh, Seongnam-si Gyeonggi-do 13523 (KR); LEE, Hyunyeul, Seoul 06219 (KR)
(74) Representative: HGF Limited
(86) International application number: PCT/KR2017/000488
(87) International publication number: WO 2017/123055

(57) **Abstract**

Various examples of the present invention relate to a method for a touch input-based operation in an electronic device, and the device. The electronic device comprises: a touch sensing display; a unit for measuring the input strength of a touch sensed by the touch sensing display; and at least one processor for detecting a touch-sensed region and performing a control command corresponding to the input strength of the touch among a plurality of control commands mapped to a touch-sensed region. The other examples are also possible.

## Description

### Technical Field

The present disclosure relates to a method and an apparatus for operation of an electronic device based on touch input.

### Background Art

According to an increase in the use of multimedia services using electronic devices, information to be processed by the electronic device and information to be displayed by the electronic device have increased. Accordingly, interest in electronic devices having a touch screen to increase the size of a display unit through improvement of the use of a space has increased.

The touch screen may perform both information input and display on a single screen. For example, the electronic device may detect user's touch input through the touch screen, and display a result of a control command on the touch screen while performing the control command according to a touch input.

### Detailed Description of the Invention

### Technical Problem

By performing the control command corresponding to touch input detected through the touch screen, the electronic device may provide only limited events and has difficulty in providing more various events.

An aspect of various embodiments of the present disclosure is to provide a method and an apparatus for providing various functions based on a strength of a touch input and an area in which the touch input is detected in the electronic device.

Another aspect of various embodiments of the present disclosure is to provide a method and an apparatus for performing a control command corresponding to the touch input strength among a plurality of control commands corresponding to the area in which the touch input is detected in the electronic device.

### Technical Solution

In accordance with an aspect of the present disclosure, an electronic device is provided. The electronic device includes: a touch detection display; a unit configured to measure an input strength of a touch detected on the touch detection display; and at least one processor configured to detect an area in which the touch is detected and perform a control command corresponding to the input strength of the touch among a plurality of control commands mapped to the area in which the touch is detected.

In accordance with another aspect of the present disclosure, a method of operating an electronic device is provided. The method includes: detecting input of a touch; measuring an input strength of the touch; detecting an area in which the touch is detected; and performing a control command corresponding to the input strength of the touch among a plurality of control commands mapped to the area in which the touch is detected.

### Advantageous Effects

According to various embodiments, an electronic device may provide various functions based on a strength of a touch input and an area in which the touch input is detected, and a user may load various functions through the operation alone of controlling the touch input strength according to the touch area. Further, the electronic device may provide different functions according to touch input strengths for each area of an application and thus the user may easily load or control functions specified for each application.

### Brief Description of the Drawings

FIGs. 1A to 1C illustrate touch input types and time points of operation according to the touch input types;
FIG. 2 is a block diagram of an electronic device according to various embodiments of the present disclosure;
FIGs. 3A to 3F illustrate a hierarchical structure for operation based on a touch input type of the electronic device according to various embodiments of the present disclosure;
FIG. 4 illustrates an operating procedure of the electronic device according to various embodiments of the present disclosure;
FIG. 5 illustrates an operation procedure for providing a pop-up menu in the electronic device according to an embodiment of the present disclosure;
FIGs. 6A to 6F illustrate screen examples in which the electronic device displays a pop-up menus according to an embodiment of the present disclosure;
FIG. 7 illustrates an operation procedure when the electronic device detects a touch for a particular button area according to an embodiment of the present disclosure;
FIGs. 8A to 8C illustrate screen examples of an application control operation when the electronic device detects a touch for a particular button area according to an embodiment of the present disclosure;
FIG. 9 illustrates an operation procedure for performing an application control operation in the electronic device according to an embodiment of the present disclosure;
FIGs. 10A and 10B illustrate screen examples indicating an application control operation in the electronic device according to an embodiment of the present disclosure;
FIG. 11 illustrates an operation procedure for displaying a preview screen in the electronic device according to an embodiment of the present disclosure;
FIG. 12A illustrates an operation procedure for maintaining the preview screen in the electronic device according to an embodiment of the present disclosure;
FIG. 12B illustrates an operation procedure for removing the preview screen in the electronic device according to an embodiment of the present disclosure;
FIGs. 13A to 13D illustrate screen examples in which the electronic device displays the preview screen according to an embodiment of the present disclosure;
FIG. 14 illustrates an operation procedure for changing an application to a pop-up window in the electronic device according to an embodiment of the present disclosure;
FIG. 15 illustrates a screen example in which the electronic device changes the application to the pop-up window according to an embodiment of the present disclosure;
FIG. 16 illustrates an operation procedure for fixing an application in the electronic device according to an embodiment of the present disclosure;
FIG. 17 illustrates a screen example in which the electronic device fixes the application according to an embodiment of the present disclosure;
FIG. 18 illustrates an operation procedure for fixing an item to a list in the electronic device according to an embodiment of the present disclosure;
FIG. 19 illustrates a screen example in which the electronic device fixes the item to the list according to an embodiment of the present disclosure;
FIG. 20 illustrates an operation procedure for moving a content screen of an application in the electronic device according to an embodiment of the present disclosure;
FIGs. 21A and 21B illustrate operation procedures for moving a content screen of an application based on a touch area in the electronic device according to an embodiment of the present disclosure;
FIGs. 22A and 22B illustrate screen examples in which the electronic device moves the content screen of the application according to an embodiment of the present disclosure;
FIG. 23 illustrates an operation procedure based on a touch area and a touch input strength in the electronic device according to an embodiment of the present disclosure;
FIGs. 24A to 24H illustrate screen examples in which the electronic device operates on the basis of a touch input type for an application item of a home screen according to various embodiments of the present disclosure;
FIGs. 25A to 25G illustrate screen examples in which the electronic device operates on the basis of a touch input type for a contact application according to various embodiments of the present disclosure;
FIGs. 26A to 26F illustrate screen examples in which the electronic device operates on the basis of a touch input type for a call application according to various embodiments of the present disclosure;
FIGs. 27A and 27B illustrate screen examples in which the electronic device operates on the basis of a touch input type during a call with another electronic device according to various embodiments of the present disclosure;
FIGs. 28A to 28G illustrate screen examples in which the electronic device operates on the basis of a touch input type for a message application according to various embodiments of the present disclosure;
FIGs. 29A to 29G illustrate screen examples in which the electronic device operates on the basis of a touch input type for a gallery application according to various embodiments of the present disclosure;
FIGs. 30A to 30D illustrate screen examples in which the electronic device operates on the basis of a touch input type for an email application according to various embodiments of the present disclosure;
FIGs. 31A and 31B illustrate screen examples in which the electronic device operates on the basis of a touch input type for a call reception application according to various embodiments of the present disclosure;
FIGs. 32A to 32E illustrate screen examples in which the electronic device operates on the basis of a touch input type for an application of displaying a content list according to various embodiments of the present disclosure;
FIGs. 33A to 33G illustrate screen examples in which the electronic device operates on the basis of a touch input type for a calendar application according to various embodiments of the present disclosure;
FIGs. 34A to 34C illustrate screen examples in which the electronic device operates on the basis of a touch input type for a search application according to various embodiments of the present disclosure;
FIGs. 35A and 35B illustrate screen examples in which the electronic device operates on the basis of a touch input type for a contact application displayed in an edge area according to various embodiments of the present disclosure;
FIGs. 36A and 36B illustrate screen examples in which the electronic device operates on the basis of a touch input type for an Internet application according to various embodiments of the present disclosure;
FIG. 37 illustrates screen examples in which the electronic device operates on the basis of a touch input type for a clock application according to various embodiments of the present disclosure;
FIGs. 38A and 38B illustrate screen examples in which the electronic device operates on the basis of a touch input type for a music application according to various embodiments of the present disclosure;
FIG. 39 illustrates a screen example in which the electronic device operates on the basis of a touch input type for a video reproduction application according to various embodiments of the present disclosure;
FIG. 40 illustrates a screen example in which the electronic device operates on the basis of a touch input type for a video editing application according to various embodiments of the present disclosure; and
FIG. 41 illustrates a screen example in which the electronic device operates on the basis of a touch input type for a radio application according to various embodiments of the present disclosure.

### Mode for Carrying Out the Invention

Hereinafter, various embodiments of the present disclosure will be described with reference to the accompanying drawings. However, it should be understood that the present disclosure is not limited to the particular embodiments, but includes all modifications/changes, equivalents, and/or alternatives falling within the spirit and the scope of the present disclosure. In describing the drawings, similar reference numerals may be used to designate similar elements.

The terms "have", "may have", "include", or "may include" used in the various embodiments of the present disclosure indicate the presence of disclosed corresponding functions, operations, elements, and the like, and do not limit additional one or more functions, operations, elements, and the like.

The terms "A or B", "at least one of A or/and B" or "one or more of A or/and B" used in the various embodiments of the present disclosure include any and all combinations of words enumerated with it. For example, "A or B", "at least one of A and B" or "at least one of A or B" indicating (1) including at least one A, (2) including at least one B, or (3) including both at least one A and at least one B.

Although the term, such as "first" and "second" used in various embodiments of the present disclosure may modify various elements of various embodiments of the present disclosure, these terms do not limit the corresponding elements. For example, these terms do not limit an order and/or importance of the corresponding elements. These terms may be used for the purpose of distinguishing one element from another element. For example, a first user device and a second user device all indicate user devices and may indicate different user devices. For example, a first element may be named a second element without departing from the scope of right of various embodiments of the present disclosure, and similarly, a second element may be named a first element.

It will be understood that when an element (e.g., a first element) is "connected to" or "(operatively or communicatively) coupled with/to" to another element (e.g., a second element), the element may be directly connected or coupled to another element, and there may be an intervening element (e.g., a third element) between the element and another element. To the contrary, it will be understood that when an element (e.g., the first element) is "directly connected" or "directly coupled" to another element (e.g., the second element), there is no intervening element (e.g., the third element) between the element and another element.

The expression "configured to (or set to)" used in various embodiments of the present disclosure may be replaced with "suitable for", "having the capacity to", "designed to", "adapted to", "made to", or "capable of" according to a situation. The term "configured to (set to)" does not necessarily mean "specifically designed to" in a hardware level. Instead, the expression "apparatus configured to..." may mean that the apparatus is "capable of..." along with other devices or parts in a certain situation. For example, "a processor configured to (set to) perform A, B, and C" may be a dedicated processor, e.g., an embedded processor, for performing a corresponding operation, or a generic-purpose processor, e.g., a central processing unit (CPU) or an application processor (AP), capable of performing a corresponding operation by executing one or more software programs stored in a memory device.

The terms as used herein are used merely to describe certain embodiments and are not intended to limit the present disclosure. Further, all the terms used herein, including technical and scientific terms, should be interpreted to have the same meanings as commonly understood by those skilled in the art to which the present disclosure pertains, and should not be interpreted to have ideal or excessively formal meanings unless explicitly defined in various embodiments of the present disclosure.

An electronic device according to various embodiments of the present disclosure may be a device. For example, the electronic device according to various embodiments of the present disclosure may include at least one of: a smart phone; a tablet personal computer (PC); a mobile phone; an e-book reader; a laptop PC; a netbook computer; a workstation, a personal digital assistant (PDA); a portable multimedia player (PMP); an MP3 player; a mobile medical device; a camera; or a wearable device (e.g., a head-mount-device (HMD), an electronic glasses, an electronic clothing, an electronic bracelet, an electronic necklace, an electronic appcessory, an electronic tattoo, a smart mirror, or a smart watch).

In other embodiments, an electronic device may comprise at least one of: a medical equipment (e.g., a mobile medical device (e.g., a blood glucose monitoring device, a heart rate monitor, a blood pressure monitoring device or a temperature meter), a magnetic resonance angiography (MRA) machine, a magnetic resonance imaging (MRI) machine, a computed tomography (CT) scanner, or an ultrasound machine); a navigation device; a global navigation satellite system (GNSS); an event data recorder (EDR); a flight data recorder (FDR); an in-vehicle infotainment device; an electronic equipment for a ship (e.g., ship navigation equipment and/or a gyrocompass); an avionics equipment; a security equipment; or an internet of things device (e.g., a Lightbulb, various sensors, an electronic meter, a gas meter, a sprinkler, a fire alarm, a thermostat, a streetlamp, a toaster, a sporting equipment, a hot-water tank, a heater, or a boiler and the like).

The electronic device according to some embodiments of the present disclosure may be a flexible device. Further, the electronic device according to an embodiment of the present disclosure is not limited to the aforementioned devices, and may include a new electronic device according to the development of technology.

Hereinafter, an electronic device according to various embodiments will be described with reference to the accompanying drawings. In the present disclosure, the term "user" may indicate a person using an electronic device or a device (e.g., an artificial intelligence electronic device) using an electronic device.

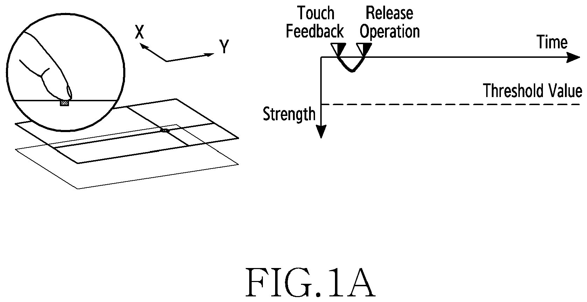

FIGs. 1A to 1C illustrate touch input types and time points of operation according to the touch input types.

As illustrated in FIGs. 1A to 1C, an electronic device according to an embodiment of the present disclosure may distinguish a touch input type of a user on the basis of a time during which touch input detected on a touch screen is maintained and a strength (or intensity) of the touch input. Further, the electronic device may perform different operations, functions, or control commands according to distinguished touch input types. For example, different operations, functions, or control commands for respective touch input types may be mapped to some or all of the touch areas of the electronic devices. Accordingly, the electronic device may determine the operation, function, or control command to be performed on the basis of a touch input type in the touch area.

As illustrated in FIG. 1A, when a time during which the touch input is maintained is shorter than a threshold time (for example, N seconds) and a strength of the touch input is smaller than a threshold value, the electronic device may determine that the touch input type corresponds to a normal touch. The electronic device may identify an operation for a normal touch input at a time point at which the touch is input and perform the identified operation at a time point at which the touch is released. The electronic device may provide the user with feedback data (for example, haptic data such as vibration data) indicating that the operation for the normal touch input is selected at the touch input time point.

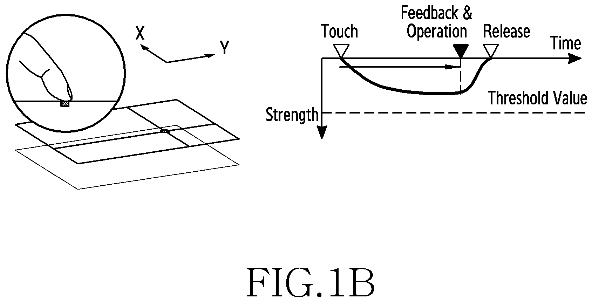

As illustrated in FIG. 1B, when the time during which the touch input is maintained is longer than the threshold time or the strength of the touch input is smaller than the threshold value, the electronic device may determine that the touch input type corresponds to a long touch (for example, tap + hold). The electronic device may identify an operation for the long touch at a time point at which the threshold time has passed from the touch input start time point and perform the identified operation. The electronic device may provide the user with feedback data indicating that the operation for the long touch input is selected at the time point at which the threshold time has passed from the touch input start time point.

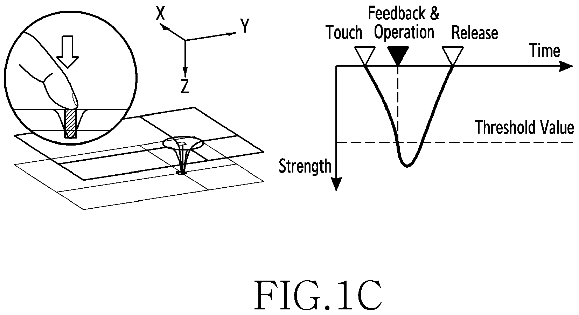

As illustrated in FIG. 1C, when the strength of the touch input is larger than or equal to the threshold value, the electronic device may determine that the touch input type corresponds to a touch by pressure or force. For example, the electronic device may distinguish the touch by pressure or force based on the strength of the touch input regardless of the time during which the touch input is maintained. The electronic device may identify an operation for the touch by pressure or force at a time point at which the strength of the touch input becomes larger than or equal to the threshold value and perform the identified operation. The electronic device may provide the user with feedback data indicating that the operation for the touch input by pressure or force is selected at the time point at which the strength of the touch input becomes larger than or equal to the threshold value.

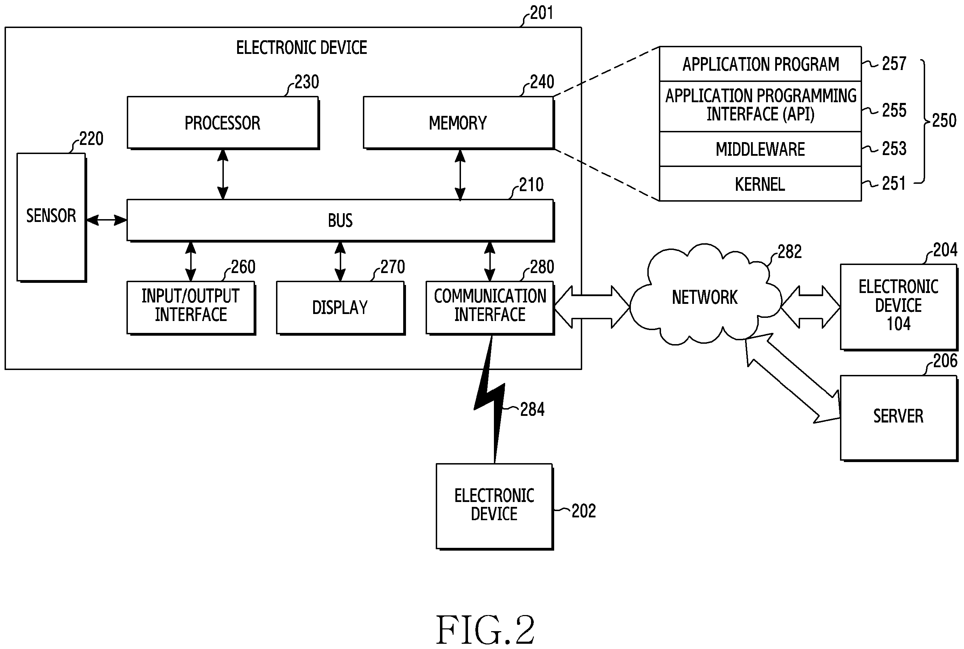

FIG. 2 is a block diagram of an electronic device according to various embodiments of the present disclosure.

As illustrated in FIG. 2, an electronic device 201 may include a bus 210, a sensor 220, a processor 230, a memory 240, an input/output interface 260, a display 270, and a communication interface 280. According to an embodiment, the electronic device 201 may omit at least one of the elements or additionally include other elements.

The bus 210 may include a circuit that interconnects the elements 220 to 280 and transfers communication (for example, control messages and/or data) between the elements.

The sensor module 220 may include at least one sensor. The sensor module 220 may measure a physical quantity through at least one sensor or detect an operational state of the electronic device 201, and may convert measured or detected information into an electric signal. The sensor module 240 may include at least one of a pressure sensor, an atmospheric pressure sensor, a gesture sensor, a gyro sensor, a magnetic sensor, an acceleration sensor, a grip sensor, a proximity sensor, a color sensor (for example, a Red, Green, and Blue (RGB) sensor), a biometric sensor, a temperature/humidity sensor, an illumination sensor, and an Ultraviolet (UV) sensor. For example, the sensor module 240 may acquire information on the strength of the touch input by measuring pressure of the touch input detected on the touch screen of the electronic device 201 through the pressure sensor or the atmospheric sensor. The sensor module 240 may provide the information on the strength of the touch input to the processor 230.

The processor 230 may include one or more of a Central Processing Unit (CPU), an Application Processor (AP), and a Communication Processor (CP). For example, the processor 230 may execute calculations or data processing about controls and/or communication of at least one other element of the electronic device 201. The processor 230 may perform various functions of the electronic device 201. To this end, the processor 230 may control the elements of the electronic device 201.

According to various embodiments, in order to perform the operation according to the touch input detected on the touch screen of the electronic device 201, the processor 230 may identify a touch input area and a touch input strength based on information input through the input/output interface 260 and the sensor module 220. For example, when the touch input is detected on the touch screen of the electronic device 201, the processor 230 may identify an area in which the touch input is detected based on a touch panel included in the input/output interface 260. Further, the processor 230 may identify whether there is additional input for the touch input. For example, when the touch input is detected, the processor 230 may identify whether pressure or force larger than or equal to the threshold value is applied to the area in which the touch input is detected using the sensor module 240. When it is determined that pressure or force larger than or equal to the threshold value is applied to the area in which the touch input is detected, the processor 230 may acquire information on the strength of the additional input, that is, information on the strength of the touch input from the sensor module 240. When it is determined that pressure or force larger than or equal to the threshold value is not applied to the area in which the touch input is detected, the processor 230 may acquire information on the strength of the touch input indicating that the strength of the additional input is 0. The processor 230 may identify at least one control command corresponding to the touch input area in the memory 240 and inspect whether there is a control command corresponding to the strength of the touch input in the at least one control command. In addition, the processor 230 identifies at least one control command corresponding to the touch input area based on attributes of an application (for example, application type or application characteristic) being executed or attributes of an application being displayed on the screen in the memory 240 and inspects whether there is the control command corresponding to the strength of the touch input in the at least one control command. When there is a control command corresponding to the touch input area and the touch input strength, the processor 230 may perform the corresponding control command. According to an embodiment, the processor 230 may classify the control commands mapped to the touch areas as different layers according to the touch input strength. For example, when first control commands corresponding to a first strength and second control commands corresponding to a second strength are mapped to touch areas, the processor 230 may classify the first control commands corresponding to the first strength as a main layer and the second control command corresponding to the second strength as a sub layer, another layer, or a lower layer. Accordingly, the processor 230 may identify control command mapped to the touch input area based on the touch input area and select the control command of the layer corresponding to the touch input strength.

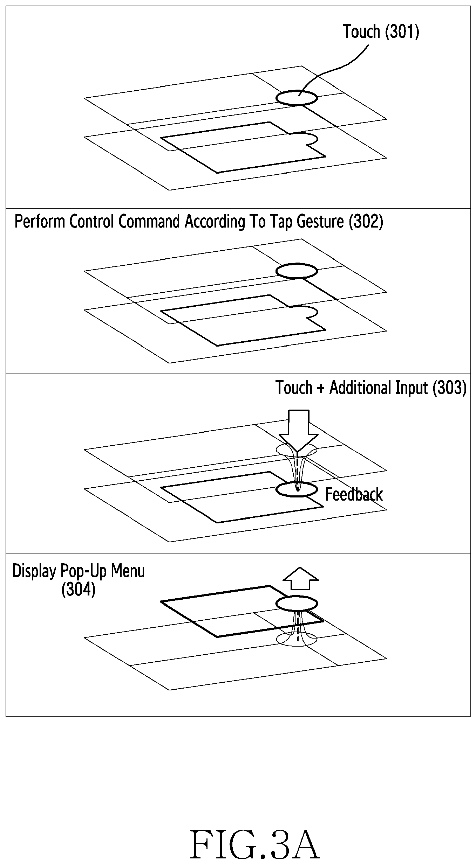

According to an embodiment, when the touch input for a particular area on the touch screen is detected as illustrated in FIG. 3A, the processor 230 may perform the control command of the main layer or the control command of the sub layer according to whether there is additional input by pressure or force. Specifically, when touch input 301 for the particular area on the touch screen is detected but additional input for the touch input 301 is not detected, the processor 230 may determine that the touch input 301 corresponds to a tap gesture for the particular area and perform a control command (for example, display a first screen) according to the tap gesture of the main layer as indicated by reference numeral 302. However, when additional input 303 by pressure or force larger than or equal to a threshold value is detected in addition to the touch input for the particular area on the touch screen, the processor 230 may perform a control command for displaying a pop-up menu mapped to the sub layer corresponding to the touch input and the additional input 303 as indicated by reference numeral 304. The pop-up menu displayed according to the control command of the sub layer may include a quick menu related to items displayed in the area in which the touch input is detected. The quick menu may include sub items which the user has most frequently accessed, sub items which the user most recently accessed, or preset sub items among sub items related to the corresponding item. Further, the pop-up menu may include options for controlling the corresponding item (for example, removing the item or organizing the item).

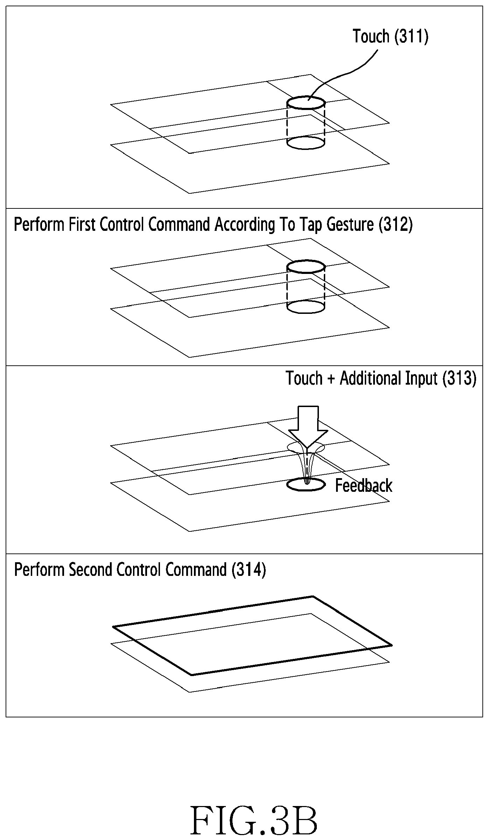

According to an embodiment, when the touch input for the particular area on the touch screen is detected as illustrated in FIG. 3B, the processor 230 may perform the control command of the main layer or the control command of another layer according to whether there is additional input by pressure or force. Specifically, when touch input 311 for a particular area on the touch screen is detected but additional information for the touch input 311 is not detected, the processor 230 may determine that the touch input 311 corresponds to a tap gesture for the particular area and perform a first command according to the tap gesture of the main layer as indicated by reference numeral 312. However, when additional input 313 by pressure or force larger than or equal to a threshold value is detected in additional to the touch input for the particular area on the touch screen, the processor 230 may perform a second control command of another layer corresponding to the touch input and the additional input 303. For example, the control command of the other layer may be a control command for changing an input character in the area in which the touch is detected, changing a selected area, switching an application, or switching to the top content screen within an application.

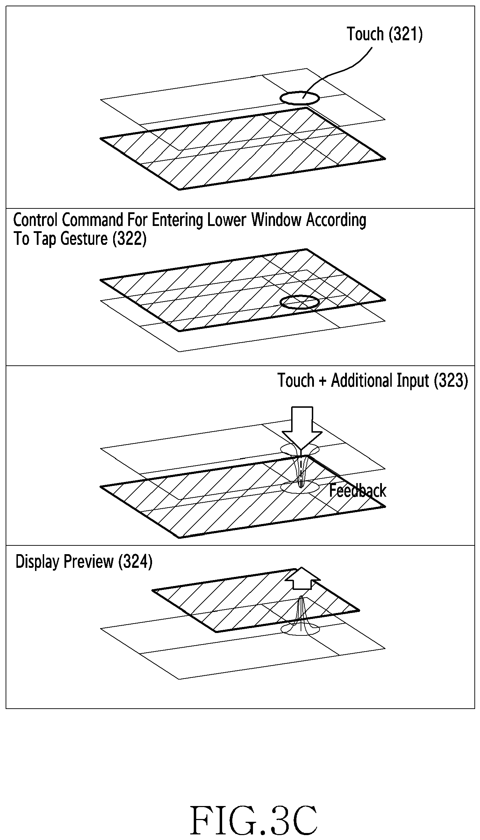

According to an embodiment, when the touch input for the particular area on the touch screen is detected as illustrated in FIG. 3C, the processor 230 may perform a control command of the main layer or a control command of a lower layer according to whether there is additional input by pressure or force. Specifically, when touch input 321 for the particular area on the touch screen is detected but additional information for the touch input 321 is not detected, the processor 230 may determine that the touch input 321 corresponds to a tap gesture for the particular area and perform a control command for entering a lower window according to the tap gesture of the main layer as indicated by reference numeral 322. For example, the processor 230 may perform a control command for entering an item displayed in the particular area. However, when additional input 323 by pressure or force larger than or equal to a threshold value is detected in addition to the touch input for the particular area on the touch screen, the processor 230 may perform a control command for displaying a preview mapped to the lower layer corresponding to the touch input and the additional input 323 as indicated by reference numeral 324. The preview display performed according to the control command of the lower layer may be a pop-up type preview screen related to an item displayed in the area in which the touch input is detected. For example, the preview display is summarized content to be displayed on the screen when the electronic device enters the corresponding item and may be displayed before the entrance into the corresponding item.

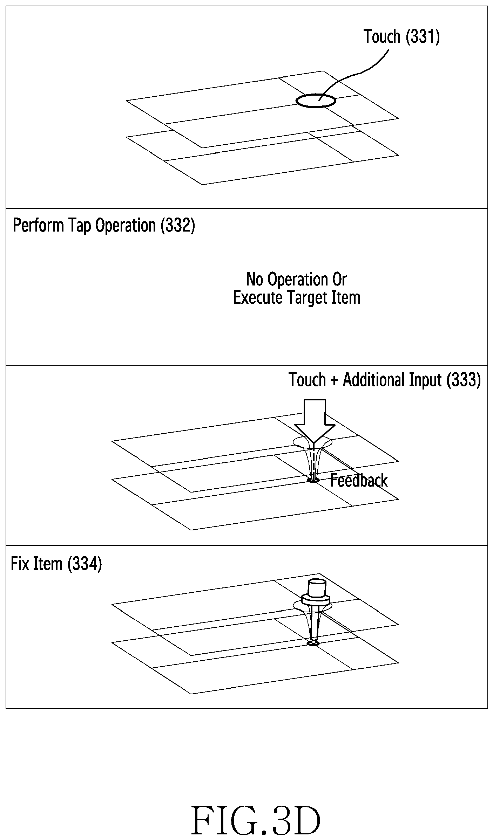

According to an embodiment, when the touch input for the particular area on the touch screen is detected as illustrated in FIG. 3D, the processor 230 may perform a control command of the main layer or a control command of another layer according to whether there is additional input by pressure or force. Specifically, when touch input 331 for the particular area on the touch screen is detected but additional input for the touch input 331 is not detected, the processor 230 may determine that the touch input 331 corresponds to a tap gesture for the particular area and perform a control command for executing a target item according to the tap gesture of the main layer as indicated by reference numeral 322. Alternatively, when there is no control command mapped to the main layer of the particular area in which the touch input 331 is detected, the processor 230 may not perform any operation. However, when additional input 333 by pressure or force larger than or equal to a threshold value is detected in addition to the touch input for the particular area on the touch screen, the processor 230 may perform a control command for fixing an item mapped to another layer corresponding to the touch input and the additional input 333 as indicated by reference numeral 334. For example, when the touch input and the additional input 333 are detected, the processor 230 may fix the item displayed at a position at which the touch input is detected to a corresponding position.

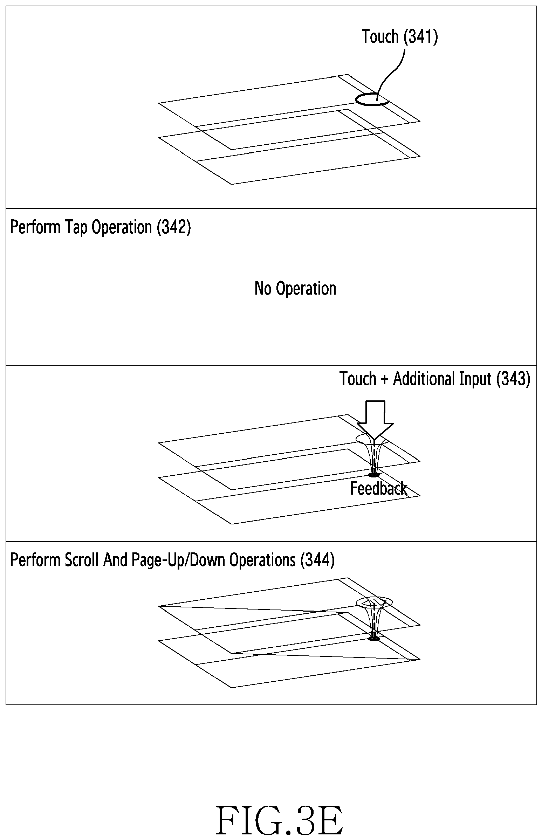

According to an embodiment, when touch input for a particular area on the touch screen is detected as illustrated in FIG. 3E, the processor 230 may perform a control command of another layer only when there is additional input by pressure or force. Specifically, there is no control command of the main layer in the particular area on the touch screen and the control command may be mapped only to another layer. Accordingly, when touch input 341 for the particular area on the touch screen is detected but additional input for the touch input 341 is not detected, the processor 230 may determine that the touch input 341 corresponds to a tap gesture for the particular area and not perform any operation according to the tap gesture of the main layer. However, when additional input 343 by pressure or force larger than or equal to a threshold value is detected in addition to the touch input for the particular area on the touch screen, the processor 230 may perform a control command for a scroll or page up/down function 344 mapped to another layer corresponding to the touch input and the additional input 343 as indicated by reference numeral 344. For example, when the touch input and the additional input 343 are detected, the processor 230 may scroll the content screen currently displayed on the touch screen or switch the page on the content screen to create an effect as if the electronic device 201 or the touch screen of the electronic device tilts to one side.

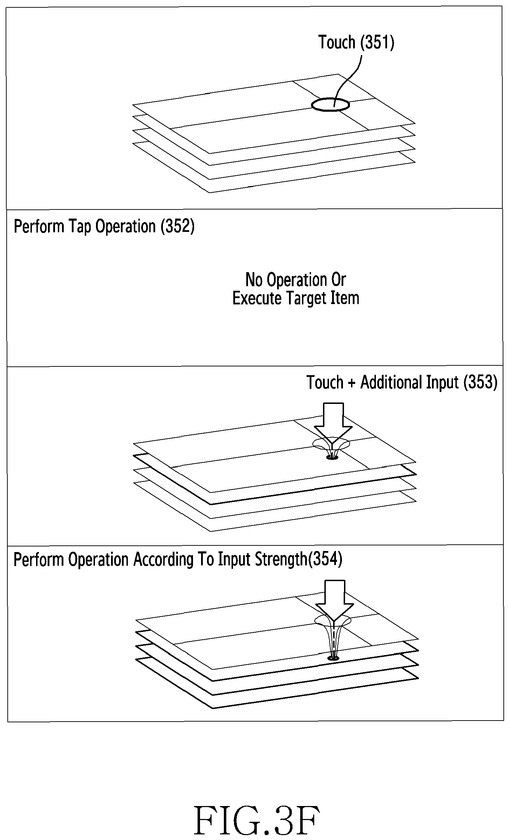

According to an embodiment, when touch input for the particular area on the touch screen is detected as illustrated in FIG. 3F, the processor 230 may perform a control command of the main layer and a plurality of different layers according to the strength of additional input by pressure or force. Specifically, when touch input 351 for the particular area on the touch screen is detected but additional input for the touch input 351 is not detected, the processor 230 may determine that the touch input 341 corresponds to a tap gesture for the particular area and perform a control command for executing a target item according to the tap gesture of the main layer as indicated by reference numeral 352. Alternatively, when there is no control command mapped to the main layer of the particular area in which the touch input 351 is detected, the processor 230 may not perform any operation. However, when additional input 353 by pressure or force larger than or equal to a threshold value is detected in addition to the touch input for the particular area on the touch screen, the processor 230 may perform a control command mapped to a layer corresponding to the strength of additional input among a plurality of different layers. For example, when the strength of the additional input is larger than a first threshold value and smaller than or equal to a second threshold value, the processor 230 may perform a control command mapped to a first layer among a plurality of different layers. When the strength of the additional input is larger than the second threshold value and equal to or smaller than a third threshold value, the processor 230 may perform a control command mapped to a second layer among the plurality of different layers. The control commands of the plurality of different layers mapped to the particular area may be control command having different control parameters for the same attribute value.

In the above description, the layers are classified for convenience of description of embodiments, and control commands corresponding to touch input types are not necessarily classified as layers.

The memory 240 may include volatile and/or nonvolatile memory. For example, the memory 240 may store instructions or data related to at least one other element of the electronic device 201. According to an embodiment, the memory 240 may store software and/or a program 250. For example, the program may include a kernel 251, middleware 253, an Application Programming Interface (API) 255, applications (or "apps") 257, and the like. At least some of the kernel 251, the middleware 253, and the API 255 may be referred to as an Operating System (OS). According to an embodiment, the memory 240 may store control command corresponding to the touch area and the touch strength. According to an embodiment, the memory 240 may store the control command corresponding to the touch area and the touch strength according to attributes of an application. For example, when a first area is touched on the touch screen of the electronic device 201, control commands for strength of touches mapped to the first area may be different according to attributes of the application displayed on the screen.

The input/output interface 260 may function as an interface that may transfer instructions or data input from a user or another external device to the other element(s) of the electronic device 201. Furthermore, the input/output interface 260 may output instructions or data, which are received from the other element(s) of the electronic device 201, to the user or the external device. For example, the input/output interface 260 may include a touch panel that detects a touch input or a hovering input using an electronic pen or a user's body part. For example, the input/output interface 260 may receive a gesture or a proximity input using an electronic pen or a user's body part. For example, the input/output interface 260 may provide the user with haptic data indicating a layer of the control command selected by the touch input. For example, when a control command of a first layer is selected by the touch input, the input/output interface 260 may generate first vibration by the control of the processor 230. Further, when a control command of a second layer is selected by the touch input, the input/output interface 260 may generate second vibration by the control of the processor 230.

The display 270 may display various types of contents (for example, text, images, videos, icons, symbols, or the like) to a user. According to an embodiment, the display 270 may be implemented as a touch screen through a combination with a touch panel of the input/output interface 260.

The communication interface 280 may establish communication between the electronic device 201 and an external device. For example, the communication interface 280 may be connected to a network 282 through wireless or wired communication to communicate with the external device (for example, the second external electronic device 204 or the server 206). For example, the communication interface 280 may communicate with an external device (for example, a first external electronic device 202) through short-range communication 284 or wired communication.

According to an embodiment, the network 282 may include at least one of a communication network, a computer network (for example, a LAN or a WAN), the Internet, and a telephone network.

The above embodiment has described the measurement of information on the strength of the touch input through the sensor module 240. However, embodiments of the present disclosure are not limited thereto and the strength of pressure or force for the touch input may be measured through various methods.

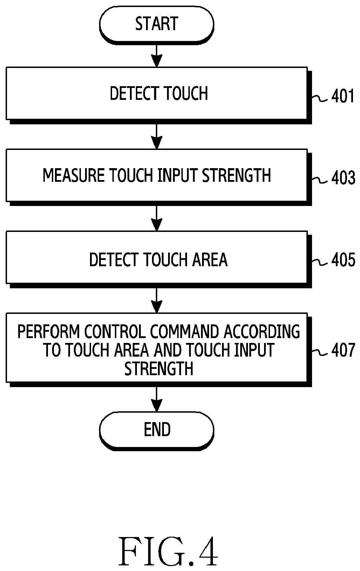

FIG. 4 illustrates an operation procedure of an electronic device according to an embodiment of the present disclosure. In the following description, the electronic device may include the electronic device 201 of FIG. 2 or the processor 230 of the electronic device 201. In the following embodiment, respective operations may be sequentially performed, but the sequential performance is not necessary. For example, orders of the operations may be changed, and at least two operations may be performed in parallel.

Referring to FIG. 4, the electronic device detects touch input in operation 401. For example, the electronic device may detect touch input by the user through the touch screen.

The electronic device measures strength of the touch input in operation 403. For example, when the user inputs a touch, the electronic device may measure the strength of pressure or force applied to the touch screen through the sensor module 220.

The electronic device detects a touch area in which the touch input is detected in operation 405. For example, the electronic device may detect the touch area based on touch coordinates in which the touch input is detected through the touch screen.

The electronic device performs a control command according to the touch area and strength of the touch input in operation 407. For example, the electronic device may identify a plurality of control commands mapped to the touch area and perform a control command corresponding to strength of the identified touch input among the plurality of control commands. The plurality of control commands mapped to the touch area may correspond to the strength of different touch inputs. Further, the plurality of control commands mapped to the touch area may be changed according to an application displayed on the screen. For example, when a first application is executed, control commands mapped to a first touch area may be "first touch input strength - select item displayed in touch area" and "second touch input strength - display pop-up menu for item displayed in touch area". In another example, when a second application is executed, control commands mapped to the first touch area may be "first touch input strength - input first character" and "second touch input strength - input second character". In another example, when a third application is executed, control commands mapped to the first touch area may be "first touch input strength - no control command" and "second touch input strength - fix item displayed in touch area". According to an embodiment, when strength of pressure or force applied to the first touch area is larger than or equal to 0 and smaller than a threshold value, the electronic device may perform a control command corresponding to the first touch input strength. Further, when strength of pressure or force applied to the first touch area is larger than or equal to a threshold value, the electronic device may perform a control command corresponding to the second touch input strength.

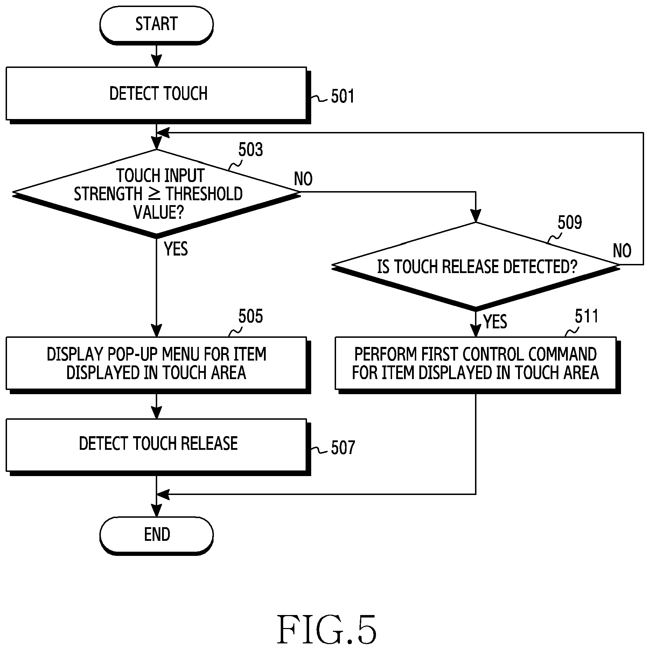

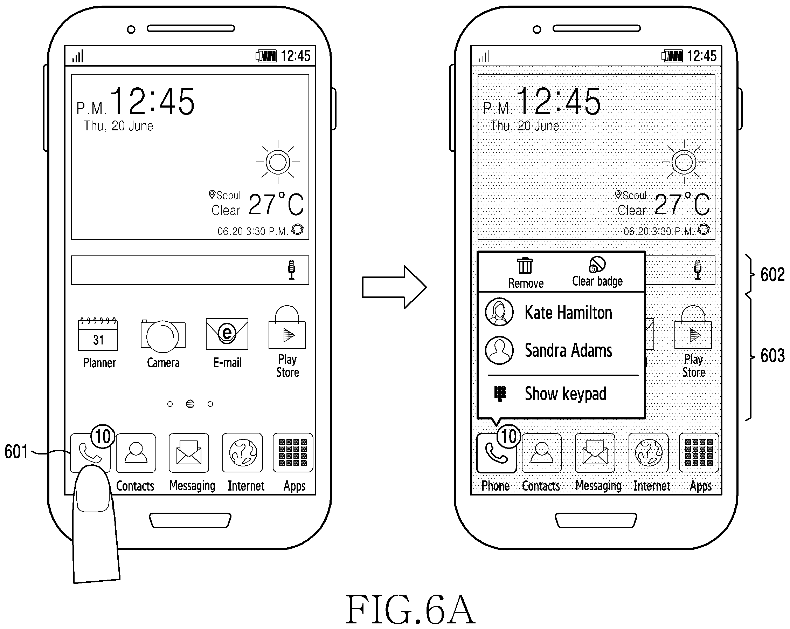

FIG. 5 illustrates an operation flow for providing a pop-up menu in an electronic device according to an embodiment of the present disclosure. FIGs. 6A to 6F illustrate screen examples of displaying a pop-up menu in an electronic device according to an embodiment of the present disclosure. Hereinafter, the operation procedure of FIG. 5 will be described with reference to the screen examples of FIGs. 6A to 6F. In the following embodiment, respective operations may be sequentially performed, but the sequential performance is not necessary. For example, orders of the operations may be changed, and at least two operations may be performed in parallel.

Referring to FIG. 5, the electronic device detects touch input in operation 501. For example, the electronic device may detect a touch for an area in which an application icon, a Floating Action Button (FAB), a list menu including a plurality of items, a card, or a thumbnail is displayed through the touch screen.

The electronic device inspects whether the touch input strength is larger than or equal to a threshold value in operation 503. For example, when the touch input is made through the sensor module 220, the electronic device may measure the strength of pressure or force applied to the touch screen and compare the measured strength with a threshold value.

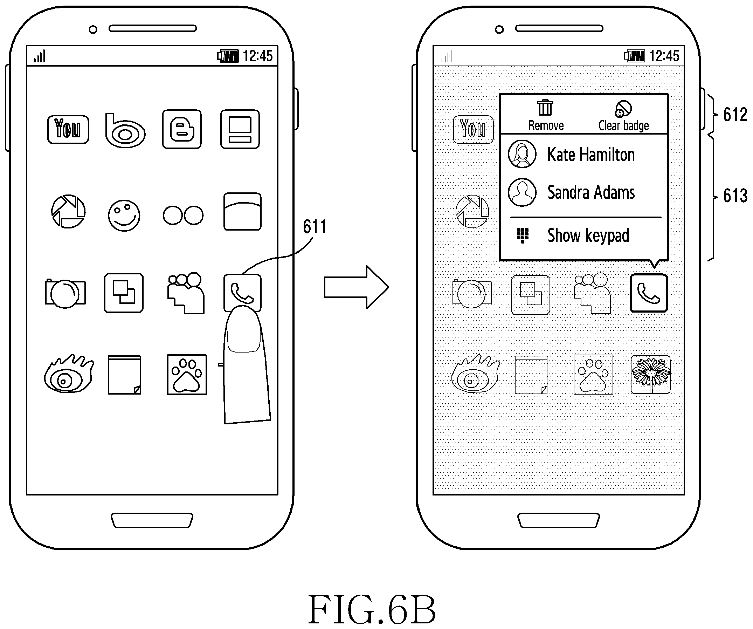

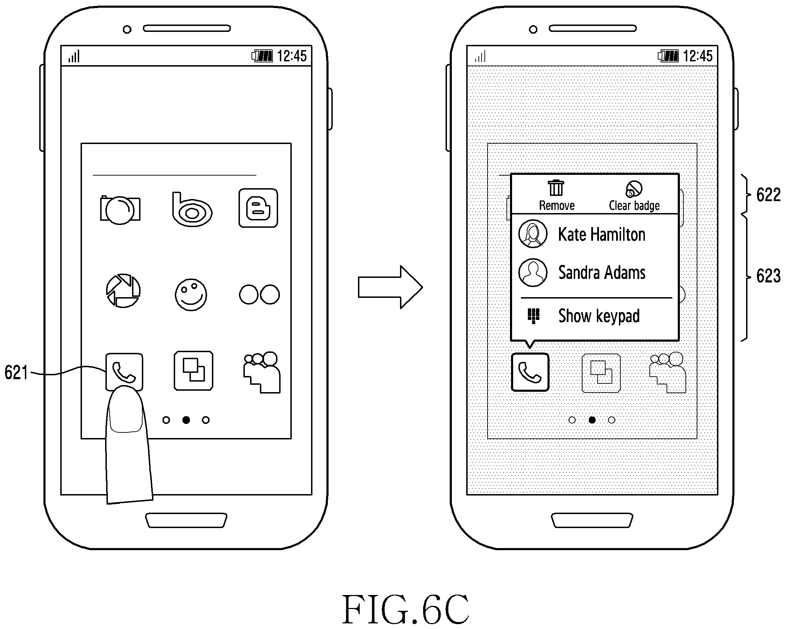

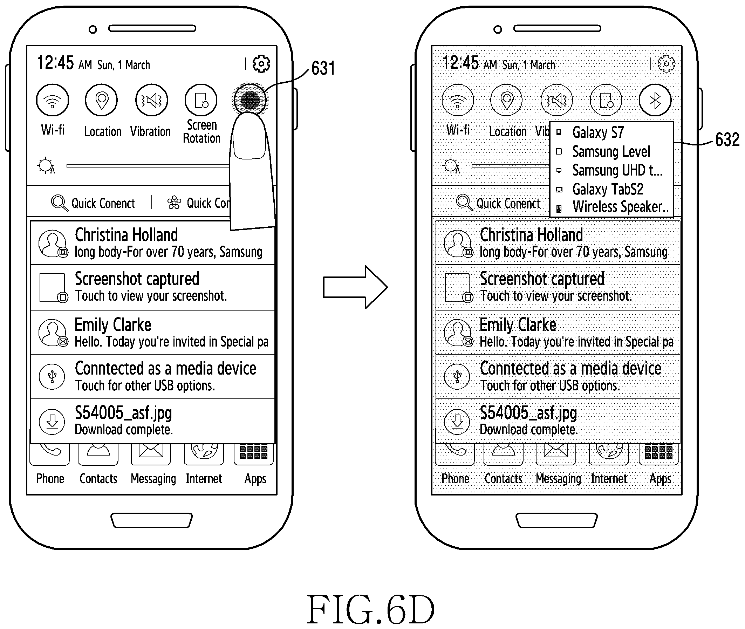

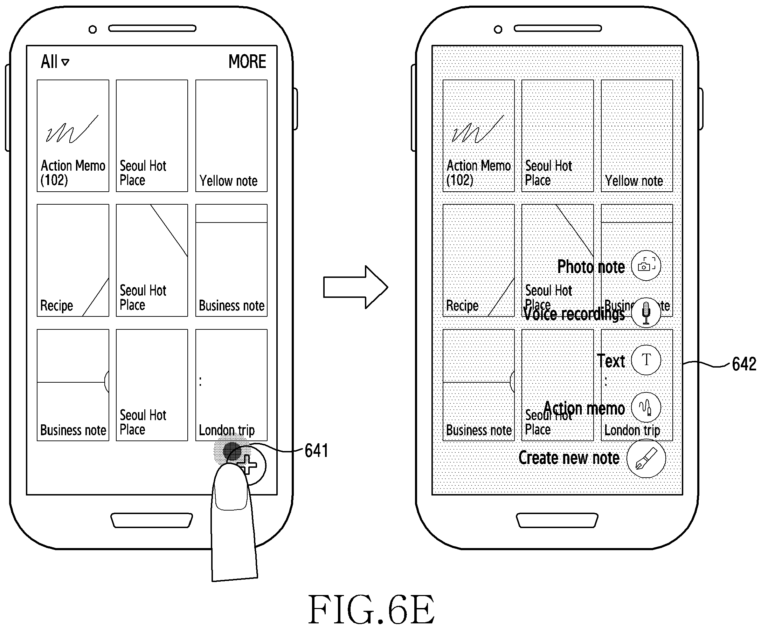

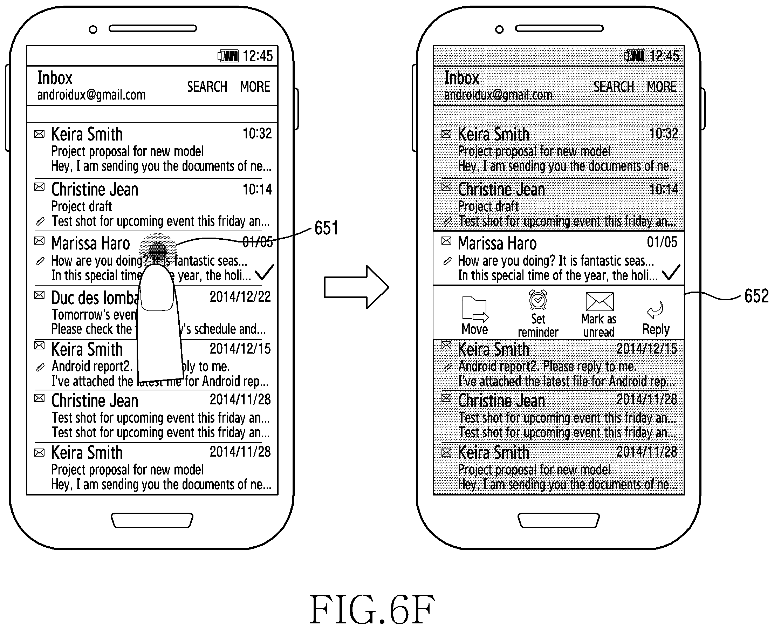

When the touch input strength is larger than or equal to the threshold value, the electronic device displays a pop-up menu for items displayed in the touch area in operation 505. For example, when the touch input strength is larger than or equal to the threshold value, the electronic device may determine to display the pop-up menu, which is a control command corresponding to the second touch input strength, among "first touch input strength - first control command" and "second touch input strength - display pop-up menu" mapped to items displayed in the touch area and display the pop-up menu for the item displayed in the touch area. The pop-up menu may include a quick menu related to the item displayed in the touch area. The quick menu may include sub items which the user has most frequently accessed, sub items which the user most recently accessed, or preset sub items among sub items related to the corresponding item. Further, the pop-up menu may include options for controlling the corresponding item (for example, removing the item or organizing the item). The pop-up menu may be displayed on a pop-up window having the size smaller than the size of the display screen of the electronic device or displayed on a window having the size which is the same as that of the display screen of the electronic device. For example, when touch input having strength of pressure or force larger than or equal to a threshold value is detected in a call application icon area 601 on the home screen as illustrated in FIG. 6A, the electronic device may display a pop-up menu including options 602 and a quick menu 603 for controlling the call application icon. In another example, when input having strength of pressure or force larger than or equal to a threshold value is detected in a call application icon area 611 on an application list screen as illustrated in FIG. 6B, the electronic device may display a pop-up menu including options 612 and a quick menu 613 for controlling the call application icon. In another example, when input having strength of pressure or force larger than or equal to a threshold value is detected in a call application icon area 621 on a folder list screen as illustrated in FIG. 6C, the electronic device may display a pop-up menu including options 622 and a quick menu 623 for controlling the call application icon. In FIGs. 6A to 6C, it is assumed that the options 602, 612, and 622 and the quick menus 603, 613, and 623 are equally configured for convenience of description, but the configuration of the options and the quick menus may be different. For example, the configuration of the pop-up menu may be different according to whether the application icon area on the home screen is touch, the application icon area on the application list screen is touched, or the application icon area on the folder screen is touched. In another example, when touch input having strength of pressure or force larger than or equal to a threshold value is detected in a Bluetooth application icon area 631 on a quick setting menu screen as illustrated in FIG. 6D, the electronic device may display a pop-up menu 632 including information on devices which can be connected through Bluetooth. The pop-up menu 632 may include information on devices, which are most recently connected, or devices, which are most frequently connected. In another example, when input having strength of pressure or force larger than or equal to a threshold value is detected in an FAB area 641 as illustrated in FIG. 6E, the electronic device may display a pop-up menu for the FAB. In another example, when touch input having strength of pressure or force larger than or equal to a threshold value is detected in an area 651 in which information on a particular email is displayed in a list including received emails as illustrated in FIG. 6F, the electronic device may display a pop-up menu 652 for the corresponding email. The pop-up menu 652 for the email may include a menu such as movement, reminder alarm setting, unread marks, or response.

The electronic device detects release of the touch input in operation 507. The electronic device maintains the display of the pop-up menu even though the touch input is released. According to an embodiment, the pop-up menu may be removed by separate touch input of the user. For example, the electronic device may remove the pop-up menu from the screen when a pop-up menu removal option included in the pop-up menu is touched or a touch in an area in which no pop-up menu is displayed is detected.

When strength of the touch input is smaller than a threshold value, the electronic device inspects whether release of the touch is detected in operation 509. When the release of the touch is not detected, the electronic device returns operation 503 and performs again the following operations. When the release of the touch is detected, the electronic device performs a first control command for the item displayed in the touch area in operation 511. For example, when strength of the touch input is smaller than a threshold value, the electronic device may perform the first control command corresponding to first touch input strength among control commands mapped to the touch area. In a detailed example, when touch input having strength of pressure or force smaller than a threshold value is detected on the call application icon as illustrated in FIGs. 6A, 6B, and 6C, the electronic device may perform a control command for displaying a call application screen by executing a call application. In another example, when touch input having strength of pressure or force smaller than a threshold value is detected in a Bluetooth application icon area as illustrated in FIG. 6D, the electronic device may perform a control command for turning on/off a Bluetooth function.

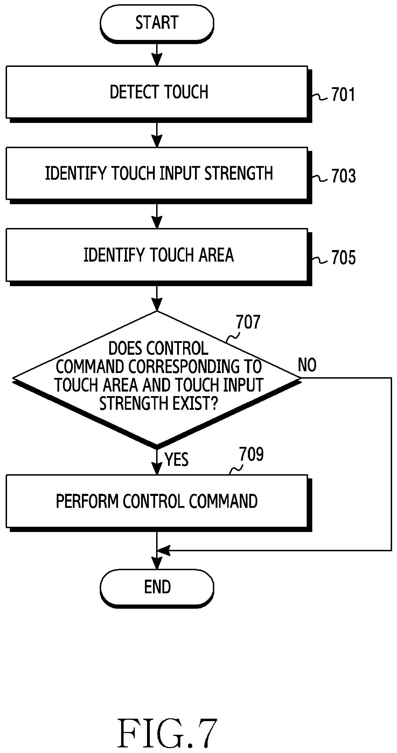

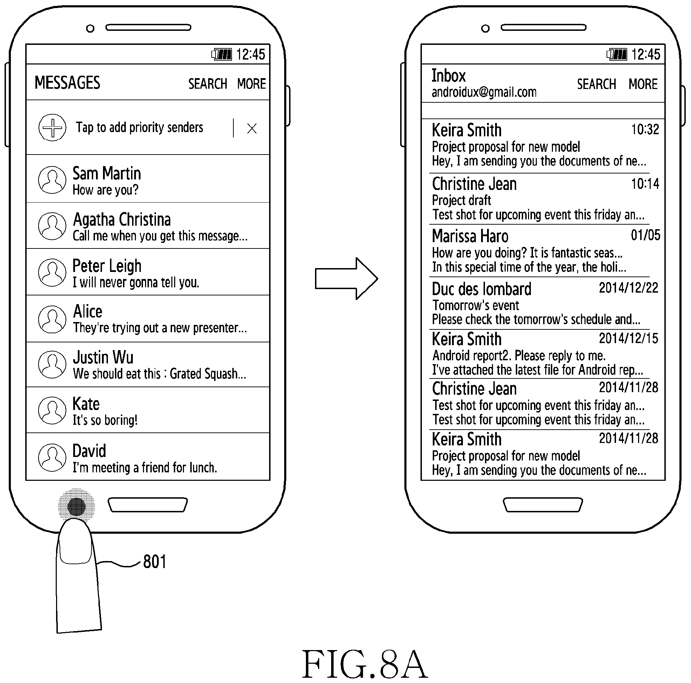

FIG. 7 illustrates an operation procedure when an electronic device detects a touch for a particular button area according to various embodiments of the present disclosure. FIGs. 8A to 8C illustrate screen examples of an application control operation when an electronic device detects a touch for a particular button area according to an embodiment of the present disclosure. Hereinafter, the operation procedure of FIG. 7 will be described with reference to the screen examples of FIGs. 8A to 8C. In the following embodiment, respective operations may be sequentially performed, but the sequential performance is not necessary. For example, orders of the operations may be changed, and at least two operations may be performed in parallel.

Referring to FIG. 7, the electronic device detects touch input in operation 701. For example, the electronic device may detect touch input for a particular button area through the touch screen. The particular button area may include a software key button area displayed on the touch screen or a hardware key button area included in the electronic device 201.

The electronic device identifies a touch input strength in operation 703. For example, when the user inputs a touch, the electronic device may measure the strength of pressure or force applied to the touch screen through the sensor module 220.

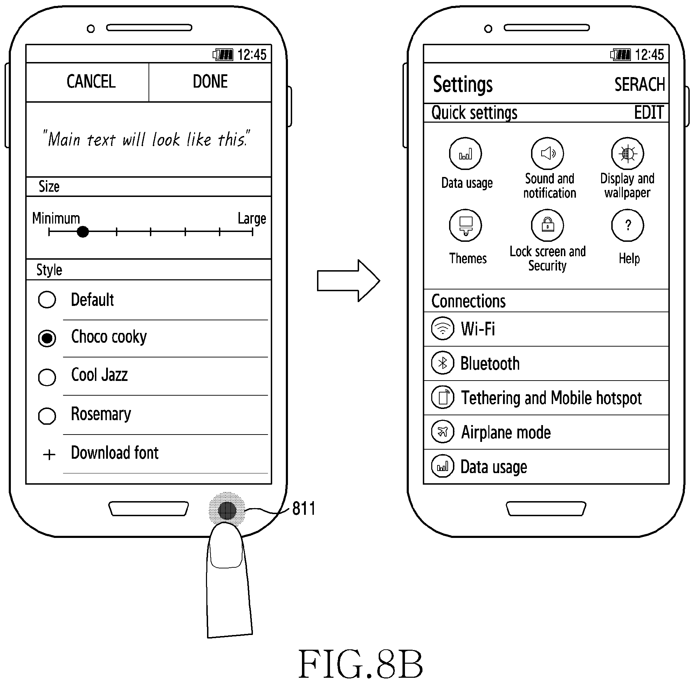

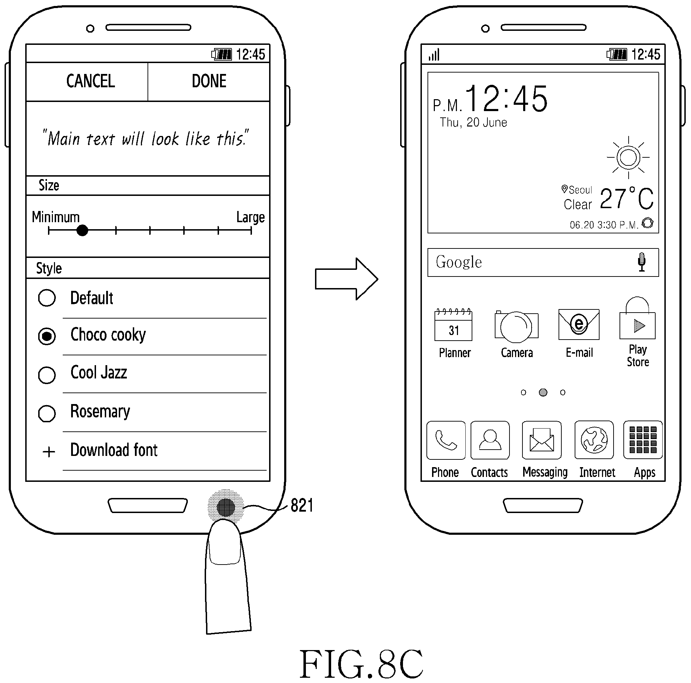

The electronic device identifies a touch area in operation 705. For example, the electronic device may identify a key button area in which the touch input is detected based on touch coordinates at which the touch input is detected through the touch screen. For example, as illustrated in FIG. 8A, the electronic device may identify that a key button area 801 located at a lower left part on the front surface of the electronic device 201 is touched. For example, as illustrated in FIGs. 8B and 8C, the electronic device may identify that key button areas 811 and 821 located at a lower right part on the front surface of the electronic device 201 is touched. According to an embodiment, the key button area located at the lower left part on the front surface of the electronic device 201 may be referred to as a menu button area, and the key button area located at the lower right part on the front surface of the electronic device 201 may be referred to as a cancellation button area.

The electronic device inspects whether there is a control command corresponding the touch area and the touch input strength in operation 707. For example, the electronic device may store one or a plurality of control command for touch areas on the touch screen and, at this time, the control command may correspond to a particular touch input strength. For example, control command such as "first touch input strength - display the menu" and "second touch input strength - switch the app" may be mapped to the key button area 801 at the lower left part on the front surface of the electronic device 201 as illustrated in FIG. 8A. When the touch area is the key button area 801 at the lower left part on the front surface of the electronic device 201 and the touch input strength corresponds to the second touch input strength, the electronic device may identify that the control command corresponding to the touch area and the touch input strength is "switch the app". In another example, control commands such as "first touch input strength - return to the previous content screen" and "second touch input strength - return to the top content screen of the application displayed on the screen" may be mapped to the key button area 811 at the lower right part on the front surface of the electronic device 201 as illustrated in FIG. 8B. When the touch area is the key button area 811 at the lower right part on the front surface of the electronic device 201 and the touch input strength corresponds to the second touch input strength, the electronic device may identify that the control command corresponding to the touch area and the touch input strength is "return to the top content screen of the application displayed on the screen". In another example, control commands such as "first touch input strength - return to the previous content screen" and "second touch input strength - terminate the application displayed on the screen" may be mapped to the key button area 821 at the lower right part on the front surface of the electronic device 201 as illustrated in FIG. 8C. When the touch area is the key button area 821 at the lower right part on the front surface of the electronic device 201 and the touch input strength corresponds to the second touch input strength, the electronic device may identify that the control command corresponding to the touch area and the touch input strength is "terminate the application displayed on the screen".

When the control command corresponding to the touch area and the touch strength exists, the electronic device may perform the control command corresponding to the touch area and the touch strength in operation 709. For example, when touch input having the second touch input strength is detected in the key button area at the lower left part on the front surface of the electronic device 201 as illustrated in the first screen configuration of FIG. 8A, the electronic device may display an email application on the screen as illustrated in the second screen configuration of FIG. 8A by switching a text message application to the email application. According to an embodiment, the electronic device may display the most recently executed application on the screen by switching the application currently displayed on the screen to the most recently executed application. In another example, when touch input having the second touch input strength is detected in the key button area at the lower right part on the front surface of the electronic device 210 as illustrated in the first screen configuration of FIG. 8B, the electronic device may display a main configuration screen as illustrated in the second screen configuration of FIG. 8B by switching a writing style setting screen of an environment setting application currently displayed on the screen to a main setting screen which is the top content screen of the environment setting application. The top content screen of the application refers to a content screen first displayed on the screen when the application is executed. In another example, when touch input having the second touch input strength is detected in the key button area at the lower right part on the front surface of the electronic device 210 as illustrated in the first screen configuration of FIG. 8C, the electronic device may terminate the environment setting application currently displayed on the screen and display the home screen as illustrated in the second screen configuration of FIG. 8C.

In FIGs. 7 to 8C, the key button areas located at the lower part on the front surface of the electronic device have been described, but they are only examples and the present disclosure is not limited thereto. For example, the operation procedure of FIG. 7 may be identically applied to other key button areas included in the electronic device.

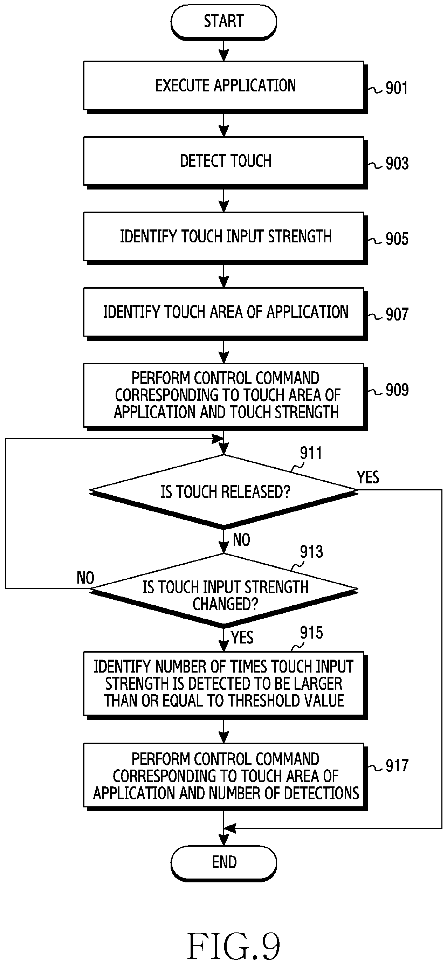

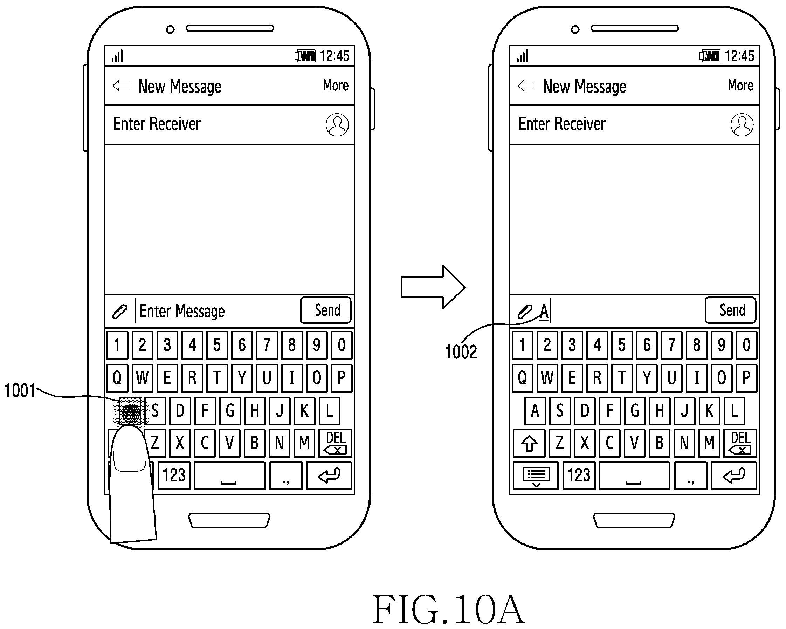

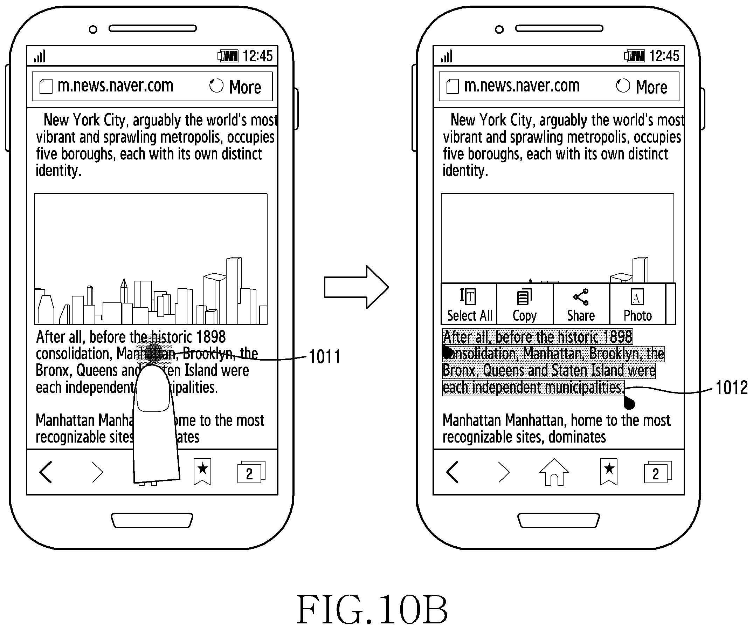

FIG. 9 illustrates an operation procedure for performing an application control operation in an electronic device according to an embodiment of the present disclosure. FIGs. 10A and 10B illustrate screen examples of an application control operation in an electronic device according to an embodiment of the present disclosure. Hereinafter, the operation procedure of FIG. 9 will be described with reference to the screen examples illustrated in FIGs. 10A and 10B. In the following embodiment, respective operations may be sequentially performed, but the sequential performance is not necessary. For example, orders of the operations may be changed, and at least two operations may be performed in parallel.

Referring to FIG. 9, the electronic device executes an application in operation 901. For example, the electronic device may display a screen in which a character can be input by executing a first application by the control of the user. The first application may be an application in which a character can be input such as a text message application, a Social Network Service (SNS) message application, a memo application, or a web browser application. In another example, the electronic device may display a content screen including text by executing a second application. The second application may be an application in which text can be displayed such as a message application, a Social Network Service (SNS) message application, a memo application, or a web browser application.

The electronic device detects a touch input in operation 903. For example, the electronic device may detect a touch input for attributes of an application being executed through the touch screen or an application being displayed on the screen.

The electronic device identifies a touch input strength in operation 905. For example, when the user inputs a touch, the electronic device may measure the strength of pressure or force applied to the touch screen through the sensor module 220.

The electronic device identifies a touch area for the application in operation 907. For example, the electronic device may identify an area in which the touch input is detected based on touch coordinates at which the touch input is detected through the touch screen. For example, the electronic device may identify that a character input button area 1001 included in a keypad is touched in the message application currently executed, as illustrated in FIG. 10A. In another example, the electronic device may identify that a text display area 1011 is touched in the web browser application, as illustrated in FIG. 10B.

The electronic device performs a control command corresponding to the touch area and the touch input strength of the application in operation 909. For example, the electronic device may store one or a plurality of control commands for areas of the application and, at this time, the control command may correspond to a particular touch input strength. For example, control commands such as "first touch input strength - input a representative character corresponding to the character input button area" and "second touch input strength - input another character corresponding to the character input button area" may be mapped to the character input button area 1001 as illustrated in FIG. 10A. When touch input having the first touch input strength is detected in the character input button area 1001, the electronic device may input the representative character "a" corresponding to the corresponding character input button area. When touch input having the second touch input strength is detected in the character input button area 1001, the electronic device may input another character "A" 1002 corresponding to the corresponding character input button area. In another example, control commands such as "first touch input strength - select and display the word corresponding to the touch area" and "second touch input strength - select and display the paragraph corresponding to the touch area" may be mapped to a text display area 1011 as illustrated in FIG. 10B. When touch input having the first touch input strength is detected in the text display area 1011, the electronic device may display the selection of "Manhattan" which is a word corresponding to the touch area. When touch input having the second touch input strength is detected in the text display area 1011, the electronic device may display the selection 1012 of "After all, before the historic 1898 consolidation, Manhattan, Brooklyn, the Bronx, Queens and Staten Island where each independent municipalities." which is a paragraph corresponding to the touch area.

The electronic device inspects whether the touch input is released in operation 911. For example, the electronic device may inspect whether the touch input is maintained without release. When the touch input is not released, the electronic device inspects whether the touch input strength is changed in operation 913. For example, after performing the control command corresponding to the touch area and the touch input strength, the electronic device inspects whether the touch input strength is changed while the touch input is maintained. For example, the electronic device inspects whether the touch input strength identified in operation 905 is larger than or equal to a threshold value, and then is changed to be equal to or smaller than the threshold value and changed back to be larger than or equal to the threshold value in operation 913. When the touch input strength is not changed, the electronic device performs operation 911 again.

When the touch input strength is changed, the electronic device identifies the number of time the touch input strength is detected to be larger than or equal to the threshold value in operation 915. For example, when the touch input strength identified in operation 905 is larger than or equal to the threshold value, and then is changed to be equal to or smaller than the threshold value and changed back to be larger than or equal to the threshold value in operation 913, the electronic device may determine that the number of detections is two.

The electronic device performs a control command corresponding to the number of times the touch area and the touch input strength of the application are detected to be larger than or equal to the threshold value in operation 917. For example, the electronic device may select one control command based on the number of times the touch input strength is detected to be larger than or equal to the threshold value among a plurality of control commands mapped to the touch area of the application and perform the selected control command. According to an embodiment, when there are only the first control command corresponding to the first touch input strength and the second control command corresponding to the second touch input strength in the touch area of the application, the electronic device may select and perform one of the first control command and the second control command according to the number of times the touch input strength is detected to be larger than or equal to the threshold value. Specifically, the electronic device performs the first control command corresponding to the first touch strength when the number of times the touch input strength is detected to be larger than or equal to a threshold value in the touch area of the application is two, and performs the second control command corresponding to the second touch input strength when the number of times the touch input strength is detected to be larger than or equal to a threshold value is three. According to an embodiment, when the electronic device performs a control command according to the number of times the touch input strength is detected to be larger than or equal to a threshold value in the state in which the touch input is not released, the electronic device may remove the result of the control command corresponding to the previously detected number of times and provide the user with the result of the control command corresponding to the currently detected number of times. In a detailed example, when the number of times the touch input strength is detected to be larger than or equal to a threshold value in the character input button area 1001 illustrated in FIG. 10A is one, the electronic device may display the character "A" in the character input window. And then, when the number of times the touch input strength is detected to be larger than or equal to a threshold value is changed to two, the electronic device may delete the character "A" displayed in the character input window and display the character "a". In another example, when the number of times the touch input strength is detected to be larger than or equal to a threshold value in the text display area 1011 illustrated in FIG. 10B is one, the electronic device may display selection of the whole paragraph corresponding to the touch area. And then, when the number of times the touch input strength is detected to be larger than or equal to a threshold value is changed to two, the electronic device may remove the display indicating the selection of the whole paragraph and display selection of the word "red" corresponding to the touch area. According to another embodiment, the electronic device may store a plurality of second control commands corresponding to the second touch input strength in the touch area of the application. The plurality of second control commands may be mapped to different numbers of times. For example, one second control command may be mapped to one time, and another second control command may be mapped to two times. The electronic device may select and perform one of the plurality of second control commands based on the number of times the touch input strength is detected to be larger than or equal to a threshold value. In a detailed example, control commands such as "first touch input strength - input "a" and "second touch input strength - input "A" or input "@" may be mapped to the character input button area 1001 as illustrated in FIG. 10A. When the touch input strength larger than or equal to a threshold value is detected once in the character input button area 1001, the electronic device may display the character "A" in the character input window. And then, when the number of times the touch input strength is detected to be larger than or equal to a threshold value is changed to two, the electronic device may delete the character "A" displayed in the character input window and display the character "@". Further, when the number of times the touch input strength is detected to be larger than or equal to a threshold value in the character input button area 1001 is changed to three, the electronic device may delete the character "@" displayed in the character input window and display the character "A" again. In another example, control commands such as "first touch input strength - select and display the word" and "second touch input strength - select and display the paragraph or select and display all text displayed on the screen" may be mapped to the text display area 1011 as illustrated in FIG. 10B. When the number of times the touch input strength is detected to be larger than or equal to a threshold value in the text display area 1011 is one, the electronic device may display selection of the whole paragraph corresponding to the touch area. And then, when the number of times the touch input strength is detected to be larger than or equal to a threshold value is changed to two, the electronic device may remove the display of the selected paragraph and display selection of all text displayed on the screen.

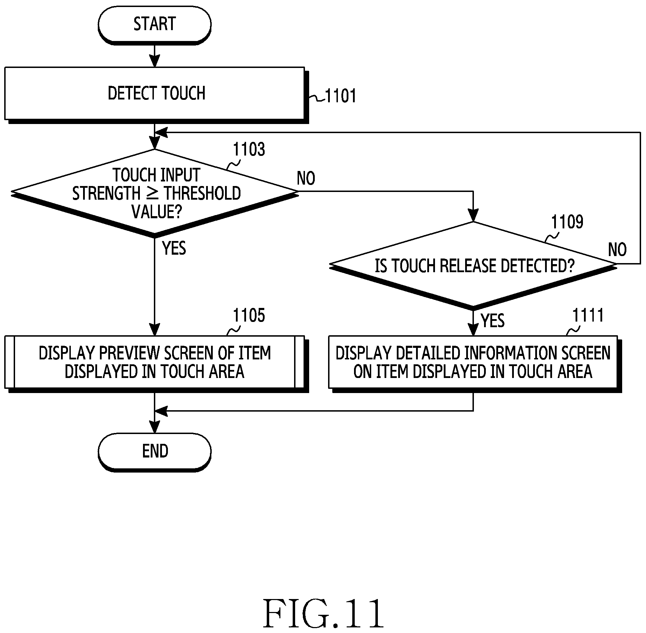

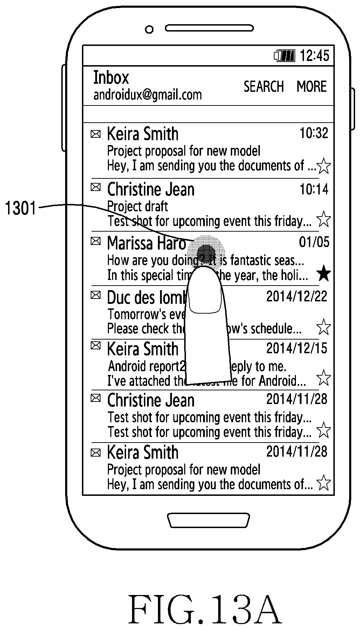

FIG. 11 illustrates an operation procedure for displaying a preview screen in an electronic device according to an embodiment of the present disclosure. FIGs. 13A to 13D illustrate screen examples in which the electronic device displays a preview screen according to an embodiment of the present disclosure. Hereinafter, the operation procedure of FIG. 11 will be described with reference to the screen examples illustrated in FIGs. 13A to 13D. In the following embodiment, respective operations may be sequentially performed, but the sequential performance is not necessary. For example, orders of the operations may be changed, and at least two operations may be performed in parallel.

Referring to FIG. 11, the electronic device detects a touch input in operation 1101. For example, the electronic device may detect a touch in an area in which a list menu including a plurality of items, a card, or a thumbnail is displayed through the touch screen. In another example, the electronic device may detect a touch in an area in which a hyperlink exists through the touch screen.

The electronic device inspects whether the touch input strength is larger than or equal to a threshold value in operation 1103. For example, the electronic device may measure a strength of pressure or force applied to an area in which touch input is detected through the sensor module 220 and compare the measured strength with a threshold value.

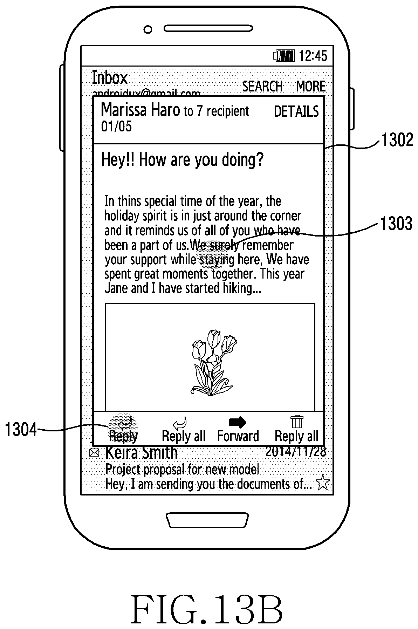

When the touch input strength is larger than or equal to the threshold value, the electronic device displays a preview screen for an item displayed in a touch area in operation 1105. For example, when the touch input strength is larger than or equal to the threshold value, the electronic device may determine to display a preview screen, which is a control command corresponding to the second touch input strength among the control commands "first touch input strength-display the detailed information screen" and "second touch input strength - display the preview screen" mapped to the item displayed in the touch area, and display the preview screen for the item displayed in the touch area. The preview screen may be provided in a form of a pop-up window including summarized information on the item displayed in the area in which the touch is detected. For example, the preview screen shows summarized detailed information to be displayed on the screen when the electronic device enters the corresponding item, and may be displayed before the entrance into the corresponding item. Further, the preview screen may include options (for example, removing items or transferring items) for controlling the corresponding item. For example, when touch input having strength of pressure or force larger than or equal to a threshold value is detected in a particular email area 1301 in a received email list as illustrated in FIG. 13A, the electronic device may display a preview screen 1302 including summarized information on the particular email as illustrated in FIG. 13B. The preview screen may include an option menu such as a replay function, a replay all function, a forward function, and a delete function for the email.

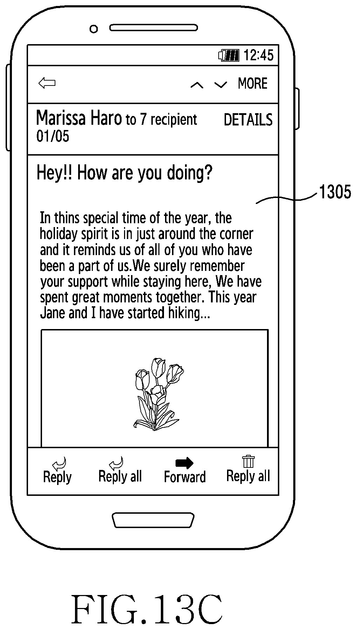

When strength of the touch input is smaller than a threshold value, the electronic device inspects whether release of the touch is detected in operation 1109. When touch release is not detected, the electronic device may return to operation 1103 and perform the following operations again. When touch release is detected, the electronic device displays a screen including detailed information on the item displayed in the touch area in operation 1111. For example, when touch input having strength of pressure or force smaller than a threshold value is detected in the particular email area 1301 in the received email list as illustrated in FIG. 13A, the electronic device may display a screen 1305 including detailed information on the particular email as illustrated in FIG. 13C.

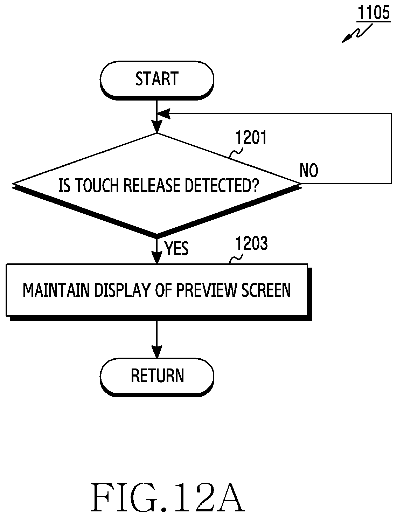

FIG. 12A illustrates an operation procedure for maintaining the preview screen in the electronic device according to an embodiment of the present disclosure. FIGs. 13A to 13D illustrate screen examples for displaying the preview screen in the electronic device according to an embodiment of the present disclosure. Hereinafter, the operation procedure of FIG. 12A will be described with reference to the operation procedure of FIG. 11 and the screen examples illustrated in FIGs. 13A to 13D.

Referring to FIG. 12A, when the preview screen for the item displayed in the touch area is displayed (for example, operation 1105 of FIG. 11), the electronic device inspects whether touch release is detected in operation 1201. For example, the electronic device inspects whether the touch detected through the touch screen in operation 1101 of FIG. 11 is released rather than being maintained.

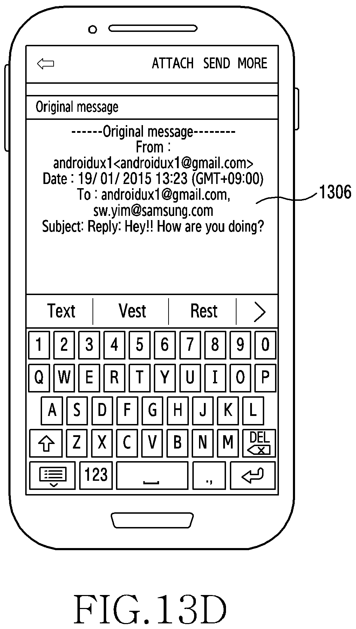

When touch release is detected, the electronic device may maintain the display of the preview screen in operation 1203. For example, as illustrated in FIGs. 13A and 13B, even when touch input for the particular email area 1301 is released, the electronic device may continuously display the preview screen 1302. Continuously maintaining the preview screen after the detection of the touch release is to perform a function of an option menu included in the preview screen or another control function. For example, by continuously displaying the preview screen 1302 as illustrated in FIG. 13B after the touch input detected in FIG. 13A is released, the electronic device may display a screen 1305 including detailed information on the particular email as illustrate din FIG. 13C when touch input for an area 1302 within the preview screen by the user is detected. In another example, by continuously displaying the preview screen 1302 as illustrated in FIG. 13B after the touch input detected in FIG. 13A is released, the electronic device may display a screen 1306 for writing response mail for the particular email as illustrated in FIG. 13D when touch input for a "replay" area 1304 which is an option function within the preview screen by the user is detected.

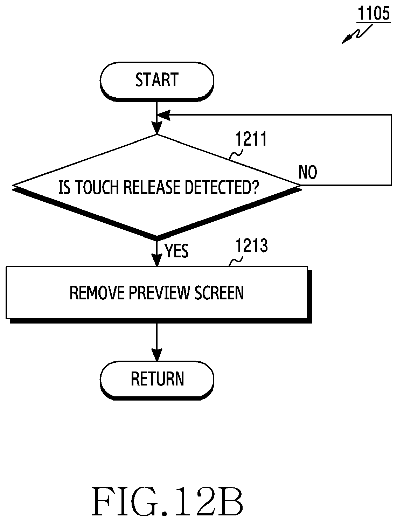

FIG. 12B illustrates an operation procedure for removing the preview screen in the electronic device according to an embodiment of the present disclosure. FIGs. 13A and 13B illustrate screen examples of displaying the preview screen in the electronic device according to an embodiment of the present disclosure. Hereinafter, the operation procedure of FIG. 12B will be described with reference to the operation procedure of FIG. 11 and the screen examples illustrated in FIGs. 13A and 13B.

When the preview screen for the item displayed in the touch area is displayed (for example, operation 1105 of FIG. 11), the electronic device inspects whether the touch is released in operation 1211. For example, the electronic device inspects whether the touch detected through the touch screen in operation 1101 of FIG. 11 is released rather than being maintained.

When the touch is released, the electronic device may remove the preview screen in operation 1213. For example, when the preview screen 1302 is displayed only while the touch input for the particular email area 1301 is maintained as illustrated in FIG. 13B and the touch input is released, the electronic device may remove the preview screen and display only the received email list as illustrated in FIG. 13A.

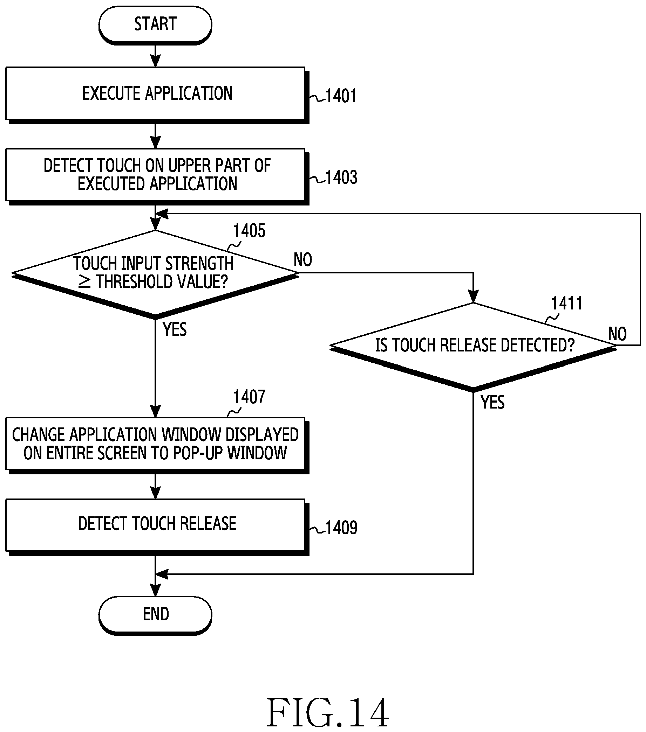

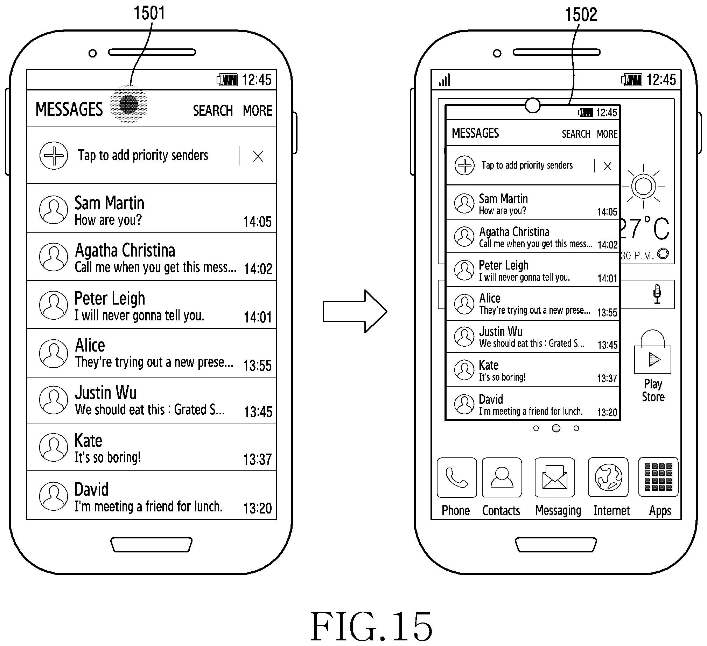

FIG. 14 illustrates an operation procedure for changing an application to a pop-up window in the electronic device according to an embodiment of the present disclosure. Further, FIG. 15 illustrates a screen example for changing the application to the pop-up window in the electronic device according to an embodiment of the present disclosure. Hereinafter, the operation procedure of FIG. 14 will be described with reference to the screen example illustrated in FIG. 15. In the following embodiment, respective operations may be sequentially performed, but the sequential performance is not necessary. For example, orders of the operations may be changed, and at least two operations may be performed in parallel.

Referring to FIG. 14, the electronic device execute an application in operation 1401. For example, the electronic device may execute an application selected by user input and display a content screen of a first application.

The electronic device detects a touch on an upper part of the executed application in operation 1403. For example, the electronic device may detect a touch in an area in which no item is displayed in the upper area of the executed application. In a detailed example, the electronic device may detect a touch in an area 1501 in which no item is displayed in the upper area of a message application as illustrated in FIG. 15.

The electronic device inspects whether the touch input strength is larger than or equal to a threshold value in operation 1405. For example, the electronic device may measure a strength of pressure or force applied to the upper area of the application in which user's touch input is detected through the sensor module 220 and compare the measured strength with a threshold value, so as to inspect whether the touch input strength is larger than or equal to the threshold value.

When the touch input strength is larger than or equal to the threshold value, the electronic device changes the executed application to a pop-up window in operation 1407. For example, control commands such as "first touch input strength - no control command" and "second touch input strength - change pop-up window" may be mapped to the area in which no item is displayed in the upper area of the application. When touch input having the strength of pressure or force larger than or equal to the threshold value is detected in the area 1501 in which no item is displayed in the upper area of the message application as illustrated in FIG. 15, the electronic device may change a window for the message application to a pop-up window 1502. According to an embodiment, when touch input having an input strength larger than or equal to the threshold value is detected in the area 1501 in which no item is displayed in the upper area of the message application, the electronic device may display a graphic effect for informing that the message application is changed to the pop-up window or generate vibration. The pop-up window may be smaller than the touch screen.

The electronic device detects a touch release in operation 1409. For example, the electronic device may detect release of the touch input detected in the upper area of the application executed in operation 1403.

When strength of the touch input is smaller than a threshold value, the electronic device inspects whether release of the touch is detected in operation 1411. When the touch release is not detected, the electronic device returns to operation 1405 and performs the following operations again. When the touch release is detected, the electronic device terminates the operation procedure according to the present embodiment without performing any operation for the touch input. For example, when "first touch input strength - no control command" is mapped to the area in which no item is displayed in the upper area of the application, the electronic device may maintain the application-executed state without responding to the touch input.

FIG. 14 illustrates that the application window is changed to the pop-up window when the touch input having the strength of pressure or force larger than or equal to the threshold value is detected in the upper area of the application. According to an embodiment, when the touch input having the strength of pressure or force larger than or equal to the threshold value is detected in the upper area of the application displayed through the pop-up window, the electronic device may change the application pop-up window to a window corresponding to the entire screen size.

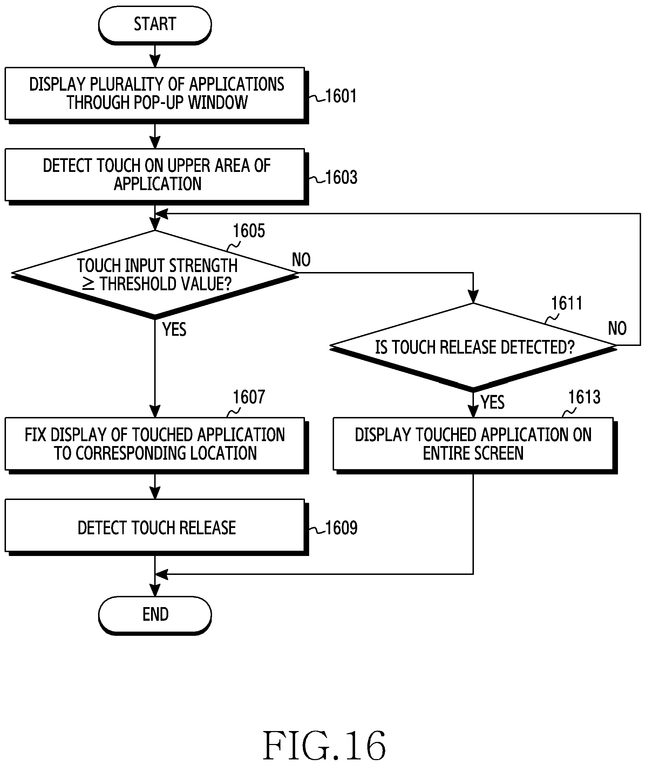

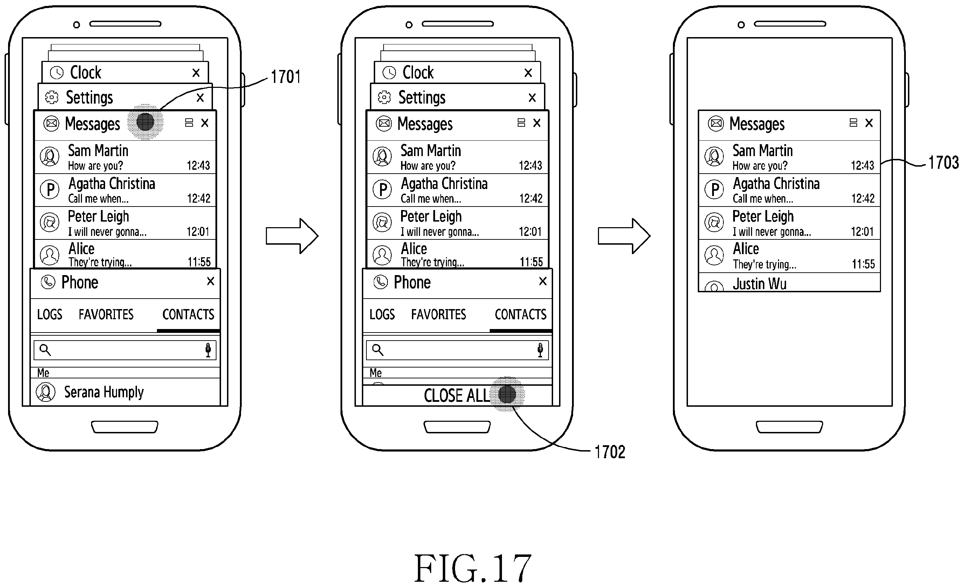

FIG. 16 illustrates an operation procedure for fixing the application in the electronic device according to an embodiment of the present disclosure. FIG. 17 illustrates a screen example of fixing the application in the electronic device according to an embodiment of the present disclosure. Hereinafter, the operation procedure of FIG. 16 will be described with reference to the screen example illustrated in FIG. 17. In the following embodiment, respective operations may be sequentially performed, but the sequential performance is not necessary. For example, orders of the operations may be changed, and at least two operations may be performed in parallel.

Referring to Fig. 16, the electronic device displays a plurality of applications through pop-up windows in operation 1601. For example, the electronic device may detect selection of a menu of viewing recently executed applications by user input and display a list including a plurality of recently executed applications in a pop-up window form like a first screen configuration of FIG. 17 in response to the selection of the menu of viewing the recently executed applications.

The electronic device detects a touch on an upper part of the application in operation 1603. For example, the electronic device may detect a touch in an upper area of a first application among the plurality of applications displayed on the screen. In a detailed example, the electronic device may detect the touch in the upper area 1501 of the message application among the plurality of applications like the first screen configuration of FIG. 17.

The electronic device inspects whether the touch input strength is larger than or equal to a threshold value in operation 1605. For example, the electronic device may measure a strength of pressure or force applied to the upper area of the application in which user's touch input is detected through the sensor module 220 and compare the measured strength with a threshold value, so as to inspect whether the touch input strength is larger than or equal to the threshold value.

When the touch input strength is larger than or equal to the threshold value, the electronic device fixes the display of the application in which the touch input detected to a corresponding location in operation 1607. For example, control commands such as "first touch input strength - execute the application" and "second touch input strength - fix (pin up) the location" may be mapped to the upper area of the displayed application included in the application list. When touch input having a strength of pressure or force larger than or equal to a threshold value is detected in an upper area 1701 of a message application like the first screen configuration of FIG. 17, the electronic device may fix the message application to the currently displayed location. According to an embodiment, when the touch input having the input strength larger than or equal to the threshold value is detected in the upper area 1701 of the message application, the electronic device may display a graphic effect for informing that the message application will be fixed to the corresponding location or generate vibration. Fixing the location may mean fixedly displaying the application at the displayed location on the screen or mean that the corresponding application is fixedly included in the list to which the corresponding application belongs.

The electronic device detects touch release in operation 1609. For example, the electronic device may detect release of the touch input detected in the upper area of the application executed in operation 1603. After the touch input is released, the electronic device may maintain the fixed state of the message application. When a menu of canceling recently executed applications is selected like the second screen configuration of FIG. 17 as indicated by reference numeral 1702 by maintain the fixed state of the message application after the touch release is detected, the electronic device may remove all the remaining applications other than the message application from the screen like the third screen configuration of FIG. 17.

When strength of the touch input is smaller than a threshold value, the electronic device inspects whether release of the touch is detected in operation 1611. When the touch release is not detected, the electronic device returns to operation 1605 and performs the following operations again. When the touch release is detected, the electronic device displays the touched application on the entire screen in operation 1613. For example, when the touch input having the strength of pressure or force larger than or equal to the threshold value is detected in the upper area of the displayed application included in the application list, the electronic device may execute the application on which the touch is detected, change the pop-up window of the application to an entire screen window, and display the pop-up window.

FIG. 16 has described fixing the application when the touch input having the strength of pressure or force larger than or equal to the threshold value is detected in the upper area of the application in the state in which the application list is displayed. According to an embodiment, when the touch input having the strength of pressure or force larger than or equal to the threshold value is detected in the upper area of the fixed application in the fixed state, the electronic device may release the fixed state of the application.

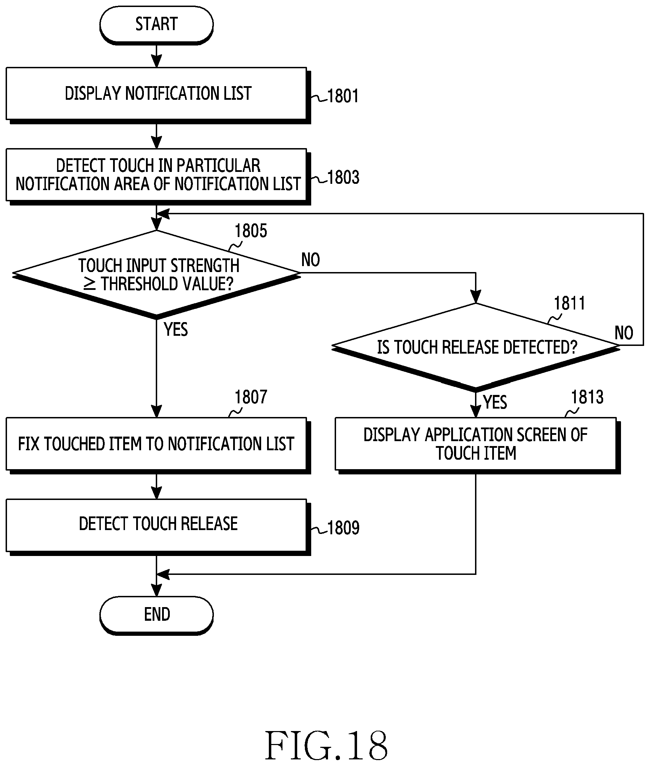

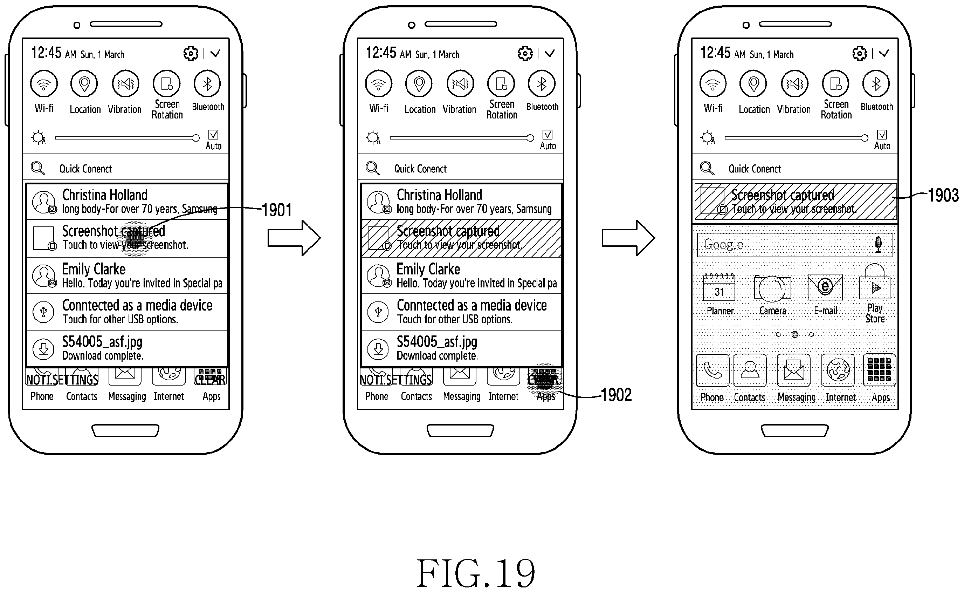

FIG. 18 illustrates an operation procedure of fixing an item within a list in the electronic device according to an embodiment of the present disclosure. FIG. 19 illustrates a screen example of fixing the item within the list in the electronic device according to an embodiment of the present disclosure. Hereinafter, the operation procedure of FIG. 18 will be described with reference to the screen example illustrated in FIG. 19. In the following embodiment, respective operations may be sequentially performed, but the sequential performance is not necessary. For example, orders of the operations may be changed, and at least two operations may be performed in parallel.

Referring FIG. 18, the electronic device displays a notification list in operation 1801. For example, the electronic device may display a notification list for informing the user of recently occurring events. For example, like the first screen configuration of FIG. 19, a notification list indicating recently occurring events may be displayed.

The electronic device detects a touch in a particular item area in the notification list in operation 1803. For example, like the first screen configuration of FIG. 19, the electronic device may detect a touch in an item area 1901 for informing that a screen capture event occurs.

The electronic device inspects whether the touch input strength is larger than or equal to a threshold value in operation 1805. For example, the electronic device may measure a strength of pressure or force applied to an item area in which a user's touch input is detected through the sensor module 220 and compare the measured strength with a threshold value, so as to inspect whether the touch input strength is larger than or equal to the threshold value.

When the touch input strength is larger than or equal to the threshold value, the electronic device fixes the item on which the touch input is detected to the notification list in operation 1807. For example, control command such as "first touch input strength - execute the application related to the item" and "second touch input strength - fix to (pin up) the list" may be mapped to each item area displayed in the notification list. When the touch input having the strength of pressure or force larger than or equal to the threshold value is detected in the item area 1901 for informing that the screen capture event occurs in the notification list like the first screen configuration of FIG. 19, the electronic device may fix the item for informing that the screen capture event occurs to the notification list. The electronic device may display a graphic effect indicating that the item is fixed to the notification list like the second screen configuration of FIG. 19. According to an embodiment, the item fixed to the notification list is not removed from the notification list even when a notification list removal event occurs. According to an embodiment, when the touch input having the input strength larger than or equal to the threshold value is detected in the item area of the notification list, the electronic device may display a graphic effect indicating that the corresponding item will be fixed to the notification list or generate vibration.

The electronic device detects touch release in operation 1809. For example, the electronic device may detect the release of the touch input detected in the item area of the notification list in operation 1803. Even after the touch input is released, the electronic device may maintain the state of the item fixed to the notification list. When a menu of removing the notification list is selected like the second screen configuration of FIG. 19 by maintaining the state of the item fixed to the notification area in which the touch released is detected, the electronic device may delete all the remaining items other than the fixed item among the items included in the notification list. The electronic device performing the function of removing the notification list may display a notification list including only the fixed item 1903 like the third screen configuration of FIG. 19.

When strength of the touch input is smaller than a threshold value, the electronic device inspects whether release of the touch is detected in operation 1811. When the touch release is not detected, the electronic device returns to operation 1805 and performs the following operations again. When the touch release is detected, the electronic device displays the application of the touch item in operation 1813. For example, when the touch input having the strength of pressure or force smaller than the threshold value is detected in the item area 1901 for informing that the screen capture event included in the notification list occurs like the first screen configuration of FIG. 19, the electronic device may execute an application related to the captured image and display the captured image on the screen.

FIG. 18 has described fixing the item on which the touch is detected to the notification list when the touch input having the strength of pressure or force larger than or equal to the threshold value is detected in the item area of the notification list in the state in which the notification list is displayed. According to an embodiment, when the touch input having the strength of pressure or force larger than or equal to threshold value is detected in the fixed item area in the state in which the item is fixed to the notification list, the electronic device may release the fixed state of the item.

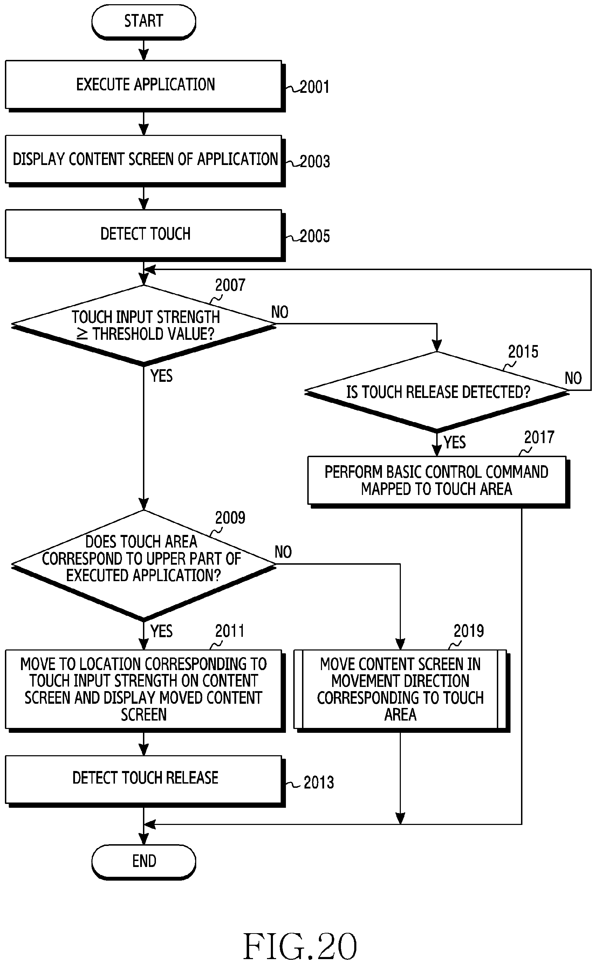

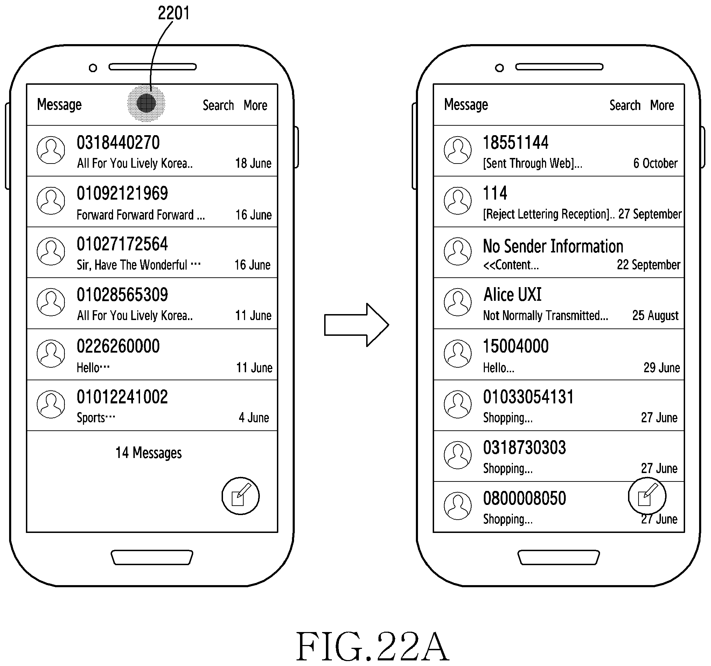

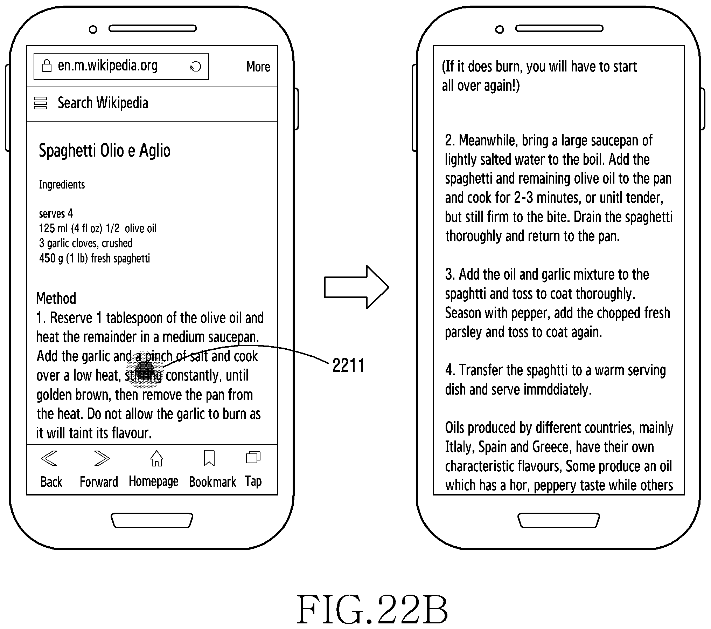

FIG. 20 illustrates an operation procedure of moving a content screen of an application in the electronic device according to an embodiment of the present disclosure. FIGs. 22A and 22B illustrate screen examples of moving the content screen of the application in the electronic device according to an embodiment of the present disclosure. Hereinafter, the operation procedure of FIG. 20 will be described with reference to the screen examples illustrated in FIGs. 22A and 22B. In the following embodiment, respective operations may be sequentially performed, but the sequential performance is not necessary. For example, orders of the operations may be changed, and at least two operations may be performed in parallel.

Referring to FIG. 20, the electronic device executes the application in operation 2001. For example, the electronic device executes a message application or a web browser application by user input.

The electronic device displays a content screen of the executed application in operation 2003. For example, as illustrated in FIG. 22A, the electronic device may display a screen including a received message list or a screen including a transmitted message list in the message application. In another example, as illustrated in FIG. 22B, the electronic device may display a webpage screen including content.

The electronic device detects a touch in operation 2005. For example, the electronic device may detect touch input by the user through the touch screen.

The electronic device inspects whether the touch input strength is larger than or equal to a threshold value in operation 2007. For example, the electronic device may measure a strength of pressure or force applied to an area in which the user's touch input is detected through the sensor module 220 and compare the measured strength with a threshold value, so as to inspect whether the touch input strength is larger than or equal to the threshold value.

When the touch input strength is larger than or equal to the threshold value, the electronic device inspects whether the touch area is an upper area of the executed application in operation 2009. For example, the electronic device may inspect whether the touch area corresponds to the upper area of the executed application based on coordinates in which the touch input is detected.

When the touch area is the upper area of the executed application, the electronic device moves to a location corresponding to the touch input strength on the currently displayed content screen and displays the moved content screen in operation 2011. For example, control commands such as "first touch input strength - no control command" and "second touch input strength - move to the upper part of the list" may be mapped to the upper area of the application. When touch input having a strength larger than or equal to a threshold value is detected in an upper area 2201 of the message application like the first screen configuration of FIG. 22A, the electronic device may display an upper part of a message list by moving to the upper part of the message list like the second screen configuration of FIG. 22A. In another example, control commands such as "first touch input strength - no control command" and "second touch input strength - move to the lower part of the list" may be mapped to the upper area of the application. When the touch input having the strength larger than or equal to the threshold value is detected in the upper area 2201 of the message application like the first screen configuration of FIG. 22A, the electronic device may display a lower part of the message list by moving to the lower part of the message list. According to an embodiment, when moving the message list, the electronic device may display scrolling of the message list or page up/down of the message list.

The electronic device detects touch release in operation 2013. For example, the electronic device may detect release of the touch input detected in the upper area of the application in operation 1803.

When the touch area is not the upper area of the executed application, the electronic device moves the content screen in a movement direction corresponding to the touch area and displays the moved content screen in operation 2019. For example, control commands such as "first touch input strength - select the item" and "second touch input strength - move in the down direction of the list" may be mapped to a first area within the content screen of the application. When touch input having a strength of pressure or force larger than or equal to a threshold value is detected in a lower area 2211 of a web page like the first screen configuration of FIG. 22B, the electronic device may move in a down direction of the webpage and display the screen like the second screen configuration of FIG. 22B. In another example, control commands such as "first touch input strength - select the item" and "second touch input strength - move in up direction of the list" may be mapped to a second area of the application. When the touch input having the strength of pressure or force larger than or equal to the threshold value is detected in the upper area of the webpage, the electronic device may move and display in an up direction of the webpage. According to an embodiment, when changing the webpage, the electronic device may display scrolling of the webpage or display page up/down.

When the touch input strength is smaller than the threshold value, the electronic device inspects whether touch release is detected in operation 2015. For example, when the touch release is not detected, the electronic device returns to operation 2007 and performs the following operations again. When the touch release is detected, the electronic device performs a basic control command mapped to the touch area in operation 2017. For example, the electronic device may perform the control command mapped to the first touch input strength among the control commands mapped to the touch area. For example, as illustrated in the first screen configuration of FIG. 22A, when the touch input having the strength of pressure or force smaller than the threshold value is detected in a particular message area included in a message list in the state in which the message list is displayed, the electronic device may perform a control command for selecting a particular message. In another example, when a touch is detected in an area in which a hyperlink exists in the state in which the webpage is displayed, the electronic device may display another webpage connected to the hyperlink by performing a control command for selecting the hyperlink.

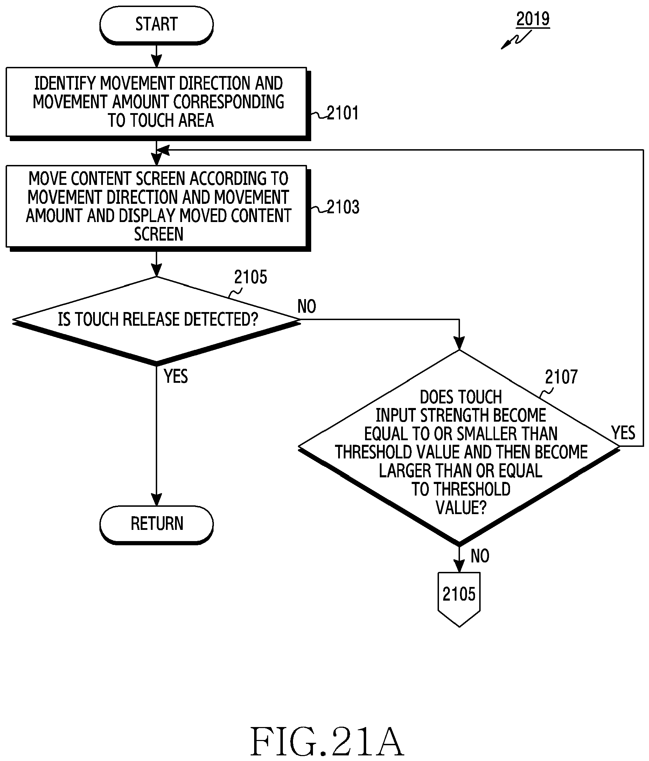

FIG. 21A illustrates an operation procedure of moving an application content screen based on a touch area in the electronic device according to an embodiment of the present disclosure.

Referring to FIG. 21A, when the electronic device moves a content screen in a movement direction corresponding to the touch area and displays the moved content screen (for example, operation 2019 of FIG. 20), the electronic device identifies a movement direction and a movement amount corresponding to the touch area in operation 2101. For example, a content screen area of the electronic device may be divided into a plurality of sub areas corresponding to different movement directions and movement amounts. For example, the content screen area may be divided into four sub areas. The movement direction and movement amount of the first sub area may be "up direction and 5 pages", the movement direction and movement amount of the second sub area may be "up direction and 1 page", the movement direction and movement amount of the third sub area may be "down direction and 1 page", and the movement direction and movement amount of the fourth sub area may be "up direction and 5 pages". When the touch area is the first sub area, the electronic device may identify movement of 5 pages in the up direction. In another example, the content screen area may be divided into two sub areas, the movement direction and movement amount of the first sub area may be "left direction and 1 page" and the movement direction and movement amount of the second sub area may be "right direction and 1 page". When the touch area is the second sub area, the electronic device may identify movement of 1 page in the right direction.

The electronic device move and display the application content screen according to the movement direction and the movement amount in operation 2103. For example, the electronic device may move the current screen by 5 pages on the currently displayed application content screen and display the moved screen. In another example, the electronic device may move the current screen by 1 pages in the left direction on the currently displayed application content screen and display the moved screen.

The electronic device inspects whether touch release is detected in operation 2105. When the touch release is detected, the electronic device inspects whether the touch input strength becomes equal to or smaller than a threshold value and then becomes larger than or equal to the threshold value in operation 2107. For example, the electronic device may inspect whether the touch input strength becomes smaller than the threshold value and then becomes larger than or equal to the threshold value in the state in which the touch detected through the sensor module 220 in operation 2005 is maintained. When the touch input strength becomes smaller than the threshold value and then becomes larger than or equal to the threshold value, the electronic device performs operation 2103 again. For example, when the touch input strength becomes smaller than the threshold value and then becomes larger than or equal to the threshold value after the content area displayed on the screen is moved by 5 pages in the up direction on the application content screen, the electronic device moves the moved content screen by 5 pages in the up direction again and display the moved content screen. However, when the touch input strength becomes smaller than the threshold and then does not become larger than or equal to the threshold value, the electronic device returns to operation 2105.

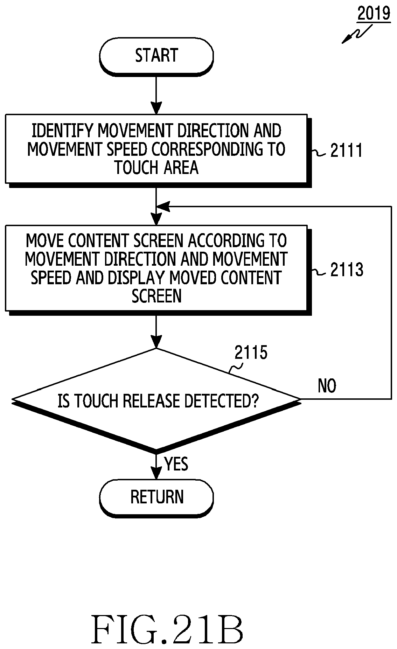

FIG. 21B illustrates an operation procedure of moving the application content screen based on a touch area in the electronic device according to an embodiment of the present disclosure.

Referring to FIG. 21B, when the electronic device moves the application content screen in a movement direction corresponding to the touch area and displays the moved screen (for example, operation 2019 of FIG. 20), the electronic device identifies a movement direction and a movement speed corresponding to the touch area in operation 2111. For example, the application content screen area of the electronic device may be divided into a plurality of sub areas corresponding to different movement directions and movement speeds. For example, the content screen area may be divided into four sub areas. The movement direction and movement speed of the first sub area may be "up direction and movement speed A", the movement direction and movement speed of the second sub area may be "up direction and movement speed B", the movement direction and movement speed of the third sub area may be "down direction and movement speed B" and the movement direction and movement speed of the fourth sub area may be "up direction and movement speed A". When the touch area is the first sub area, the electronic device may identify movement of the content screen at the movement speed A in the up direction. In another example, the content screen area may be divided into two sub areas. The movement direction and movement speed of the first sub area may be "left direction and movement speed A" and the movement direction and movement speed of the second sub area may be "right direction and movement speed A". When the touch area is the second sub area, the electronic device may identify movement of the content screen at the movement speed A in the right direction.

The electronic device moves and displays the application content screen according to the movement direction and the movement speed in operation 2113. For example, the electronic device may display another content area by moving the content area of the currently displayed content screen at the movement speed A in the up direction. In another example, the electronic device may display another content area by moving the content area of the currently displayed content screen at the movement speed A in the left direction.

The electronic device inspects whether touch release is detected in operation 2115. When touch release is not detected, the electronic device repeatedly performs operation 2113. For example, the electronic device may continuously perform the operation of moving the content screen based on the identified movement direction and movement speed while the touch input is maintained. In other words, for example, the electronic device may continuously perform a scroll function for the content screen based on the identified movement direction and movement speed while the touch input is maintained.

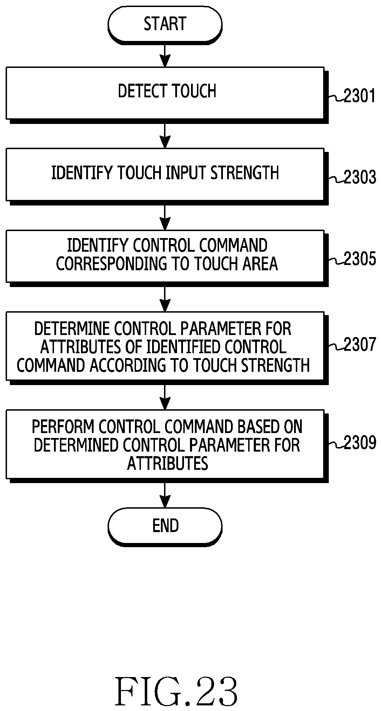

FIG. 23 illustrates an operation procedure based on a touch area and a touch input strength in the electronic device according to an embodiment of the present disclosure. In the following embodiment, respective operations may be sequentially performed, but the sequential performance is not necessary. For example, orders of the operations may be changed, and at least two operations may be performed in parallel.

Referring to FIG. 23, the electronic device detects touch input in operation 2301. For example, the electronic device may detect touch input by the user through the touch screen.

The electronic device identifies the strength for the touch input in operation 2303. For example, when the user inputs a touch, the electronic device may measure the strength of pressure or force applied to the touch screen through the sensor module 220.

The electronic device identifies a control command corresponding to a touch area in which the touch input is detected in operation 2305. For example, at least one control command according to an application displayed on the screen may be mapped to the touch area of the electronic device. For example, a control command for regulating a car speed may be mapped to a first touch area in the state in which a car game application is displayed on the screen. In another example, a control command for regulating a thickness of a memo tool such as a pen may be mapped to the first touch area in the state in which a memo application is displayed on the screen.

The electronic device determines a control parameter for attributes of the identified control command according to the touch input strength in operation 2307. For example, the electronic device may determine that a control parameter value for attributes of the control command is a first control parameter value when the touch input strength is the first touch input strength, and determine that a control parameter value for attributes of the control command is a second control parameter value when the touch input strength is the second touch input strength. For example, when the touch input strength is changed, the electronic device may change the control parameter for attributes without changing attributes of the control command. In a detailed example, when the strength of the touch input for the first touch area is changed from the first touch input strength to the second touch input strength in the state in which the control command for regulating the car speed is mapped to the first touch area of the car game application, the electronic device may maintain the attributes of the control command "regulate the car speed" and may change the car speed, which is the control parameter for regulating the car speed, from 30 km/h to 50 km/h. In another example, when the strength of the touch input for the first touch area is changed from the first touch input strength to the second touch input strength in the state in which the control command for regulating the thickness of the memo tool is mapped to the first touch area of the memo application, the electronic device may maintain the attributes of the control command "regulate the thickness of the memo tool" and may change the thickness, which is the control parameter for regulating the thickness of the memo tool, from 1 mm to 3 mm.

The electronic device performs the control command based on the control parameter for the determined attributes in operation 2509. For example, the electronic device may perform the control command based on the control parameter in response to the detected touch input. In a detailed example, when the touch input strength measured in the first touch area during execution of the car game application is the second touch input strength, the electronic device may control the car speed to be 50 km/h. In another example, when the touch input strength measured in the first touch area during execution of the memo application is the second touch input strength, the electronic device may control the thickness of the memo tool to be 1 mm.

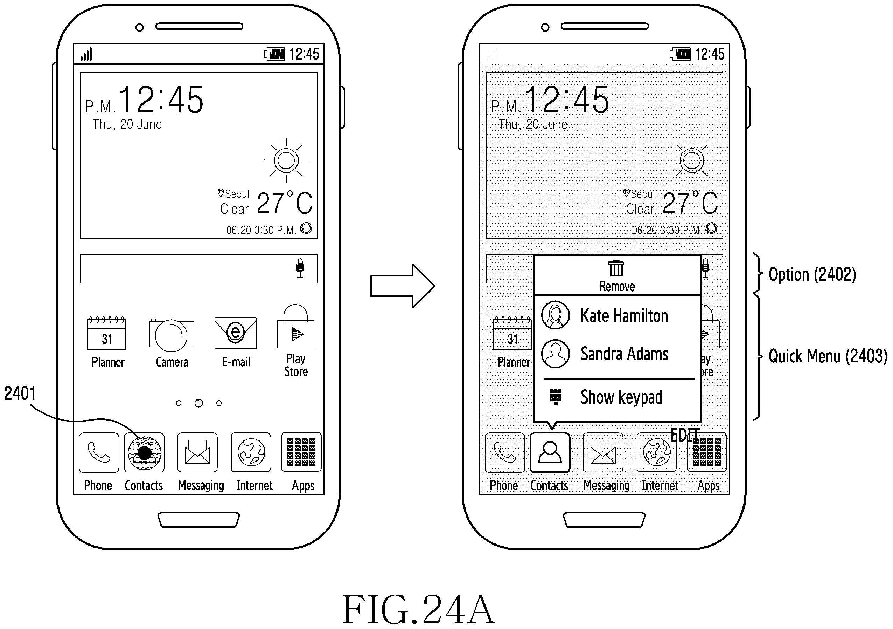

Hereinafter, FIGs. 24A to 40 will describe detailed examples in which the electronic device performs a control command corresponding to a touch detection area and a touch input strength according to the various embodiments described above.

FIGs. 24A to 24H illustrate screen examples in which the electronic device operates on the basis of a touch input type for an application item of a home screen according to various embodiments of the present disclosure. For example, an example of an operation of the electronic device in the case in which touch input having a strength of pressure or force larger than or equal to a threshold value is generated for an application item displayed on the home screen is described.

Referring to FIG. 24A, when touch input 2401 having a strength of pressure or force larger than or equal to a threshold value is detected in a contact application icon area on the home screen, the electronic device may display a pop-up menu including an option 2402 and a quick menu 2403. The option 2402 may include an item for performing a function related to control of an icon of the contact application, and the quick menu 2403 may include an item for performing a function related to the contact application. For example, the option 2402 may include an item for performing a function of deleting a contact application icon, and the quick menu 2403 may include an item of "create contact" for creating new contact, an item of "my profile" for displaying a user's profile, an item of "view groups" for displaying a group of contacts stored in the electronic device, and an item of "search contact" for searching for a contact which the user desires among contacts stored in the electronic device. The items included in the option 2402 and the quick menu 2403 are not limited to the above-described items. For example, the option 2402 and the quick menu 2403 may include other items for performing a function related to the contact application, and may be variously changed by the user. For example, when the electronic device also displays an edit item for changing an item included in the option 2402 and/or the quick menu 2403 in addition to the option 2402 and the quick menu 2403 and the edit item is selected by the user, the electronic device may perform a function for changing (for example, adding an item or deleting an item) items included in the option 2402 and/or the quick menu 2403 with respect to the contact application icon.

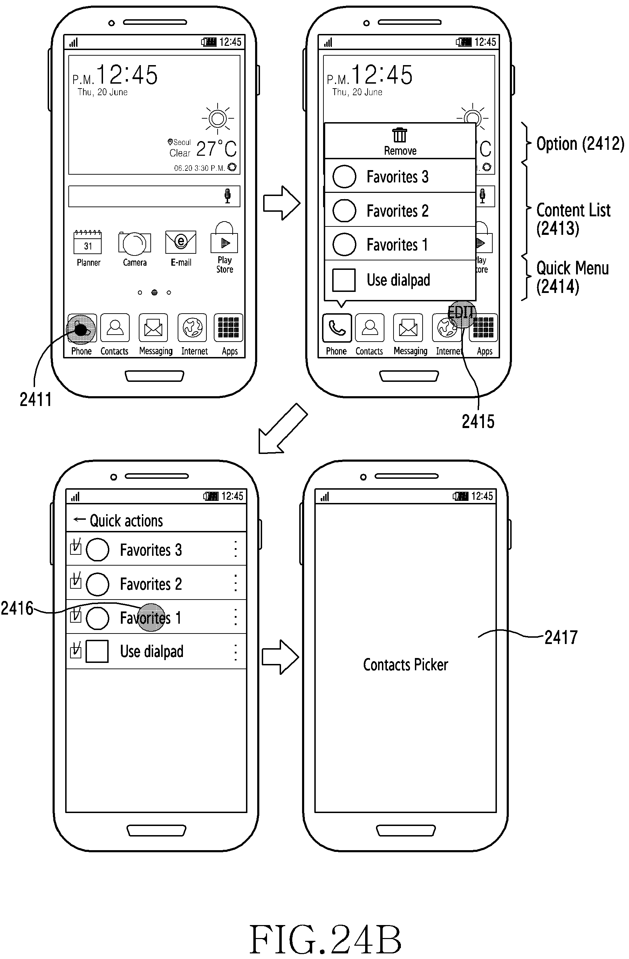

Referring to FIG. 24B, when touch input 2411 having a strength of pressure or force larger than or equal to a threshold value is detected in a call application icon area on the home screen, the electronic device may display a pop-up menu including an option 2412, a content list 2413, and a quick menu 2413. The option 2412 may include a function item related to control of an icon of the call application, the content list 2413 may include names (for example, user names) of some contacts among the contacts registered in the call application, and the quick menu 2414 may include some function items related to the call application. For example, the option 2412 may include a deletion item for deleting the call application icon, the content list 2413 may include an item indicating a contact name (for example, a contact name registered in favorites or a contact name which is frequently received and/or transmitted) which the user prefers, and the quick menu 2414 may include a dial pad use item for displaying a dial pad. In addition, the pop-up menu may include an edit item for changing items included in the option 2412, the content list 2413, and/or the quick menu 2414. For example, when touch input 2415 for the edit item is detected, the electronic device may display a user interface for changing the items included in the content list 2413 and the quick menu 2414 through a pop-up window or on an entire screen. For example, when the touch input 2415 for the edit item is detected, the electronic device may display the item indicating the preferred contact name included in the current content list 2413 and the dial pad use item included in the quick menu 2413 as illustrated in the third screen of FIG. 24B. At this time, when touch input 2416 for a particular preferred contact item (for example, Favorites1) is detected, the electronic device may display a screen 2417 for selecting another contact among the contacts registered in the electronic device in order to register the other contact in the corresponding list as illustrated in the fourth screen of FIG. 24B.

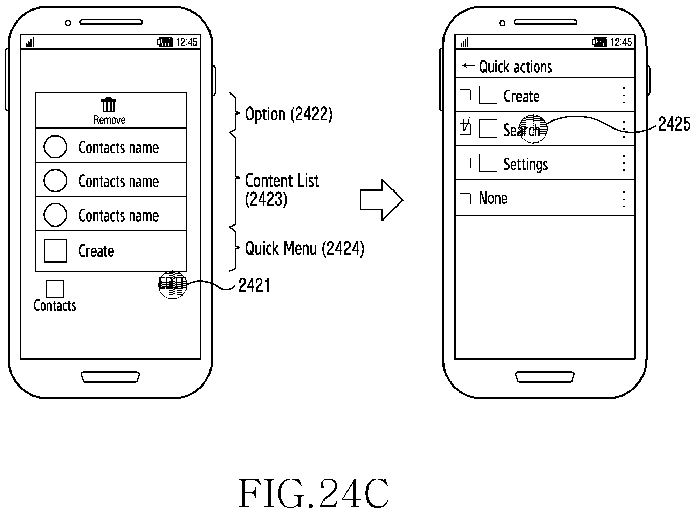

Referring to FIG. 24C, when touch input having a strength of pressure or force larger than or equal to a threshold value is detected in a message application icon area on the home screen, the electronic device may display a pop-up menu including an option 2422, a content list 2423, and a quick menu 2423. The option 2422 may include a function item related to control of an icon of the message application, the content list 2423 may include a recent message transmission/reception log, and the quick menu 2424 may include some function items related to the message application. For example, the option 2422 may include a deletion item for deleting the message application icon, the content list 2423 may include an item indicating newly received messages, contact names from which messages are newly received, a contact name to which/from which a message is recently transmitted/received, or a chatting room name in which a message is recently transmitted and/or received, and the quick menu 2424 may include a message creating item for writing a new message. In addition, the pop-up menu may include an edit item for changing items included in the option 2422, the content list 2423, and/or the quick menu 2424. For example, when touch input 2421 for the edit item is detected, the electronic device may display a user interface for changing the items included in the content list 2423 and the quick menu 2424 on a pop-up window or on an entire screen. For example, when the touch input 2421 for the edit item is detected, the electronic device may display items (for example, a message creating item, a message searching item, and a message setting item) which can be included in the quick menu 2423 as illustrated in the second screen of FIG. 24C. When touch input 2425 for the message searching item is detected by the user, the quick menu 2424 may be changed to include the message searching item instead of the message creating item.

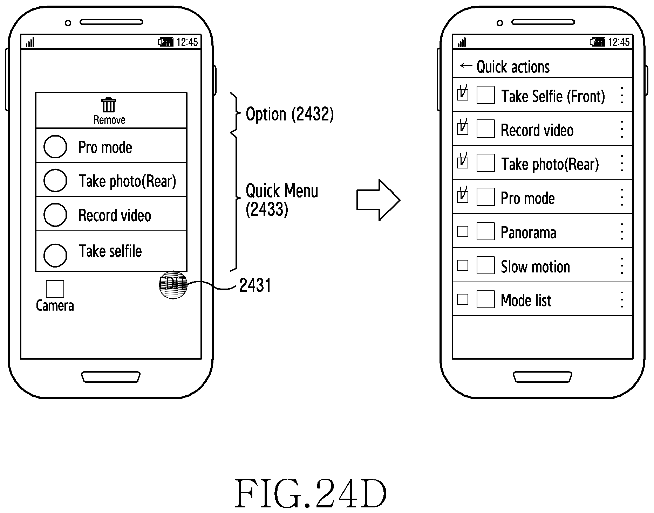

Referring to FIG. 24D, when a touch input having a strength of pressure or force larger than or equal to a threshold value is detected in a camera application icon area on the home screen, the electronic device may display a pop-up menu including an option 2432 and a quick menu 2433. The option 2432 may include a function item related to control of an icon of the camera application and the quick menu 2433 may include some function items related to the camera application. For example, the option 2432 may include a deletion item for deleting the camera application icon, and the quick menu 2433 may include an item of "pro mode" for taking a photo like a professional photographer, an item of "take photo (rear)" for taking a photo through a rear camera, an item of "record video" for taking a video, and an item of "take selfie (front)" for taking a selfie through a front camera. In addition, the pop-up menu may include an edit item for changing the items included in the option 2432 and/or the quick menu 2433. For example, when touch input 2431 for the edit item is detected, the electronic device may display a user interface for changing the items included in the quick menu 2433 through a pop-up window or on an entire screen. For example, when the touch input 2431 for the edit item is detected, the electronic device may display items (for example, "take selfie (front)", "record video", "take photo (rear)", "pro mode", "panorama", "slow motion", and "mode list"), which can be included in the quick menu 2433, and configure the quick menu based on items selected by the user as illustrated in the second screen of FIG. 24D.

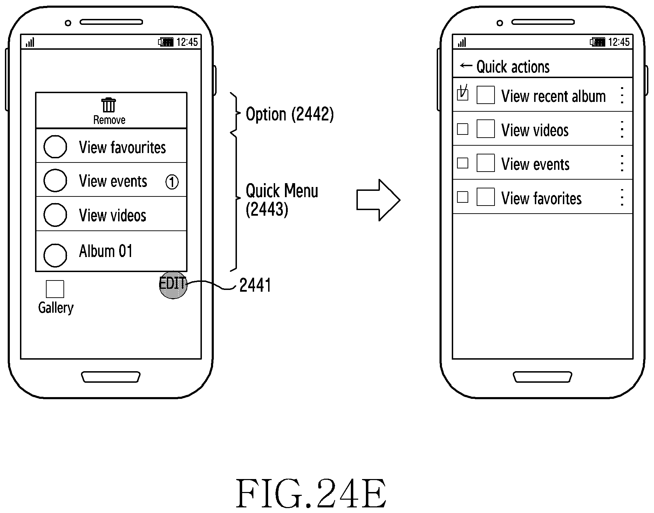

Referring to FIG. 24E, when touch input having a strength of pressure or force larger than or equal to a threshold value is detected in a gallery application icon area on the home screen, the electronic device may display a pop-up menu including an option 2442 and a quick menu 2443. The option 2442 may include a function item related to control of an icon of the gallery application, and the quick menu 2443 may include some function items related to the gallery application. For example, the option 2442 may include a deletion item for deleting the camera application icon, and the quick menu 2443 may include an item of "view favorites" for entering a preferred screen, an item of "view events" for entering an event viewing screen, an item of "view videos" for entering a video category list screen, and an album item for entering a recently used album screen. In addition, the pop-up menu may include an edit item for changing the items included in the option 2442 and/or the quick menu 2443. For example, when touch input 2441 for the edit item is detected, the electronic device may display a user interface for changing the items included in the quick menu 2443 through a pop-up window or on an entire screen. For example, when touch input 2441 for the edit item is detected, the electronic device may display items which can be included in the quick menu 2443 and may configure the quick menu based on items selected by the user as illustrated in the second screen of FIG. 24E.

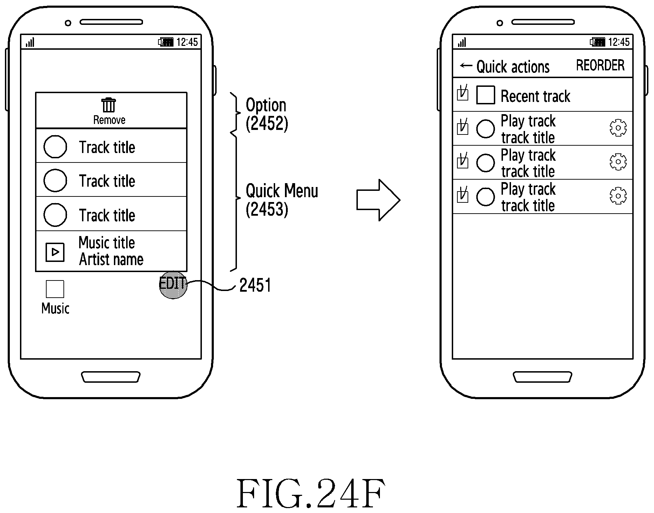

Referring to FIG. 24F, when touch input having a strength of pressure or force larger than or equal to a threshold value is detected in a music application icon area on the home screen, the electronic device may display a pop-up menu including an option 2452 and a quick menu 2453. The option 2452 may include a function item related to control of an icon of the music application, and the quick menu 2453 may include some function items related to the music application. For example, the option 2452 may include a deletion item for deleting the music application icon, and the quick menu 2453 may include items (for example, a track name, a song name, a play list, an album name, and an artist name) for directly reproducing a corresponding song without entering a music application screen. In addition, the pop-up menu may include an edit item for changing the items included in the option 2452 and/or the quick menu 2453. For example, when touch input 2451 for the edit item is detected, the electronic device may display a user interface for changing the items included in the quick menu 2453 through a pop-up window or on an entire screen. For example, the touch input 2451 for the edit item is detected, the electronic device may display items which can be included in the quick menu 2443 and configure the quick menu based on items selected by the user as illustrated in the second screen of FIG. 24F.

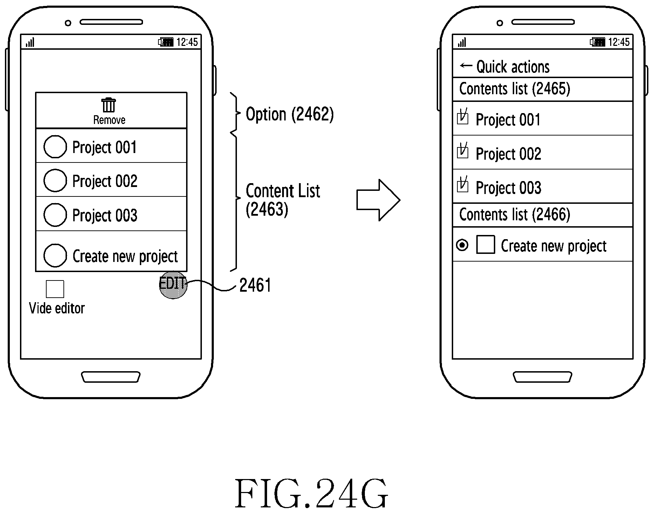

Referring to FIG. 24G, when touch input having a strength of pressure or force larger than or equal to a threshold value is detected in a video editing application icon area on the home screen, the electronic device may display a pop-up menu including an option 2462, a content list 2463, and a quick menu 2464. The option 2462 may include a function item related to control of an icon of the video editing application, the content list 2463 may include media items which can be edited, and the quick menu 2464 may include some function items related to the video editing application. For example, the option 2462 may include a deletion item for deleting the video editing application icon, the content list 2463 may include a project title item for entering a media edit screen of the corresponding project, and the quick menu 2464 may include an item of "create new project" for entering a screen to create a new project. In addition, the pop-up menu may include an edit item for changing the items included in the option 2462, the content list 2463, and/or the quick menu 2464. For example, when touch input 2461 for the edit item is detected, the electronic device may display a user interface for changing the items included in the content list 2465 and the quick menu 2466 on a pop-up window or on an entire screen as illustrated in the second screen of FIG. 24G.

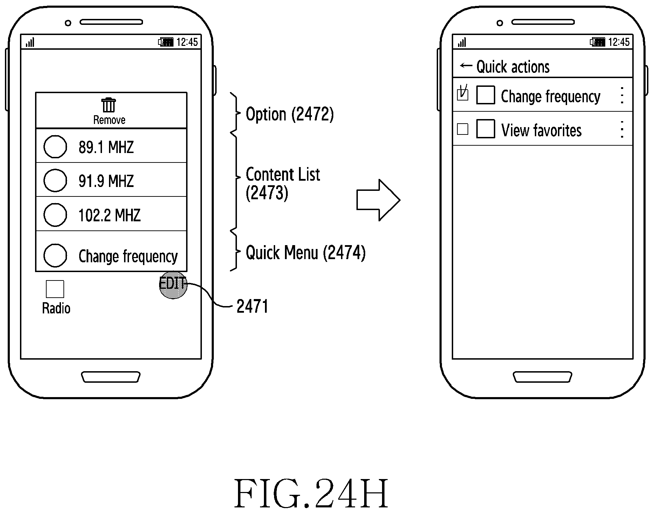

Referring to FIG. 24H, when touch input having a strength of pressure or force larger than or equal to a threshold value is detected in a radio application icon area on the home screen, the electronic device may display a pop-up menu including an option 2472, a content list 2473, and a quick menu 2474. The option 2472 may include a function item related to control of an icon of the radio application, the content list 2473 may include items indicating channels which can be listened to, and the quick menu 2474 may include some function items related to the radio application. For example, the option 2472 may include a deletion item for deleting the radio application icon, the content list 2473 may include a channel item for directly entering a screen for listening to the corresponding channel without entering the radio application screen, and the quick menu 2474 may include a channel change item for entering a channel change screen and/or a preferred channel item. In addition, the pop-up menu may include an edit item for changing the items included in the option 2472, the content list 2473, and/or the quick menu 2474. For example, when touch input 2471 for the edit item is detected, the electronic device may display a user interface for changing the items included in the quick menu 2474 through a pop-up window or on an entire screen and configure the quick menu based on items selected by the user.

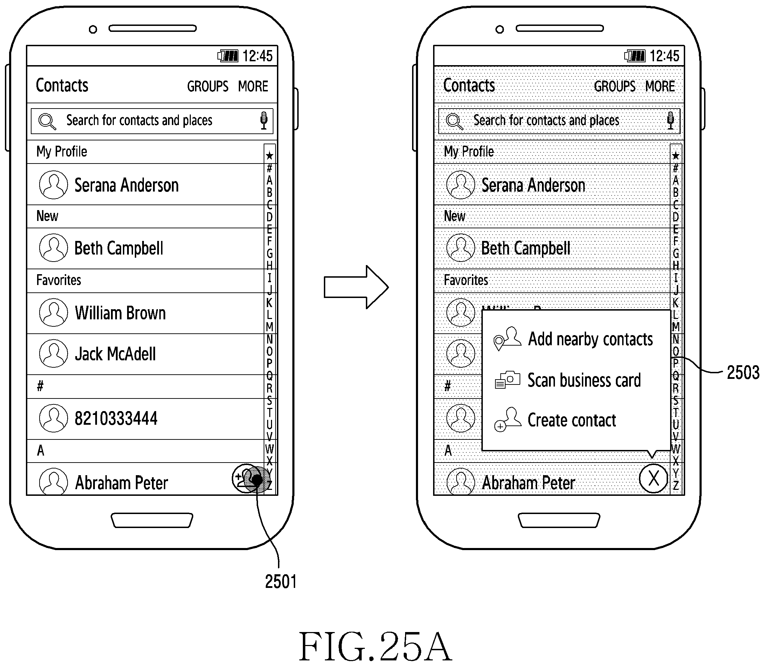

FIGs. 25A to 25G illustrate screen examples in which the electronic device operates on the basis of a touch input type for a contact application according to various embodiments of the present disclosure.

Referring to FIG. 25A, the electronic device may display a contact list on the screen by executing a contact application by user input. When touch input 2501 having a strength of pressure or force larger than or equal to a threshold value is detected in a Floating Action Button (FAB) area in the state in which the contact list is displayed, the electronic device may display a pop-up menu 2503 including various schemes for creating contacts. For example, the pop-up menu 2503 may include an item of "add nearby contacts" for entering a screen of creating contacts of other adjacent electronic devices, an item of "scan business card" for entering a screen of generating contacts by scanning business cards, and an item of "create contact" for entering a screen of creating contacts based on user input.

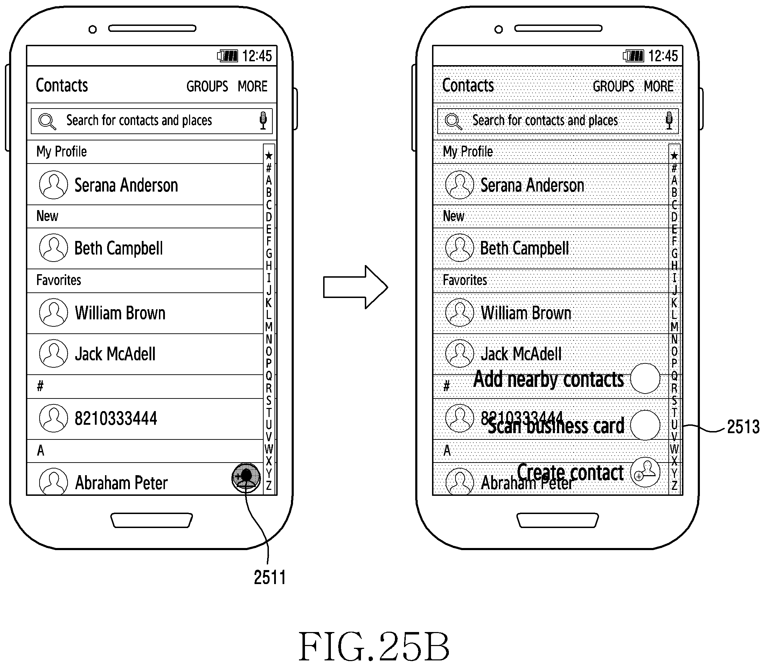

Referring to FIG. 25B, when touch input 2511 having a strength of pressure or force larger than or equal to a threshold value is detected in a Floating Action Button (FAB) area in the state in which the contact list is displayed as described in FIG. 25A, the electronic device may display a menu 2513 including various schemes for creating contacts on the entire screen. At this time, the menu 2513 may be displayed in a window form having predetermined transparency on the entire screen of the electronic device. The menu 2513 may include an item of "add nearby contacts", an item of "scan business card", and an item of "create contact".

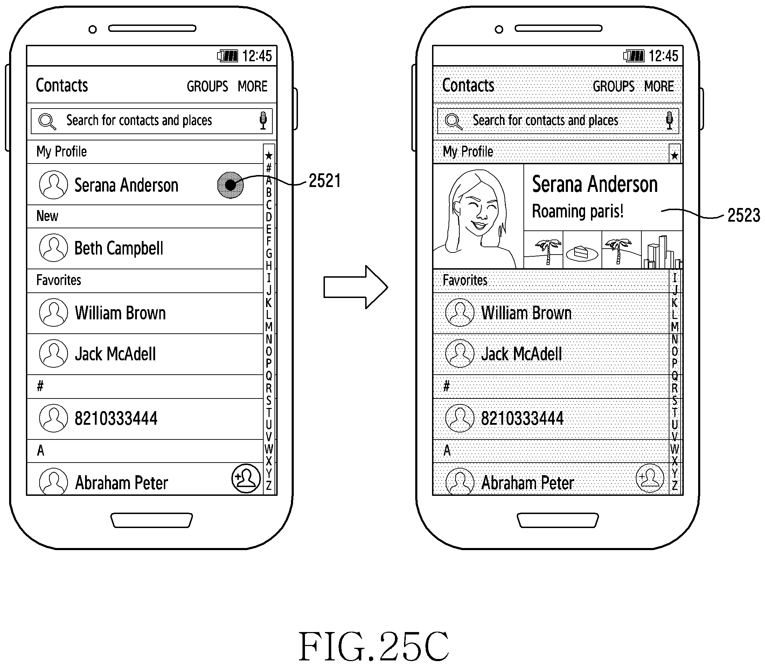

Referring to FIG. 25C, when touch input 2521 having a strength of pressure or force larger than or equal to a threshold value is detected in the state in which the contact list is displayed as described in FIG. 25A, the electronic device may display a pop-up menu 2523 including information on a contact of a user of the electronic device. The pop-up window including the information on the contact of the user of the electronic device may include an edit menu item for entering a screen in which a profile image, a status message, and a profile of the user are edited.

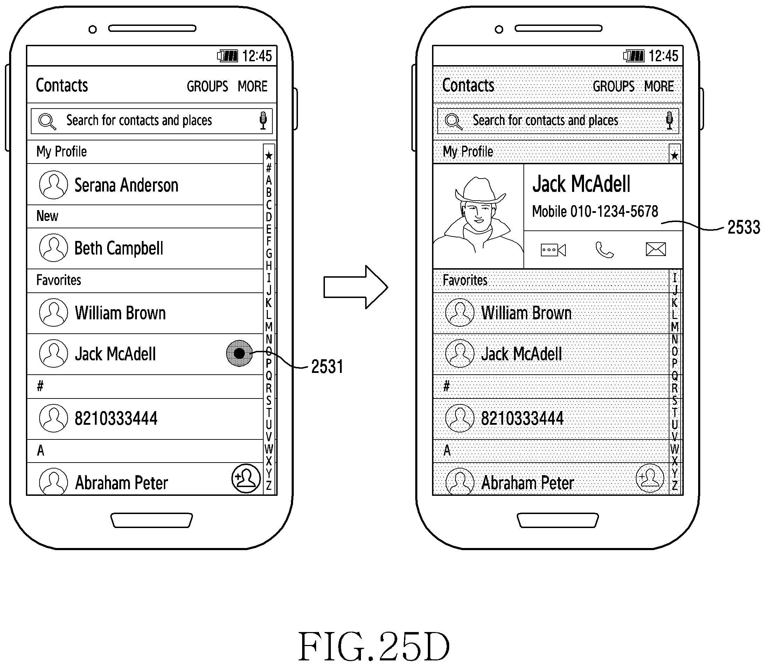

Referring to FIG. 25D, when touch input 2531 having a strength of pressure or force larger than or equal to a threshold value is detected in an area in which a particular contact is displayed in the state in which the contact list is displayed as described in FIG. 25A, the electronic device may display a pop-up menu 2533 including information on the particular contact. The pop-up window 2533 including the information on the particular contact may include a profile image of the user of the particular contact, a name (or a user name) of the particular contact, a phone number of the particular contact, a video call item for entering a video call mode for the particular contact, a voice call item for entering a voice call mode for the particular contact, a message item for entering a message transmission mode for the particular contact, and an edit menu item for entering a screen in which information on the particular contact is edited.

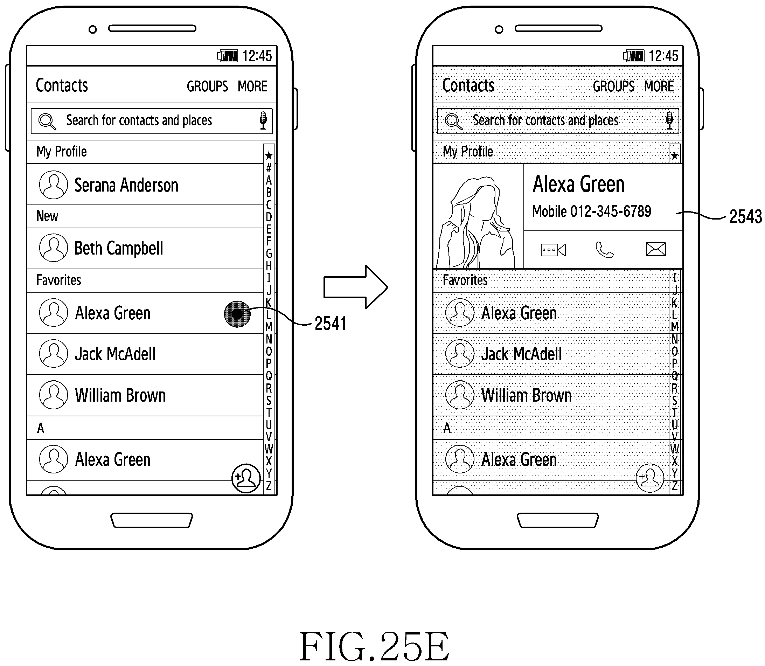

Referring to FIG. 25E, when touch input 2541 having a strength of pressure or force larger than or equal to a threshold value is detected in an area in which a profile image of a particular contact or a name of a particular contact is displayed in the state in which the contact list is displayed as described in FIG. 25A, the electronic device may display a pop-up window 2543 including information on the particular contact. The pop-up window 2543 including the information on the particular contact may include a profile image of the user of the particular contact, a name (or a user name) of the particular contact, a phone number of the particular contact, a video call item for entering a video call mode for the particular contact, a voice call item for entering a voice call mode for the particular contact, a message item for entering a message transmission mode for the particular contact, and an edit menu item for entering a screen in which information on the particular contact is edited.

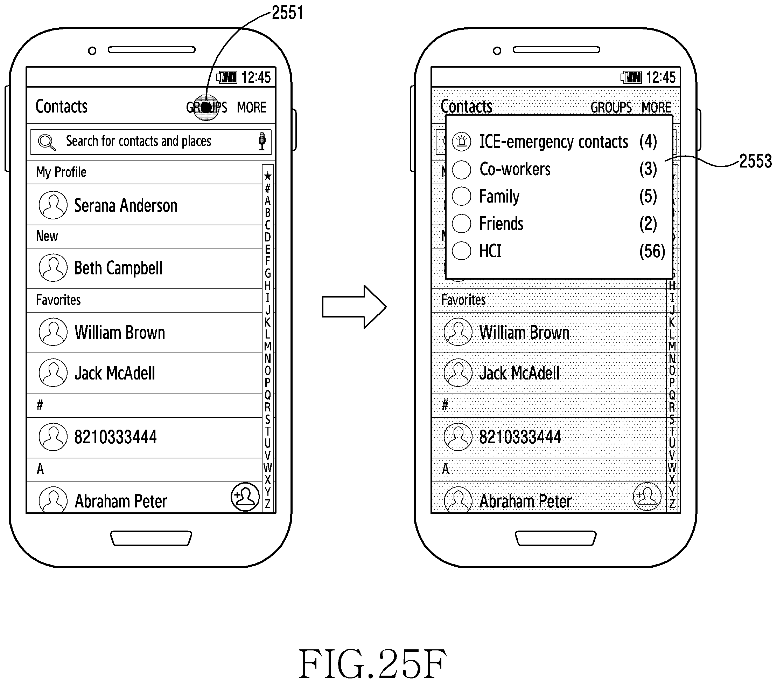

Referring to FIG. 25F, when touch input 2551 having a strength of pressure or force larger than or equal to a threshold value is detected for a group menu item in the state in which the contact list is displayed as described in FIG. 25A, the electronic device may display a pop-up window 2553 including a group list. The group menu item may be a menu item for entering a screen in which contacts registered in the electronic device are displayed for each group. The pop-up window 2553 including the group list may include a group name for the contacts registered in the electronic device and the number of contacts included in each group.

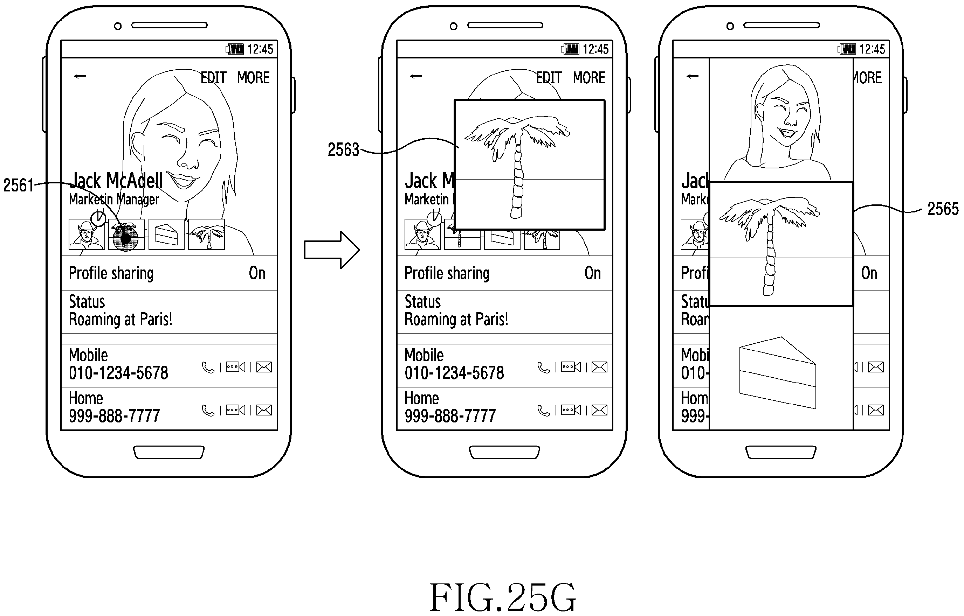

Referring to FIG. 25G, the electronic device may execute the contact application by user input and display a screen including detailed information on the particular contact. When touch input 2561 having a strength of pressure or force larger than or equal to a threshold value is detected for a thumbnail image in the profile image of the particular contact displayed on the screen, the electronic device may display the thumbnail image, on which the touch input 2561 is detected, to be large through a pop-up window 2563. Alternatively, the electronic device may display the thumbnail image on which the touch input 2561 is detected and at least one other thumbnail image to be large through a pop-up window 2565. At least one other thumbnail image may be a profile image related to the particular contact.

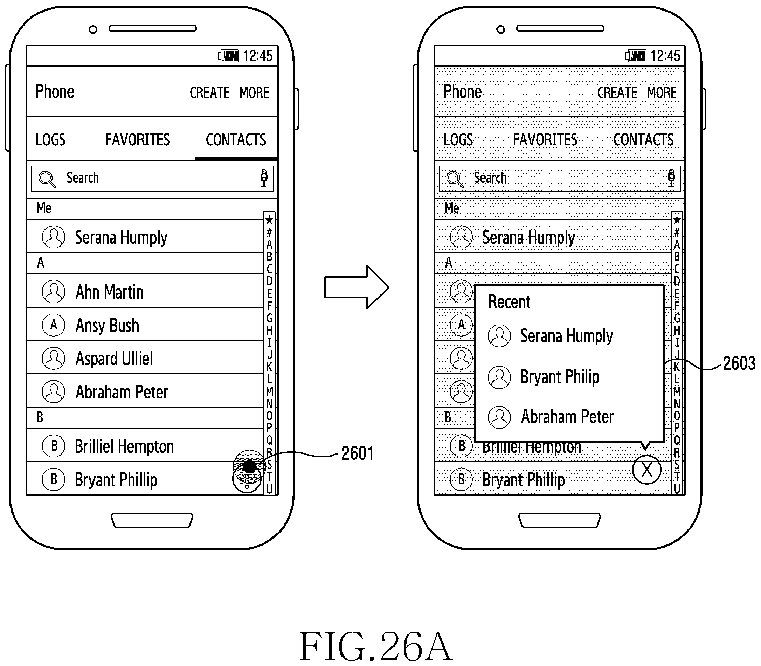

FIGs. 26A to 26F illustrate screen examples in which the electronic device operates on the basis of a touch input type for a call application according to various embodiments of the present disclosure.

Referring to FIG. 26A, the electronic device may display a contact list on the screen by executing the call application by user input. When touch input 2601 having a strength of pressure or force larger than or equal to a threshold value is detected in a Floating Action Button (FAB) area in the state in which the contact list is displayed, the electronic device may display a pop-up menu 2603 including information on recent call logs. For example, the pop-up menu 2603 may include contact names of counterpart electronic devices for recent three calls in the electronic device.

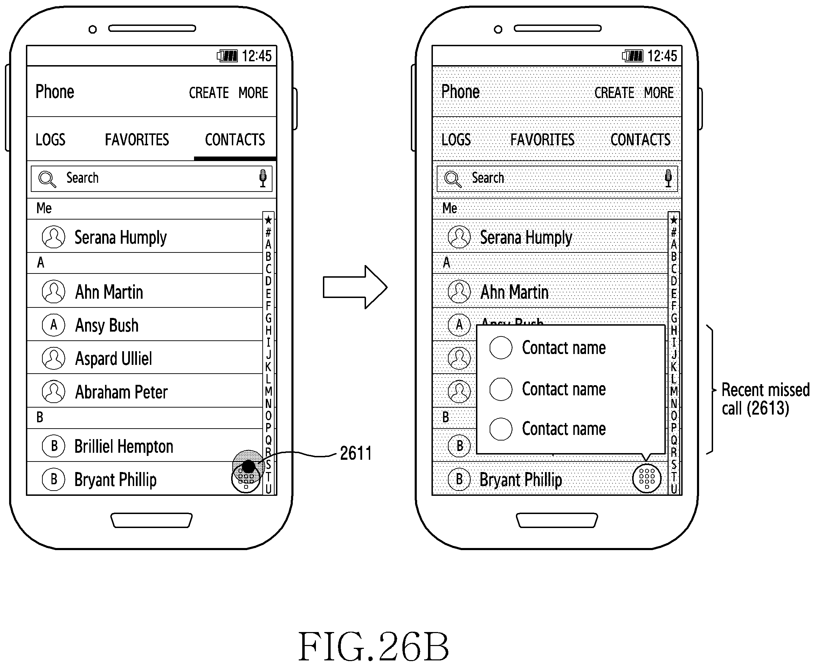

Referring to FIG. 26B, when touch input 2611 having a strength of pressure or force larger than or equal to a threshold value is detected in a Floating Action Button (FAB) area in the state in which the contact list is displayed as described in FIG. 26A, the electronic device may display a pop-up menu 2613 including information on recent missed call logs. For example, the pop-up menu 2603 may include contact names of counterpart electronic devices for recent three missed calls in the electronic device.

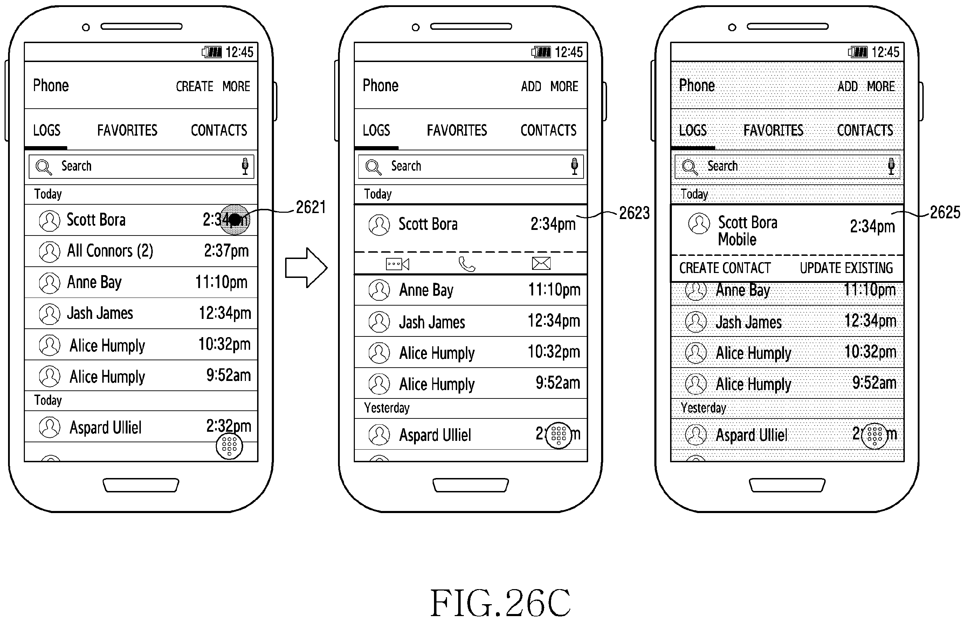

Referring to FIG. 26C, the electronic device may display a list indicating phone call logs on the screen by executing a call application by user input. When touch input 2621 having a strength of pressure or force larger than or equal to a threshold value is detected in an area in which a particular contact is displayed in the state in which the list indicating phone call logs is displayed, the electronic device may display a pop-up menu 2623 or 2625 for the particular contact. For example, when the particular contact on which the touch input is detected is pre-registered in the electronic device, the electronic device may display the pop-up menu 2623 including a particular contact name, a call-made time, a video call menu item, a voice call menu item, and a message writing menu item as illustrated in the second screen of FIG. 26C. In another example, when the particular contact on which the touch input is detected is not registered in the electronic device, the electronic device may display the pop-up menu 2625 including a particular contact name or phone number, a call-made time, a contact creation item, and a contact update item as illustrated in the third screen of FIG. 26C.

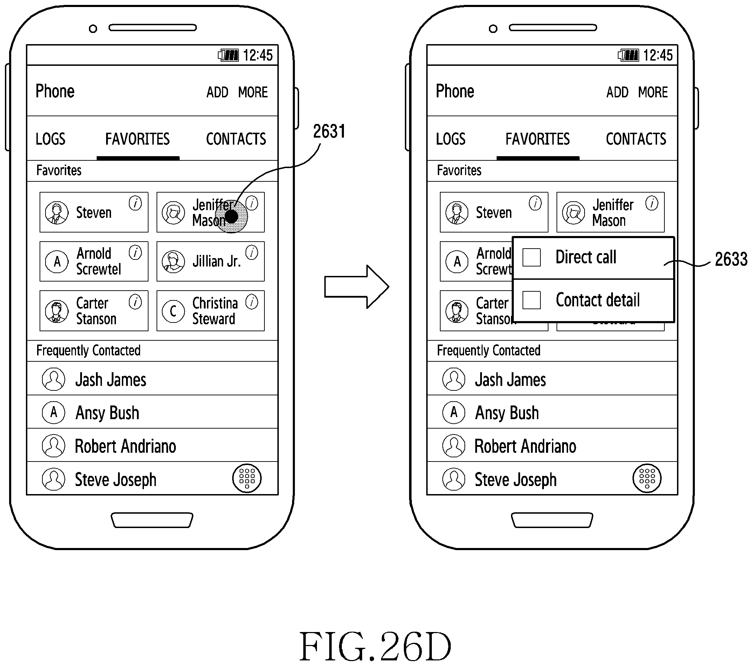

Referring to FIG. 26D, the electronic device may display a preferred contact list and a frequently used contact list on the screen by executing a call application by user input. When touch input 2631 having a strength of pressure or force larger than or equal to a threshold value is detected in a particular contact area included in the preferred contact list in the state in which the frequently used contact list is displayed, the electronic device may display a pop-up menu 2633 for the particular contact. For example, the electronic device may display the pop-up menu 2633 including a direct call for making a call to the particular contact and a contact detail item for displaying detailed information on the particular contact as illustrated in the second screen of FIG. 26D.

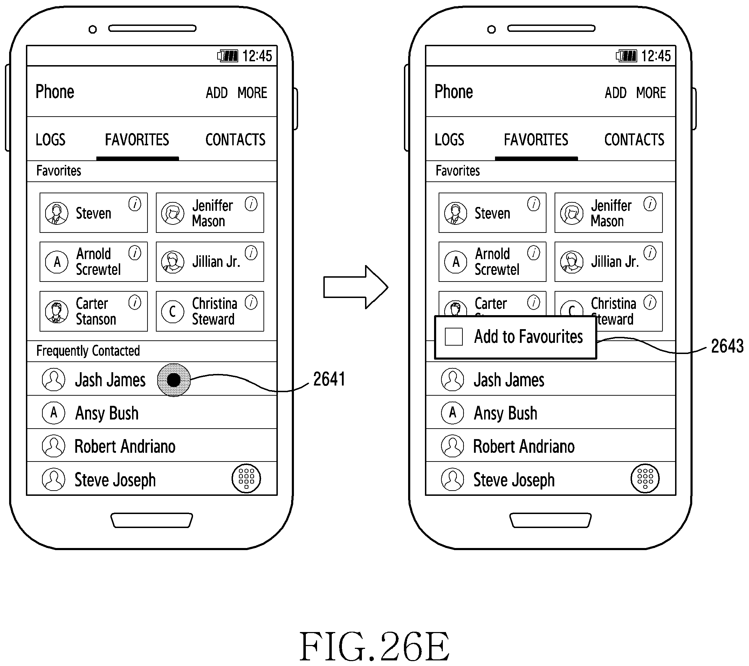

Referring to FIG. 26E, when touch input 2641 having a strength of pressure or force larger than or equal to a threshold value is detected in a particular contact area included in the frequently used contact list in the state in which the preferred contact list and the frequently used contact list are displayed as described in FIG. 26D, the electronic device may display a pop-up menu 2643 for the particular contact. For example, the electronic device may display the pop-up menu 2643 including an item for adding the particular contact to the preferred contact list as illustrated in the second screen of FIG. 26E.

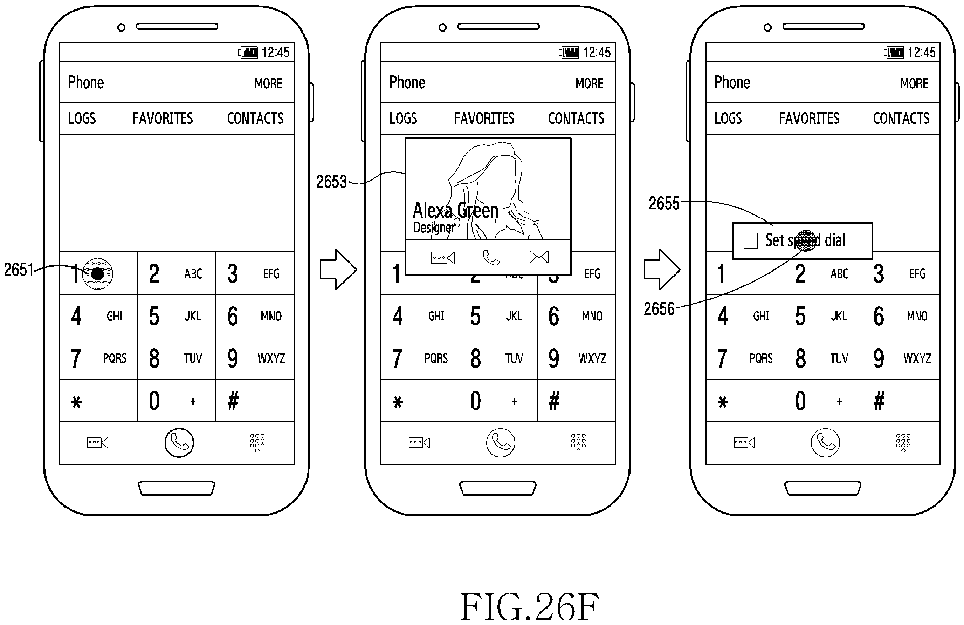

Referring to FIG. 26F, the electronic device may display a screen including a dial pad for inputting a phone number by executing a call application by user input. When touch input 2651 having a strength of pressure or force larger than or equal to a threshold value is detected on a particular button of the dial pad, the electronic device may display a pop-up menu 2653 including contact information mapped to the particular button or a pop-up menu 2655 for mapping a contact to the particular button. For example, when there is a contact mapped to the button "1" of the dial pad, the electronic device may display the pop-up menu 2653 including a contact name mapped to the button "1" of the dial pad, an explanation of the contact, a video call menu item, a voice call menu item, and a message item as illustrated in the second screen of FIG. 26F. In another example, when there is no contact mapped to the button "1" of the dial pad, the electronic device may display the pop-up menu 2655 including a speed dial setting menu item for mapping the contact to the button "1" as illustrated in the third screen of FIG. 26F. At this time, when touch input 2656 is detected on the speed dial setting menu item, the electronic device may display a screen for selecting a particular contact among the contacts registered in the electronic device in order to register the contact in the button "1" of the dial pad.

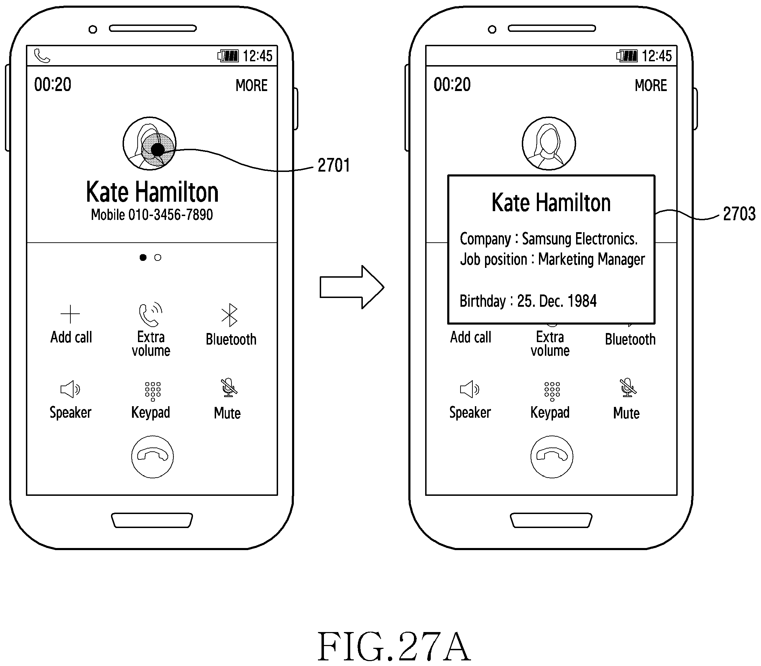

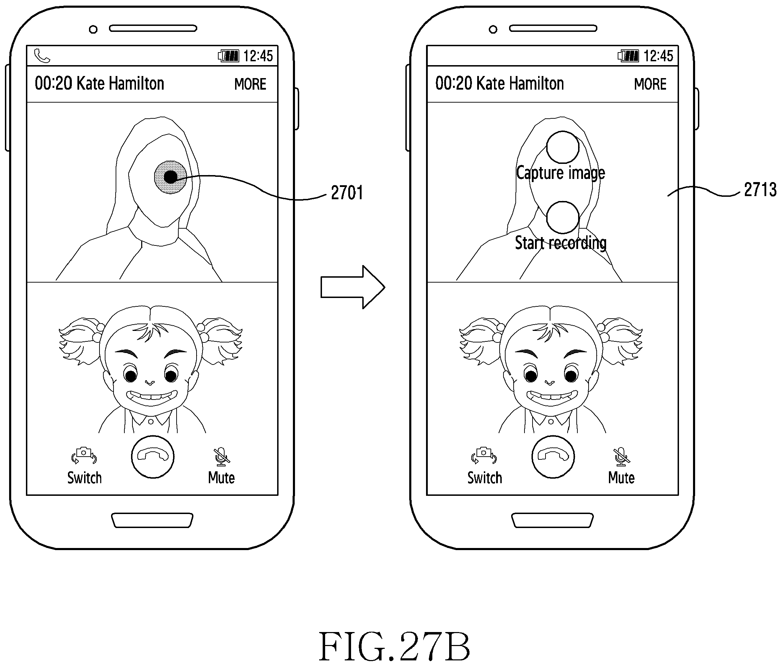

FIGs. 27A and 27B illustrate screen examples in which the electronic device operates on the basis of a touch input type during a call with another electronic device according to various embodiments of the present disclosure.

Referring to FIG. 27A, the electronic device may make a call connection with another user by executing a call application by user input and display a screen indicating that the call connection with another user is being made. When touch input 2701 having a strength of pressure or force larger than or equal to a threshold value is detected in a profile image area of another user displayed on the screen, the electronic device may display a pop-up menu 2703 including contact information of the other use. For example, the pop-up menu 2703 may include information such as a contact name of the other user, and company, position, and birthday of the other user.

Referring to FIG. 27B, the electronic device may make a video call connection with another user by executing a call application by user input and display a screen indicating that the video call connection within another user is being made. When touch input 2711 having a strength of pressure or force larger than or equal to a threshold value is detected in another user's image display area, the electronic device may capture the image of the other user or display a menu item for starting recording as indicated by reference numeral 2713.

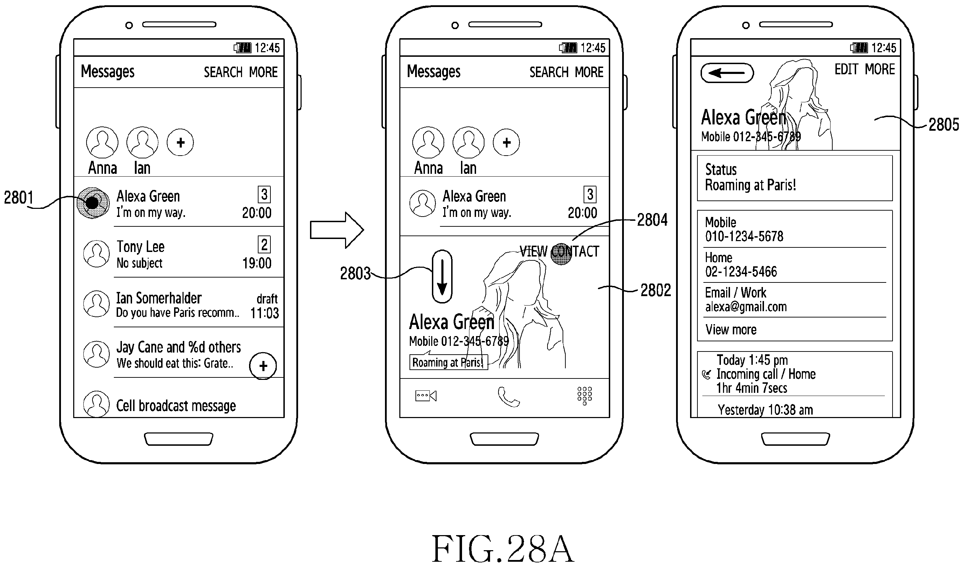

FIGs. 28A to 28G illustrate screen examples in which the electronic device operates on the basis of a touch input type for a message application according to various embodiments of the present disclosure.

Referring to FIG. 28A, the electronic device may display a screen including a message transmission/reception list with other users by executing a message application by user input. When touch input 2801 having a strength of pressure or force larger than or equal to a threshold value is detected in a particular message item area in the message transmission/reception list, the electronic device may display a pop-up window 2802 including a contact image corresponding to a particular message, a contact name (user name), a phone number, a phone number type (for example, a mobile phone, a home phone, or a fax) information, and a contact viewing menu item. At this time, when touch input 2803 of dragging the pop-up window 2802 is detected, the electronic device may remove the pop-up window 2802. Further, when touch input 2804 for the contact viewing menu item is detected, the electronic device may display an entire screen 2805 including information related to a contact corresponding to the particular message as illustrated in the third screen of FIG. 28A.

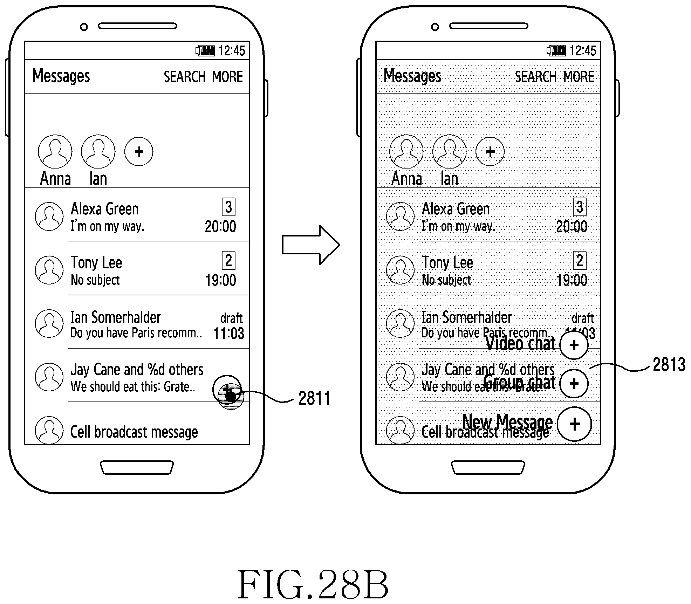

Referring to FIG. 28B, when touch input 2811 having a strength of pressure or force larger than or equal to a threshold value is detected for an FAB in the state in which the message transmission/reception list is displayed as described in FIG. 28A, the electronic device may display a menu 2813 including a video chatting, a group chatting, and a new message creation menu item. At this time, the menu 2813 may be displayed in a window form having predetermined transparency on the entire screen of the electronic device.

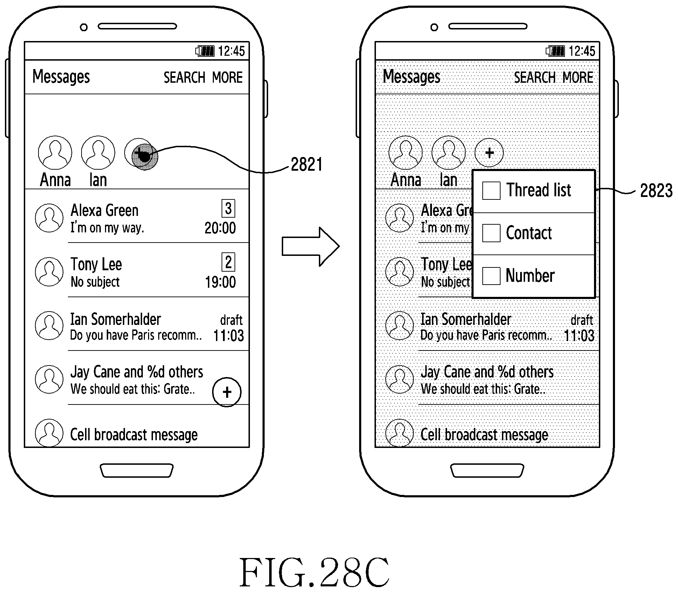

Referring to FIG. 28C, when touch input 2821 having a strength of pressure or force larger than or equal to a threshold value is detected in a button area for adding an important user (preferred user) having a high priority in the state in which the message transmission/reception list is displayed as illustrated in FIG. 28A, the electronic device may display a pop-up menu 2823 including various schemes for adding an important user having a high priority. For example, the pop-up menu 2823 may include an item of "thread list" for adding an important user through a thread list for a text message, an item of "contact" for adding an important user through a contact list registered in the electronic device, and an item of "number" for adding an important user based on a phone number input by the user.

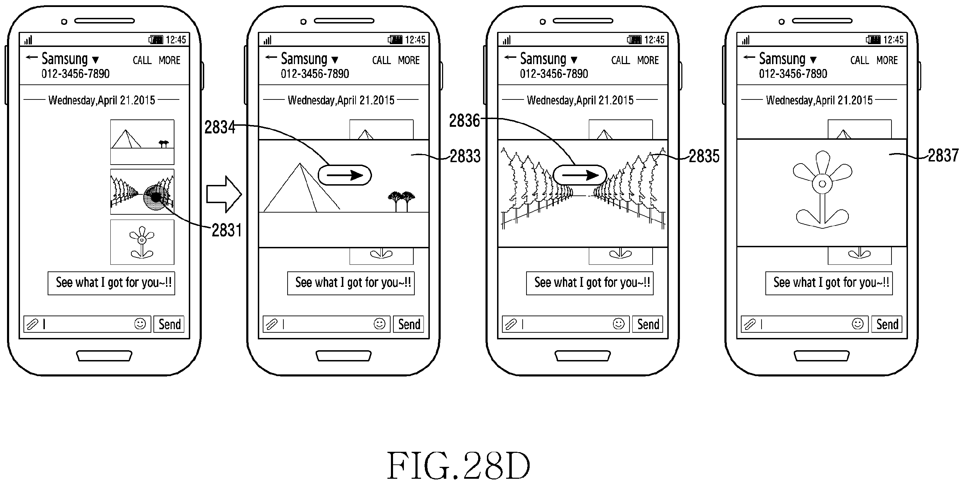

Referring to FIG. 28D, the electronic device may display multimedia message transmitted/received to/from other user by executing a message application by user input. When touch input 2831 having a strength of pressure or force larger than or equal to a threshold value is detected in a particular content area included in the multimedia message, the electronic device may enlarge the content included in the corresponding multimedia message and display the enlarged content in a pop-up window as indicated by reference numeral 2833. At this time, the electronic device may first display the first content included in the multimedia message in the pop-up window as indicated by reference numeral 2833 and, when touch input 2834 of dragging the pop-up window in which the first content is displayed is detected, the electronic device may display the second content included in the multimedia message in the pop-up window as indicated by reference numeral 2835. Further, when touch input 2836 of dragging the pop-up window in which the second content is displayed is detected, the electronic device may display the third content included in the multimedia message in the pop-up window as indicated by reference numeral 2837.

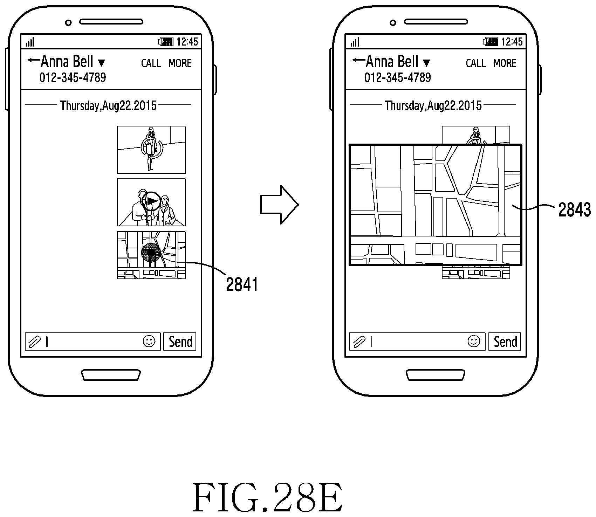

Referring to FIG. 28E, the electronic device may display multimedia message transmitted/received to/from other users by executing a message application by user input. When touch input 2841 having a strength of pressure or force larger than or equal to a threshold value is detected in a map content area included in the multimedia message, the electronic device may enlarge the corresponding map content and display the enlarged map content in a pop-up window as indicated by reference numeral 2843.

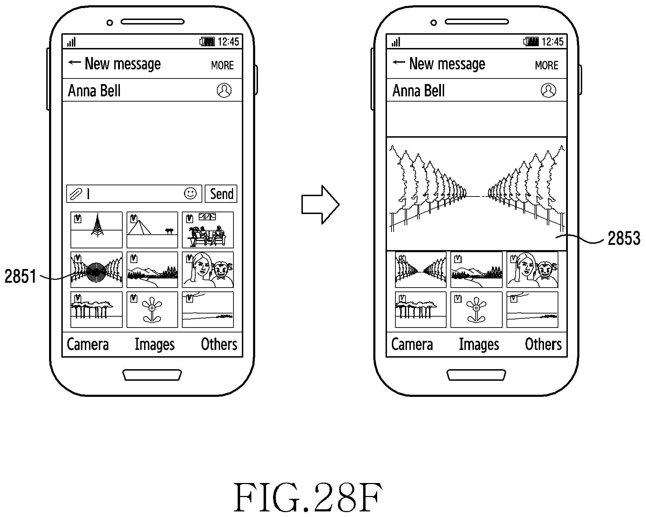

Referring to FIG. 28F, the electronic device may display a list of multimedia contents which can be transmitted to an electronic device of another user by executing a message application by user input. For example, when a file attaching menu item is selected on the message transmission/reception screen, the electronic device may display multimedia contents, which can be transmitted to an electronic device of another user, in the form of thumbnail images. When touch input 2851 having a strength of pressure or force larger than or equal to a threshold value is detected in a list of multimedia contents which can be transmitted to an electronic device of another user, the electronic device may enlarge the corresponding multimedia content and display the enlarged multimedia content in a pop-up window as indicated by reference numeral 2853.

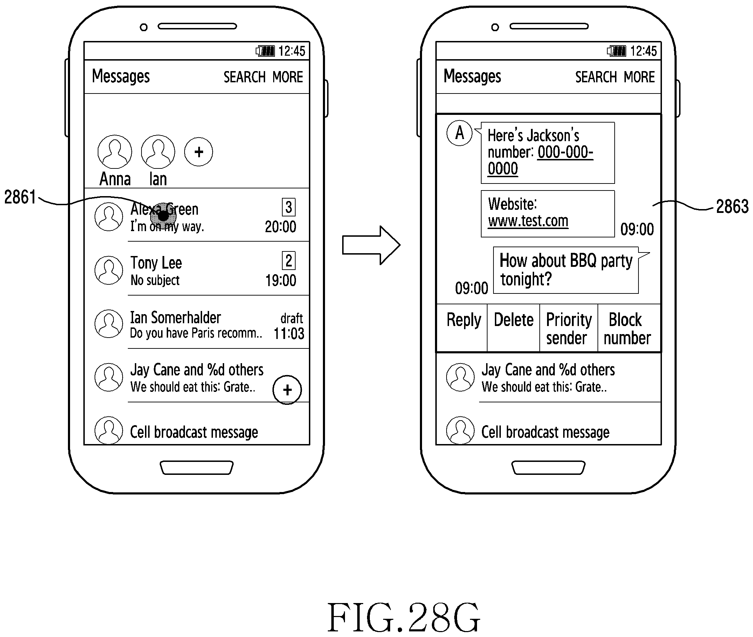

Referring to FIG. 28G, the electronic device may display a screen including a message transmission/reception list with other users by executing a message application by user input. When touch input 2861 having a strength of pressure or force larger than or equal to a threshold value is detected in an area indicating a transmitted/received message with a particular user in the message transmission/reception list is displayed, the electronic device may display a pop-up window 2863 including detailed content of the corresponding transmitted/received message and a quick menu. For example, the quick menu may include an item of "reply" for transmitting a response message to the corresponding user, an item of "delete" for deleting the corresponding transmitted/received message, an item of "priority sender" for registering the corresponding user as an important user having a high priority, and an item of "block number" for blocking a contact of the corresponding user.

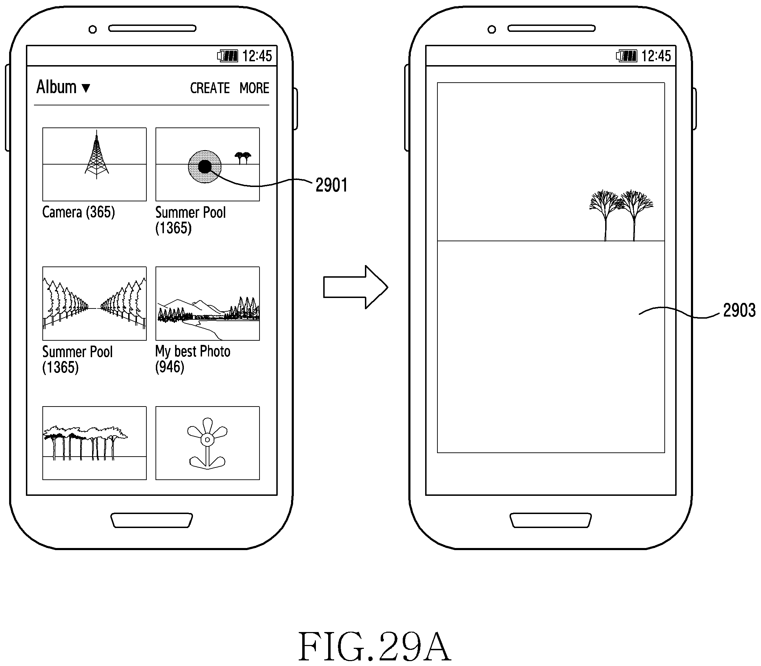

FIGs. 29A to 29G illustrate screen examples in which the electronic device operates on the basis of a touch input type for a gallery application according to various embodiments of the present disclosure.

Referring to FIG. 29A, the electronic device may display a screen indicating an album list stored in the electronic device by executing a gallery application by user input. At this time, the electronic device may display an image of one content (for example, an image of content most recently photographed, an image of content most recently stored, or an image of content most recently accessed) among contents included in each album in the form of thumbnail image of the album. When touch input 2901 having a strength of pressure or force larger than or equal to a threshold value is detected in a thumbnail image area of a particular album, the electronic device may enlarge the corresponding thumbnail image and display the enlarged thumbnail image without entering the corresponding album as indicated by reference numeral 2903. In another example, when touch input 2901 having a strength of pressure or force larger than or equal to a threshold value is detected in a thumbnail image area of a particular album, the electronic device may successively display a plurality of images for a plurality of contents included in the corresponding album in the form of slide show.

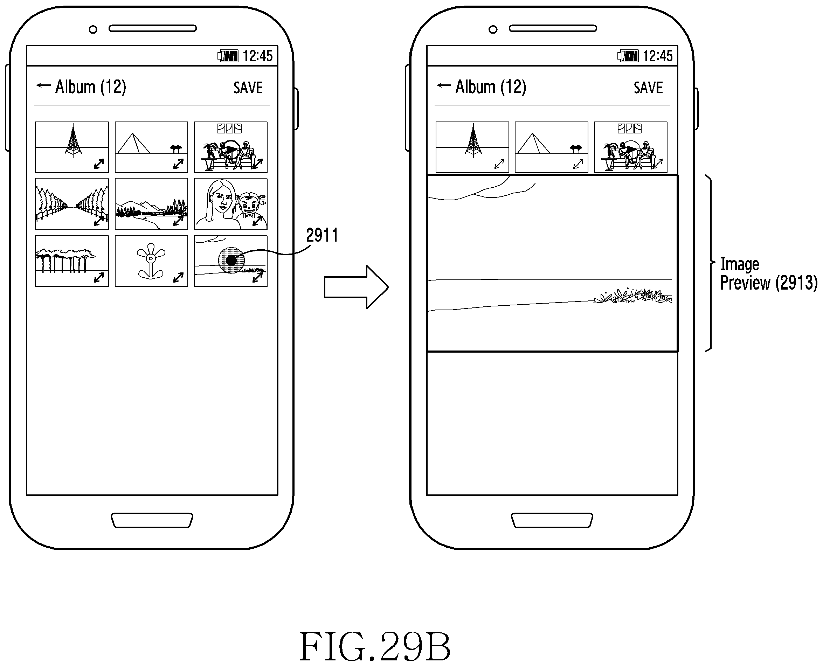

Referring to FIG. 29B, the electronic device may display a screen showing the contents included in the particular album in the form of thumbnail image by executing a gallery application by user input. When touch input 2911 having a strength of pressure or force larger than or equal to a threshold value is detected in a particular thumbnail image area, the electronic device may display a preview image of the corresponding content as indicated by reference numeral 2913.

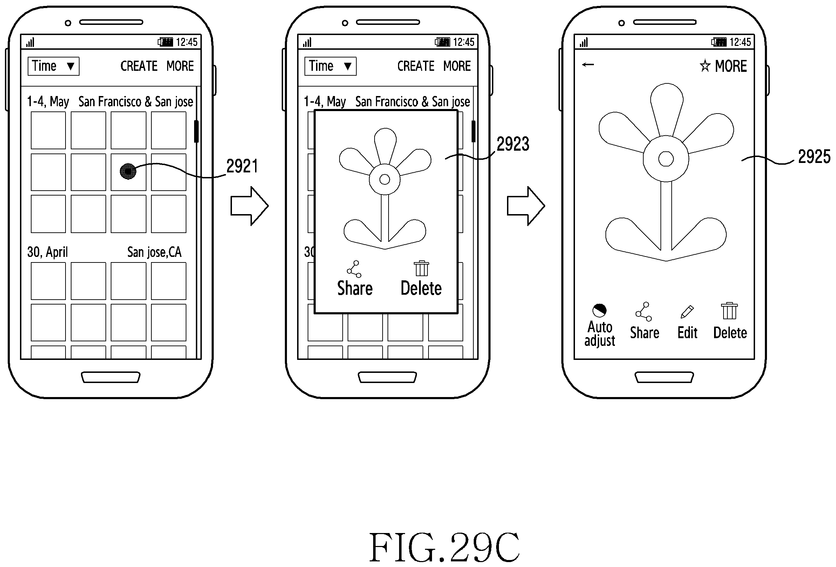

Referring to FIG. 29C, the electronic device may classify the contents stored in the electronic device according to the time and display thumbnail images of the contents classified according to the time by executing a gallery application by user input. When touch input 2921 having a strength of pressure or force larger than or equal to a threshold value is detected in a particular thumbnail image area, the electronic device may display a preview image of the corresponding content in a pop-up window as indicated by reference numeral 2923. At this time, when touch input having a strength of pressure or force smaller than a threshold value is detected for the preview image, the electronic device may display the preview image of the corresponding content on an entire screen as indicated by reference numeral 2925 or reproduce the corresponding content.

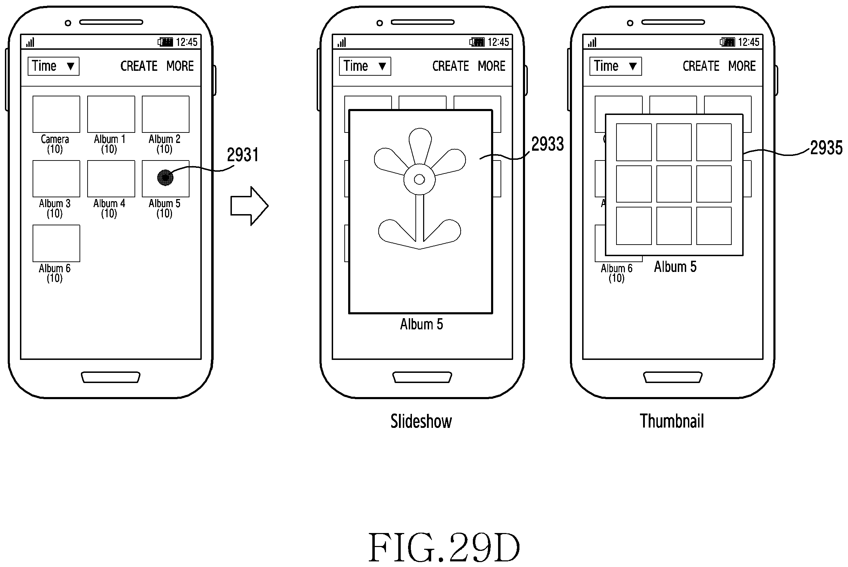

Referring to FIG. 29D, the electronic device may display a screen indicating an album list stored in the electronic device by executing a gallery application by user input. At this time, the electronic device may display an image of one content (for example, an image of content most recently photographed, an image of content most recently stored, or an image of content most recently accessed) among contents included in each album in the form of thumbnail image of the album. When touch input 2931 having a strength of pressure or force larger than or equal to a threshold value is detected in a thumbnail image area of a particular album, the electronic device may enlarge a plurality of images included in the corresponding album and sequentially display the enlarged images in the form of slide show as indicated by reference numeral 2933. In another example, when touch input 2931 having a strength of pressure or force larger than or equal to a threshold value is detected in a thumbnail image area of a particular album, the electronic device may display a plurality of images included in the corresponding album in the form of thumbnail images without entering the corresponding album as indicated by reference numeral 2935.

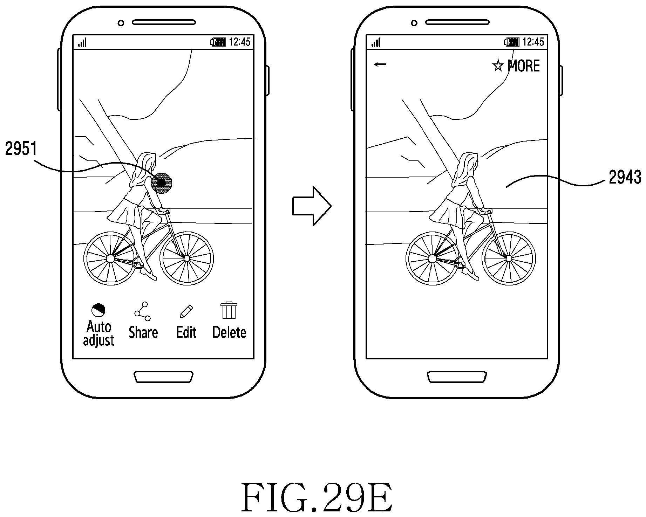

Referring to FIG. 29E, the electronic device may display a preview image of multimedia content (for example, a video, a burst shot, a motion photo, or a motion panorama) stored in the electronic device by executing a gallery application by user input. When touch input 2941 having a strength of pressure or force larger than or equal to a threshold value is detected in a preview image area, the electronic device may directly reproduce and display the corresponding multimedia content without entering an application for reproducing the multimedia content as indicated by reference numeral 2943.

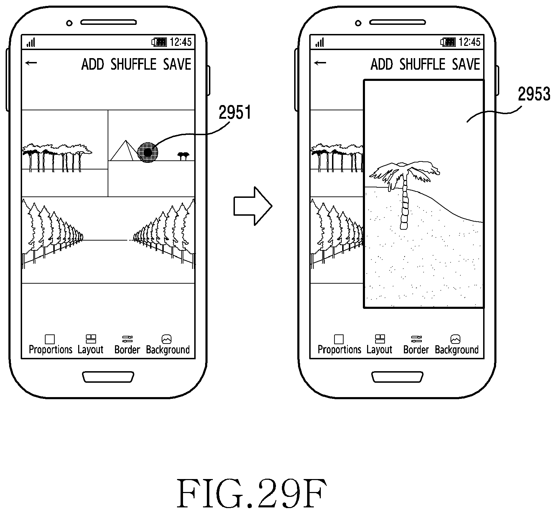

Referring to FIG. 29F, the electronic device may display a collage image by executing a gallery application by user input. When touch input 2951 having a strength of pressure or force larger than or equal to a threshold value is detected in a particular area within the collage image, the electronic device may enlarge and display an image of the corresponding area according to pressure or a predetermined strength as indicated by reference numeral 2953.

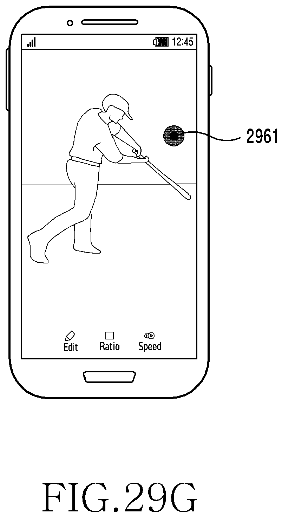

Referring to FIG. 29G, the electronic device may display multimedia content (for example, a moving gif image) by executing a gallery application by user input. When touch input 2961 having a strength of pressure or force larger than or equal to a threshold value is detected in a particular area of the corresponding multimedia content, the electronic device may control a reproduction speed of the corresponding multimedia content according to pressure or a predetermined strength and display the controlled multimedia content. For example, the electronic device may control the reproduction speed of the corresponding multimedia content to be faster as the pressure strength of the touch input detected for the corresponding multimedia content is larger, and control the reproduction speed of the corresponding multimedia content to be slower as the pressure strength is smaller.

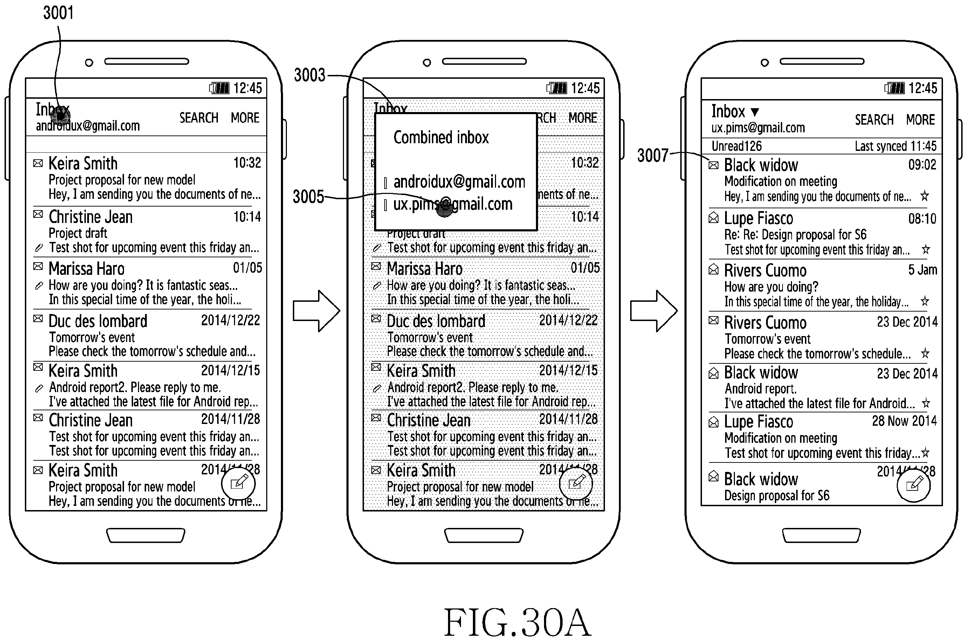

FIGs. 30A to 30D illustrate screen examples in which the electronic device operates on the basis of a touch input type for an email application according to various embodiments of the present disclosure.

Referring to FIG. 30A, the electronic device may display an inbox screen including account information and a received mail list by executing an email application by user input. When touch input 3001 having a strength of pressure or force larger than or equal to a threshold value is detected in an area in which account information is displayed, the electronic device may display a pop-up window 3003 including a list indicating one or more accounts registered in the email application. For example, when two accounts (for example, androidus@gmail.com and ux.pims@gmail.com) are registered in the email application, the electronic device may display the pop-up window 3003 including information on the two accounts. When touch input 3005 is detected for a particular account included in the pop-up window 3003, the electronic device may display an inbox screen including account information on the particular account on which the touch input is detected and a received mail list for the particular account for which the touch input is detected.

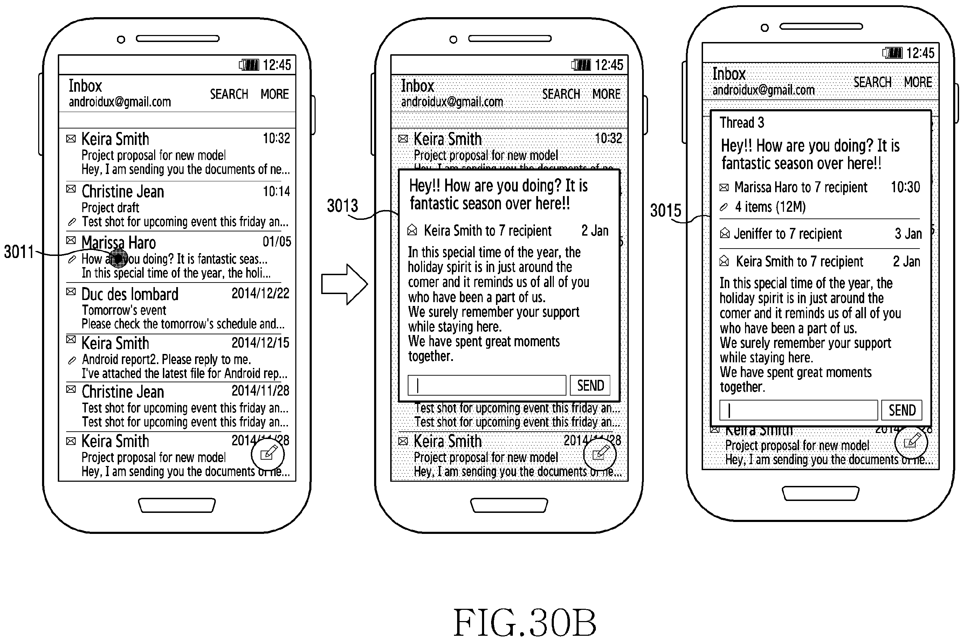

Referring to FIG. 30B, the electronic device may display the inbox screen including account information and the received mail list by executing an email application by user input. When touch input 3011 having a strength of pressure or force larger than or equal to a threshold value is detected in an area in which a particular received mail list is displayed, the electronic device may display a pop-up window 3013 including a preview for the corresponding email. At this time, the pop-up window 3013 may include a file list attached to the corresponding email and a user interface for providing a quick response to the corresponding email. According to another embodiment, when touch input 3011 having a strength of pressure or force larger than or equal to a threshold value is detected in an area in which a particular received mail item is displayed, the electronic device may search for emails relate to the corresponding email and display a pop-up window 3015 including a preview of a representative email among the corresponding email and the emails related thereto. At this time the pop-up window 3013 may include a file list attached to the representative email, a user interface for providing a quick response to the representative email, and information on emails related to the representative email. The representative email may be the oldest email, the most recent email, or an important email among the corresponding email and emails related thereto.

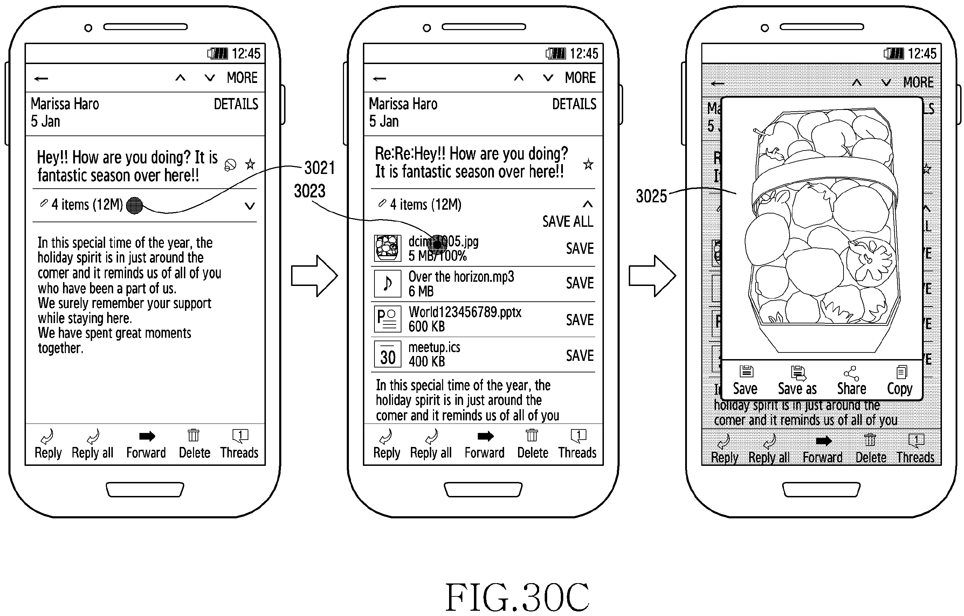

Referring to FIG. 30C, the electronic device may display a particular email included in inbox or outbox on the screen by executing an email application by user input. When touch input 3021 is detected in an area indicating the existence of files attached to the email displayed on the screen, the electronic device may display an attached file list. When touch input 3023 having a strength of pressure or force larger than or equal to a threshold value is detected in one attached file area of the attached file list, the electronic device may display a pop-up window 3025 including a preview of the corresponding attached file. At this time, the pop-up window 3025 may include various menu items for managing the corresponding attached file. For example, the pop-up window 3025 may include an item of "save" for storing the corresponding attached file, an item of "save as" for storing the corresponding attached file as another name, an item of "share" for sharing the corresponding attached file with another electronic device, and an item of "copy" for copying the corresponding attached file. According to another embodiment, when touch input having a strength of pressure or force larger than or equal to a threshold value is detected in an area indicating the existence of files attached to the email displayed on the screen, the electronic device may display the pop-up window 3025 including the preview of one attached file among the attached files without opening the attached file list.

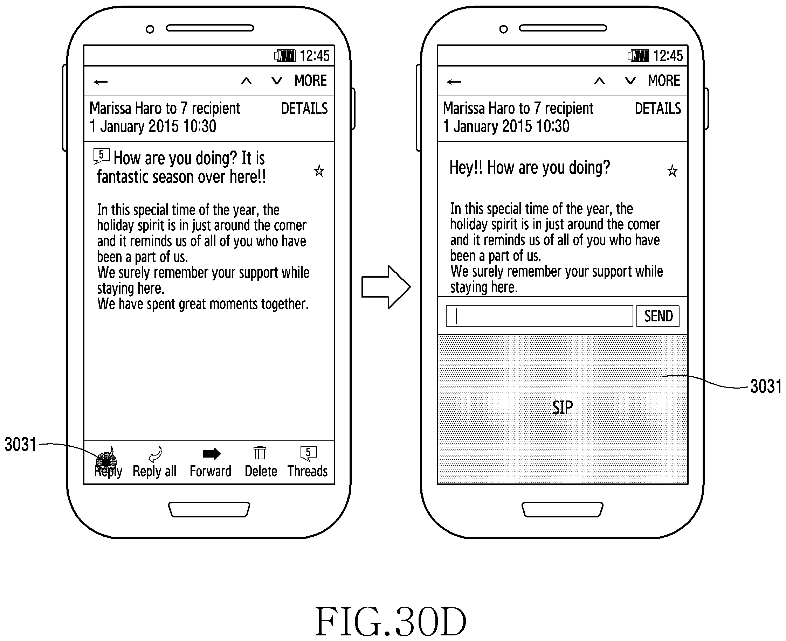

Referring to FIG. 30D, the electronic device may display a particular email included in inbox or outbox on the screen by executing an email application by user input. When touch input 3031 having a strength of pressure or force larger than or equal to a threshold value is detected on an item of "replay" for transmitting a response email of a particular email, the electronic device may additionally display a user interface 3033 for providing a quick response in an partial area of the screen without switching the screen. For example, the user interface 3033 may include a soft keypad area, an input character display area, and a transmission key button.

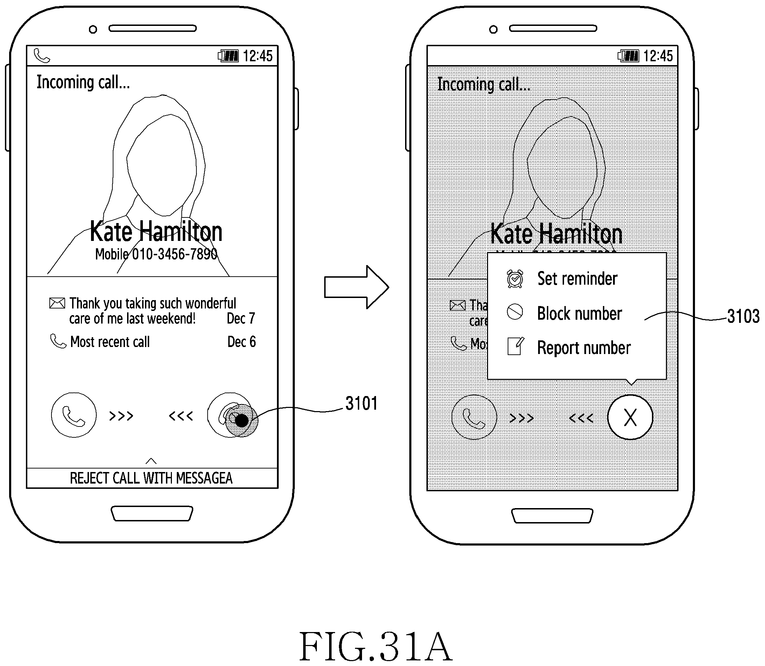

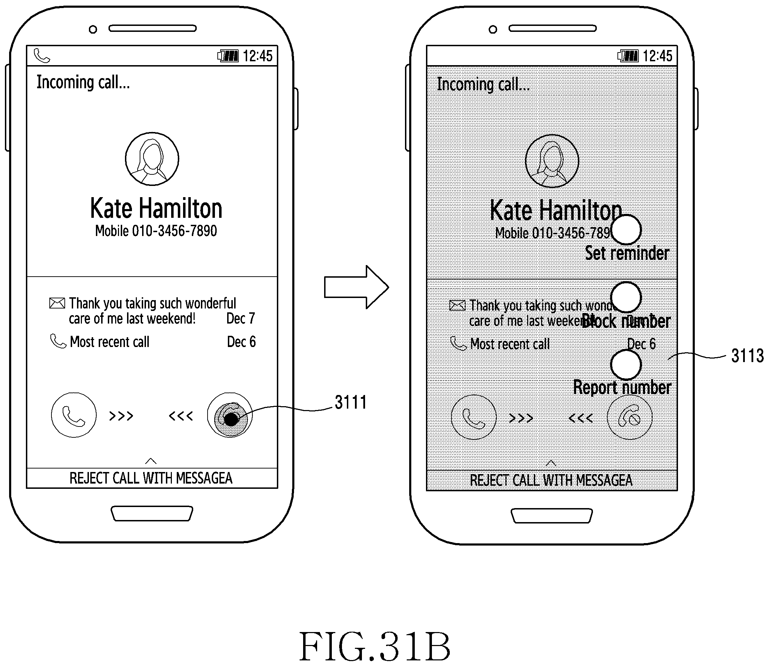

FIGs. 31A and 31B illustrate screen examples in which the electronic device operates on the basis of a touch input type for a call reception application according to various embodiments of the present disclosure.

Referring to FIG. 31A, when an incoming call from another electronic device is generated, the electronic device may display a call reception screen indicating the incoming call is generated. When touch input 3101 having a strength of pressure or force larger than or equal to a threshold value is detected in an area in which an icon for rejecting call reception is displayed on the call reception screen, the electronic device may display a pop-up menu 3103 including various functions related to the call reception rejection. For example, the pop-up menu 3103 may include an item of "set reminder" for informing the generation of the call reception after a predetermined time passes, an item of "block number" for blocking the corresponding phone number, and an item of "report number" for reporting the corresponding phone number to another electronic device.

Referring to FIG. 31B, when an incoming call from another electronic device is generated, the electronic device may display a call reception screen indicating the generation of the incoming call. When touch input 3111 having a strength of pressure or force larger than or equal to a threshold value is detected in an area in which an icon for rejecting an incoming call is displayed on the call reception screen, the electronic device may display a menu 3113 including various functions related to the call reception rejection. At this time, the menu 3113 may be displayed in a window form having predetermined transparency on the entire screen of the electronic device. The menu 3113 may include an item of "set reminder", an item of "block number", and an item of "report number".

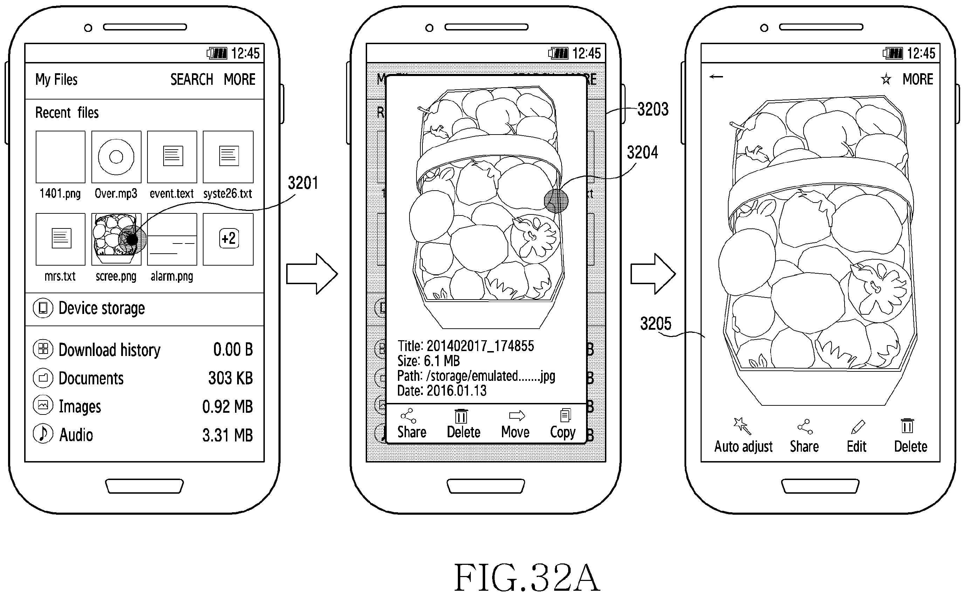

FIGs. 32A to 32E illustrate screen examples in which the electronic device operates on the basis of a touch input type for an application of displaying a content list according to various embodiments of the present disclosure.

Referring to FIG. 32A, the electronic device may display an execution screen of a my file application by user input. According to an embodiment, the execution screen of the my file application may include thumbnail images for recent files, an item of "device storage", an item of "download history", an item of "documents", an item of images", and an item of "audio". When touch input 3201 having a strength of pressure or force larger than or equal to a threshold value is detected in an area in which a thumbnail image for a recent file is displayed, the electronic device may display a pop-up window 3203 for providing a preview of the corresponding file. According to an embodiment, the pop-up window 3203 may include information such as a preview image of the corresponding file, a title (or name) of the corresponding file, a size, a stored location, and a stored date, and further include menu items for managing the corresponding file. For example, the pop-up window 3203 may include an item of "share" for sharing the corresponding file with another electronic device, an item of "delete" for deleting the corresponding file, an item of "move" for moving the corresponding file to another location, and an item of "copy" for copying the corresponding file. When touch input 3204 for the preview image is detected, the electronic device may display an execution result of the corresponding file on the screen as indicated by reference numeral 3205 by executing the corresponding file through an application corresponding to the corresponding file.

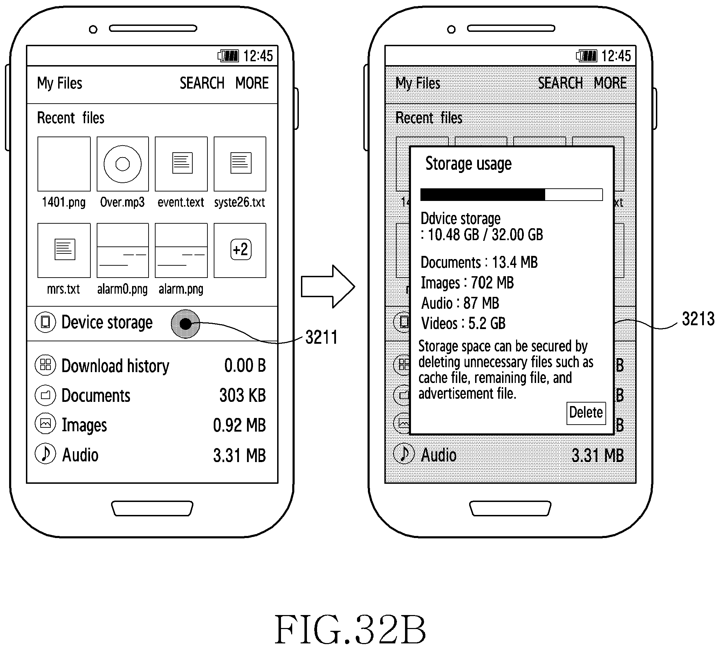

Referring to FIG. 32B, the electronic device may display the execution screen of the my file application by user input. According to an embodiment, the execution screen of the my file application may include thumbnail images for recent files, an item of capacity of the electronic device, a download history item, a document item, an image item, and an audio item. When touch input 3211 having a strength of pressure or force larger than or equal to a threshold value is detected in an area in which the item of "device storage" is displayed, the electronic device may display a pop-up window 3213 for providing information on storage usage of the electronic device and a function of deleting unnecessary files.

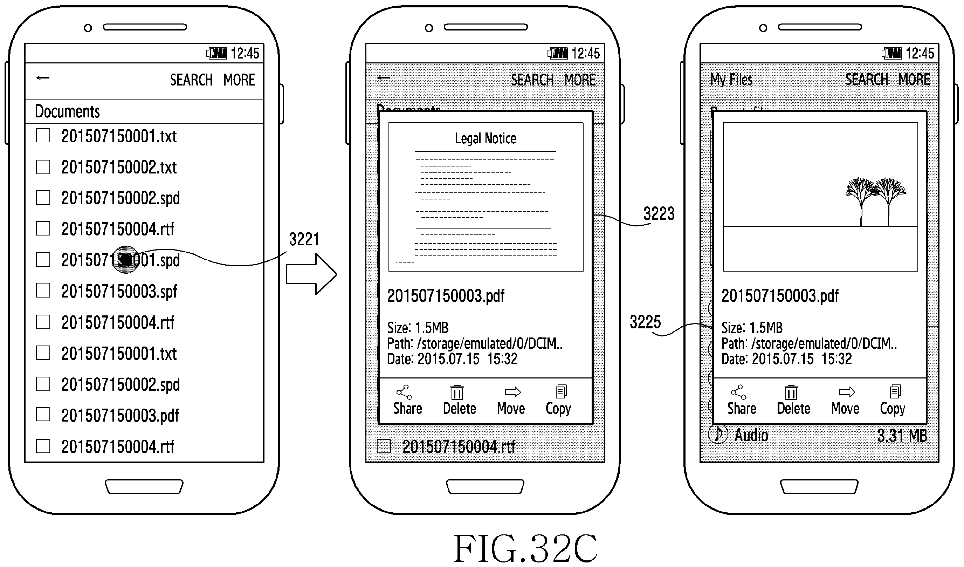

Referring to FIG. 32C, the electronic device may execute the my file application by user input and display a list indicating files stored in the electronic device. When touch input 3221 having a strength of pressure or force larger than or equal to a threshold value is detected in an area indicating a particular file, the electronic device may display a pop-up window 3223 or 3225 for providing a preview of the corresponding file. According to an embodiment, the pop-up windows may include a preview image of the corresponding file, a title (or name), a size, a stored location, and a stored data of the corresponding file, and further include menu items for managing the corresponding file. For example, the pop-up window 3223 may include an item of "share", an item of "delete", an item of "move", an item of "copy", and an item of "save". According to an embodiment, when the corresponding file is a document file, the electronic device may detect touch input for a preview image included in the pop-up image 3223 and perform a function of turning the page of the corresponding document file. According to another embodiment, when the corresponding file is an audio file, the electronic device may provide a preview function together with the preview image through the pop-up window 3223 or 3225. According to another embodiment, when the corresponding file is a video file, the electronic device may provide a video playback function through the pop-up window 3223 or 3225. According to another embodiment, when the corresponding file is a file of which the preview image cannot be provided, the electronic device may provide an icon (for example, an installation icon) related to the function of the corresponding file through the pop-up window 3223 or 3225.

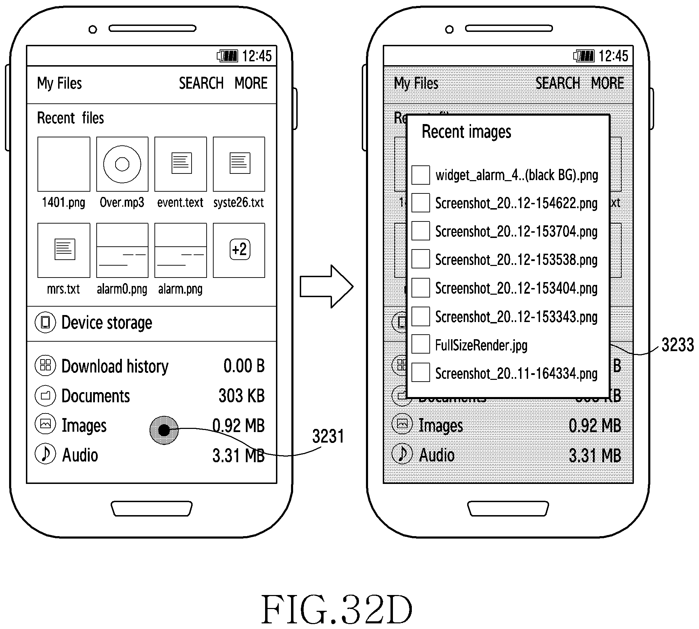

Referring to FIG. 32D, the electronic device may display the execution screen of the my file application by user input. According to an embodiment, the execution screen of the my file application may include thumbnail images for recent files, an item of capacity of the electronic device, a download history item, a document item, an image item, and an audio item. When touch input 3231 having a strength of pressure or force larger than or equal to a threshold value is detected in an area in which the item of "images" is displayed, the electronic device may display a pop-up window 3223 including a list of recently stored images. According to an embodiment, the pop-up window 3203 may include a thumbnail image of each of the recently stored images.

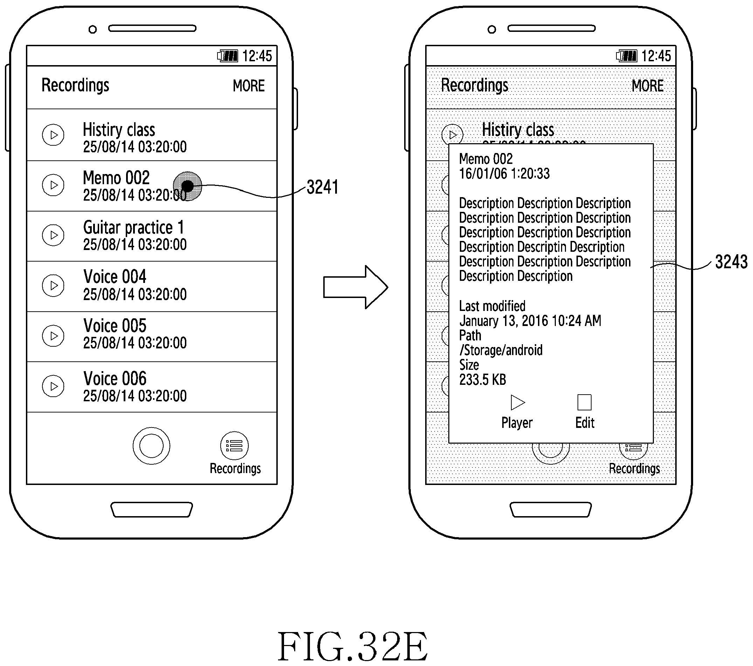

Referring to FIG. 32E, the electronic device may execute the my file application by user input and display a list indicating voice files stored in the electronic device. According to another embodiment, the electronic device may display a list indicating voice files stored in the electronic device by executing a voice recording application by user input. When touch input 3241 having a strength of pressure or force larger than or equal to a threshold value is detected in an area in which information on a particular voice file is displayed, the electronic device may display a pop-up window 3243 including detailed information on the corresponding voice file (for example, information on the content contained in the voice file, information on a time at which the voice file is created, information on a time at which the voice file is lastly modified, a stored location, and a size) without reproducing the corresponding voice file. In addition, the pop-up window 3243 may include menu items (for example, an item of "player" and an item of "edit") for managing the corresponding voice file.

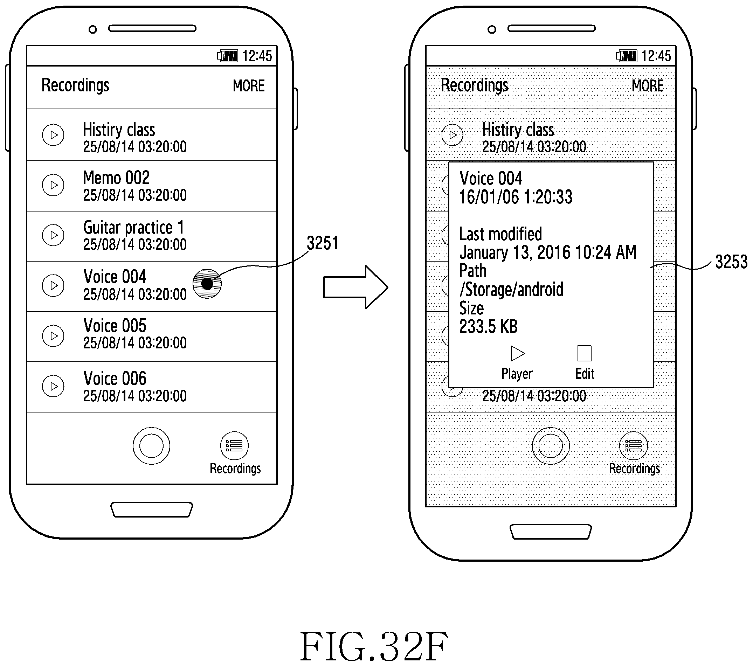

Referring to FIG. 32F, the electronic device may display the list indicating voice files as illustrated in FIG. 32E. When touch input 3251 having a strength of pressure or force larger than or equal to a threshold value is detected in an area in which information on a particular voice file is displayed, the electronic device may display a pop-up window 3243 including brief information on the corresponding voice file (for example, information on a time at which the voice file is created, information on a time at which the voice file is lastly modified, a stored location, and a size) without reproducing the corresponding voice file. In addition, the pop-up window 3253 may include menu items (for example, an item of "player" and an item of "edit") for managing the corresponding voice file.

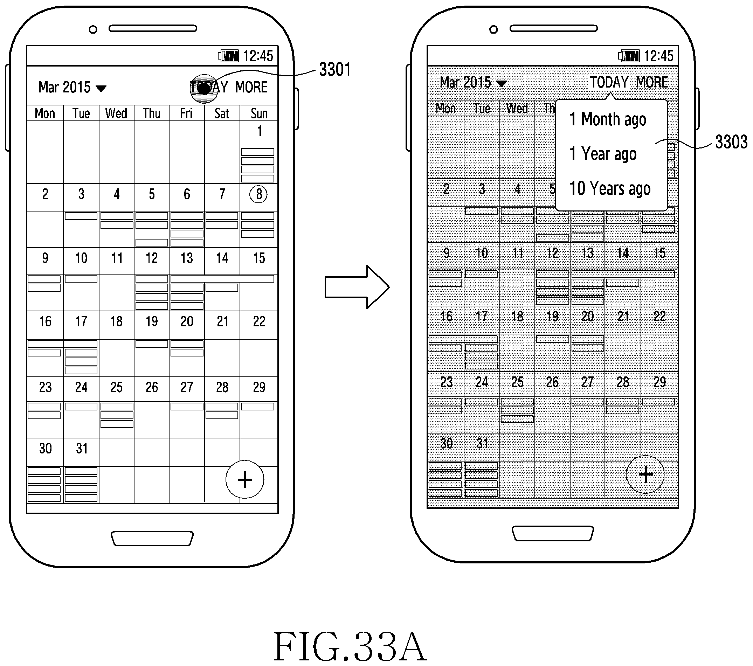

FIGs. 33A to 33G illustrate screen examples in which the electronic device operates on the basis of a touch input type for a calendar application according to various embodiments of the present disclosure.

Referring to FIG. 33A, the electronic device may display an execution screen of the calendar application by user input. When touch input 3301 having a strength of pressure or force larger than or equal to a threshold value is detected in a today button area on the execution screen of the calendar application, the electronic device may display a pop-up menu 3303 for changing the date. The pop-up menu 3303 may include items (for example, 1 month ago, 1 year ago, and 10 years ago) for moving the date by a preset period from today. According to another embodiment, when touch input having a strength of pressure or force larger than or equal to a threshold value is detected within the execution screen of the calendar application, the electronic device may display the pop-up menu 3303 for changing the date.

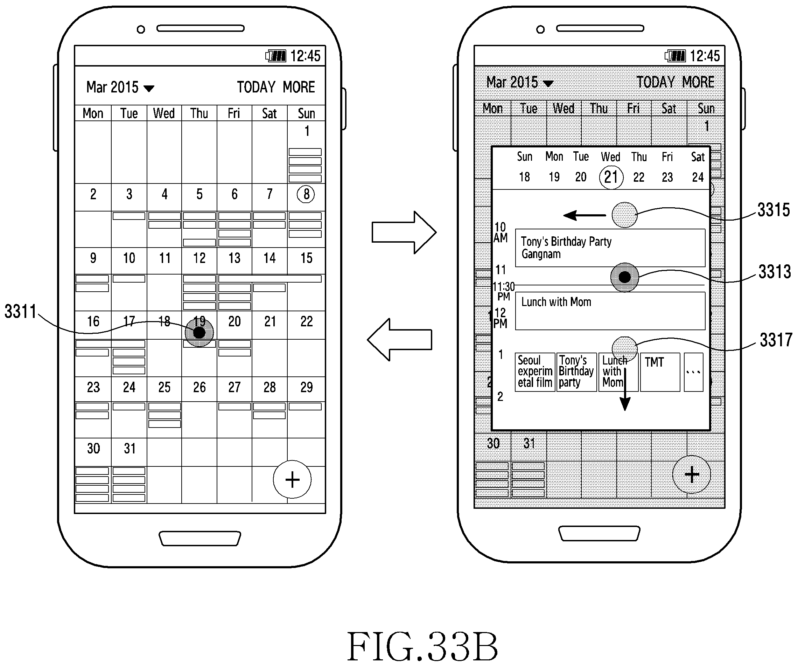

Referring to FIG. 33B, the electronic device may display the execution screen of the calendar application by user input. When touch input 3311 having a strength of pressure or force larger than or equal to a threshold value is detected in a particular date area on the execution screen of the calendar application, the electronic device may display a pop-up window 3315 including a hourly schedule of the corresponding date. According to an embodiment, when touch input 3313 having a strength of pressure or force larger than a threshold value is detected in a time area in which there is no schedule in the pop-up window 3315, the electronic device may perform a function of inputting a schedule in the corresponding time area. According to another embodiment, when touch input 3313 having a strength of pressure or force larger than or equal to a threshold value is detected in a time area in which a schedule exists in the pop-up window 3315, the electronic device may select the schedule mapped to the corresponding time area. According to another embodiment, when a drag touch 3315 in a left/right direction is detected in the pop-up window 3315, the electronic device may display a hourly schedule of the date corresponding to the corresponding direction in the pop-up window 3315. According to another embodiment, when a drag touch 3317 in an up/down direction is detected in the pop-up window 3315, the electronic device may scroll the hourly schedule screen in a direction corresponding to the drag direction and display the scrolled schedule screen in the pop-up window 3315.

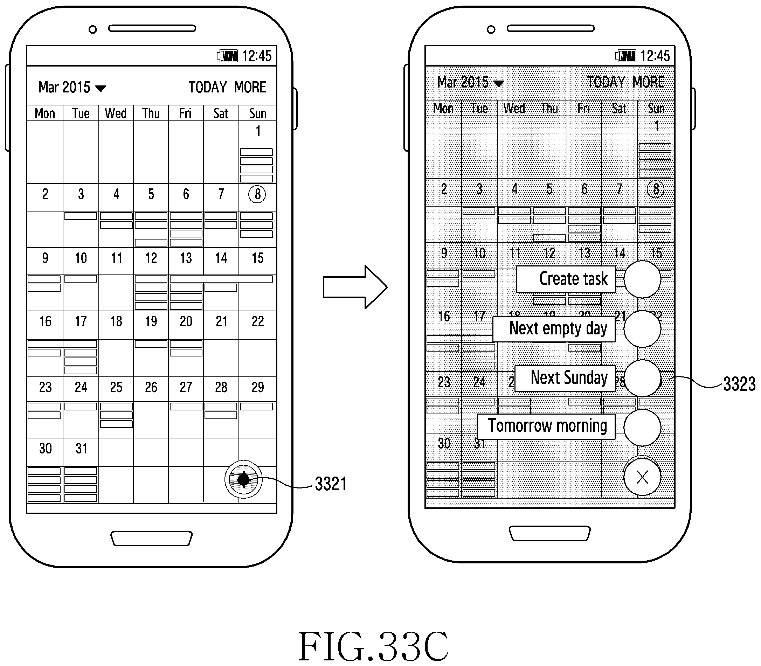

Referring to FIG. 33C, the electronic device may display the execution screen of the calendar application by user input. When touch input 3321 having a strength of pressure or force larger than or equal to a threshold value is detected in an FAB area on the execution screen of the calendar application, the electronic device may display a menu 3323 including a recommended date and/or time to which the schedule is input. At this time, the menu 2523 may be displayed in a window form having predetermined transparency on the entire screen of the electronic device. The menu 2523 may include a date and/or a time to which the schedule can be input as the recommended date and/or time on the basis of the current date and time information. According to an embodiment, the menu 2523 may include an item of a shortcut for inputting a task.

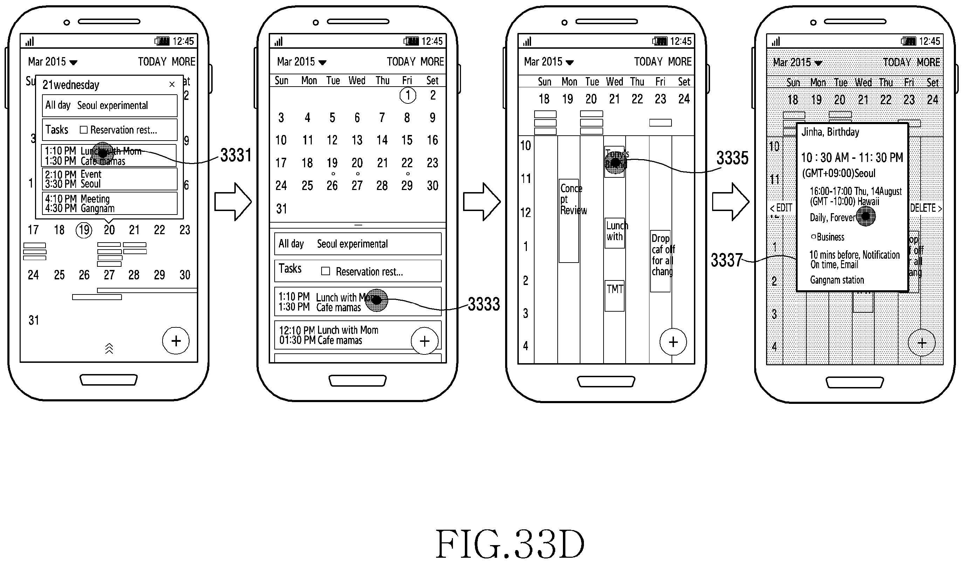

Referring to FIG. 33D, the electronic device may display the execution screen of the calendar application by user input. When touch inputs 3331, 3333, and 3335 having a strength of pressure or force larger than or equal to a threshold value are detected for a particular schedule in the state in which at least one schedule for a particular date is displayed as illustrated in first to third screens of FIG. 33D, the electronic device may display a pop-up window 3337 including detailed information for the corresponding schedule. For example, the pop-up window 3337 may include a start time, an end time, a place, a purpose, and notification information of the corresponding schedule as detailed content of the corresponding schedule.

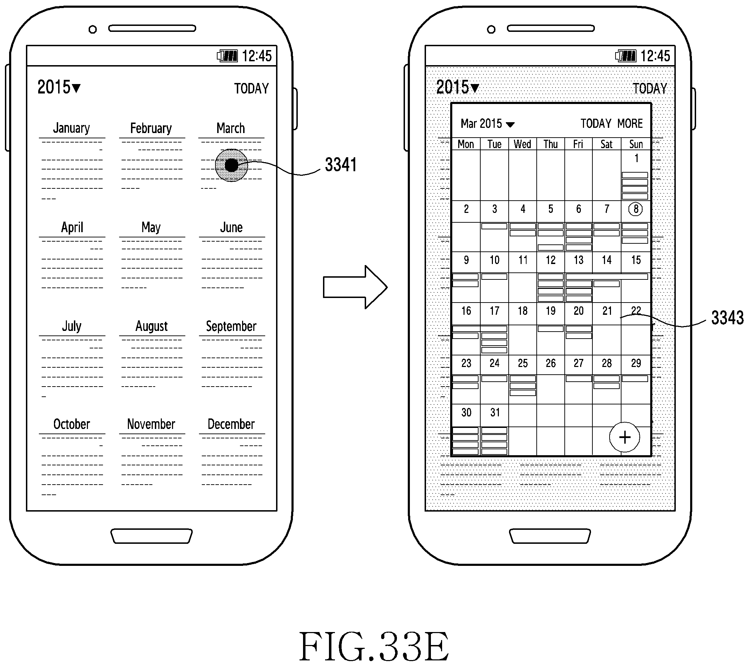

Referring to FIG. 33E, the electronic device may display the execution screen of the calendar application by user input. When touch input 3341 having a strength of pressure or force larger than or equal to a threshold value is detected in an area in which a particular month is displayed in the state in which a monthly calendar in a particular year is displayed as illustrated in the first screen of FIG. 33E, the electronic device may display a pop-up window 3353 including a preview image indicating a schedule on the corresponding month.

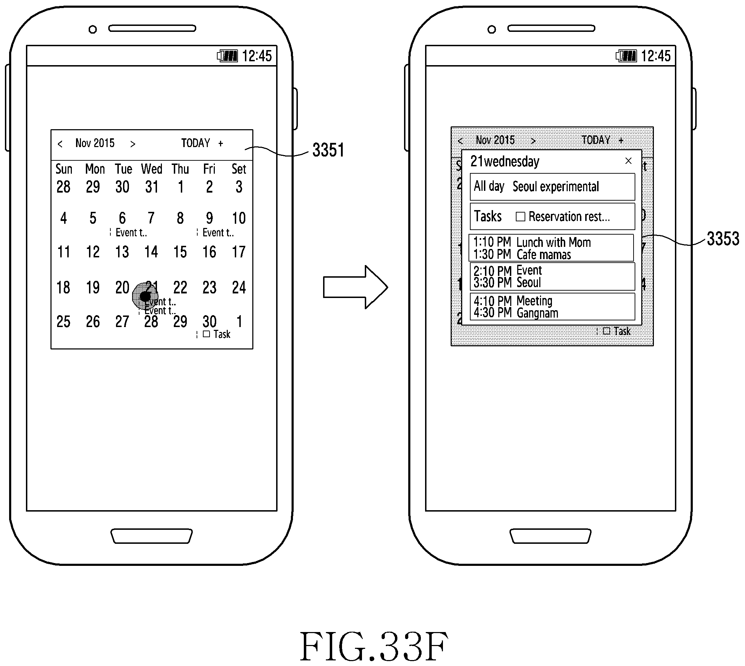

Referring to FIG. 33F, the electronic device may display the execution screen of the calendar application by user input. When touch input 3351 having a strength of pressure or force larger than or equal to a threshold value is detected in an area in which a particular date is displayed in the state in a calendar on a particular month is displayed as illustrated in the first screen of FIG. 33F, the electronic device may display a pop-up window 3363 including a preview image indicating a schedule on the corresponding date.

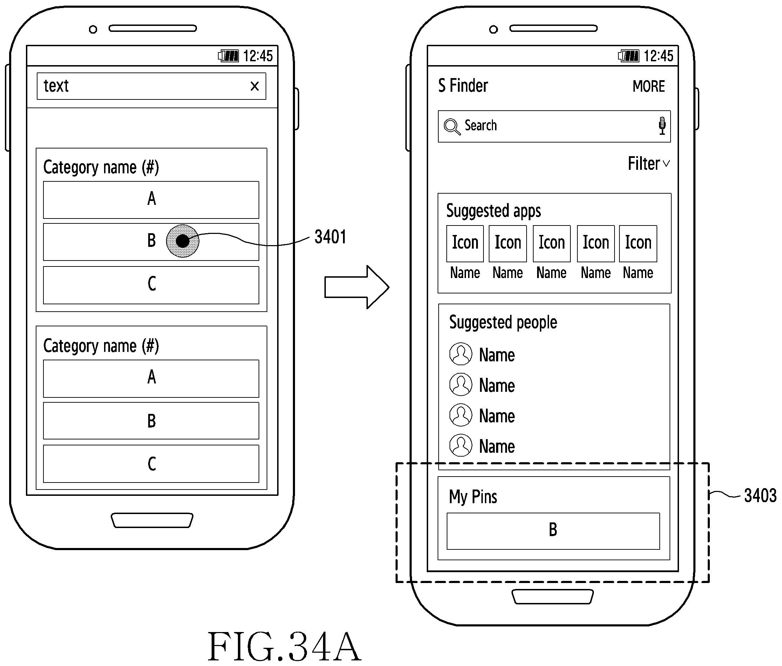

FIGs. 34A to 34C illustrate screen examples in which the electronic device operates on the basis of a touch input type for a search application according to various embodiments of the present disclosure.

Referring to FIG. 34A, the electronic device may execute a search application by user input and display a search result screen for text input by the user. The electronic device may display search results for the corresponding text divided for each category on the search result screen. When touch input 3401 having a strength of pressure or force larger than or equal to a threshold value is detected for an item belonging to a particular category, the electronic device may fix the corresponding item to a predetermined area (for example, a lower area) of the screen as indicated by reference numeral 3403. For example, since the corresponding item is fixed to the predetermined area, the corresponding item may be continuously displayed in the predetermined area of the screen even though the electronic device returns to the previous screen by user input.

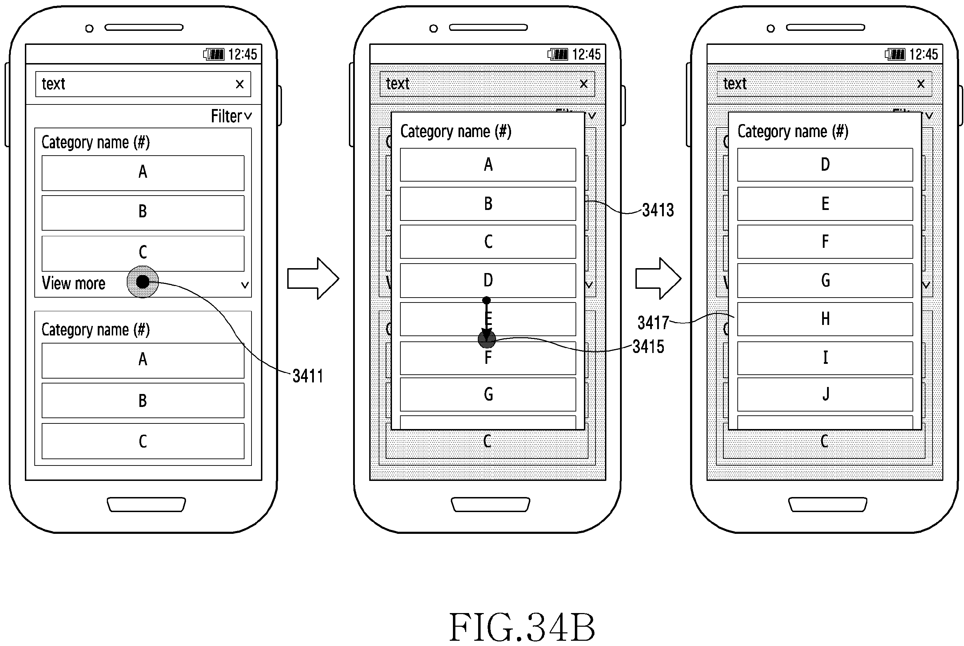

Referring to FIG. 34B, the electronic device may execute the search application by user input and display search results for the corresponding text divided for each category on the search result screen as described in FIG. 34A. When touch input 3411 having a strength of pressure or force larger than or equal to a threshold value is detected for an item of "view more" for further viewing the search result of a particular category, the electronic device may display a pop-up window 3413 including search results of the corresponding category. When a drag touch in a particular direction is detected in the pop-up window 3413, the electronic device may scroll search results in the corresponding direction and display the scrolled search results as indicated by reference numeral 3417.

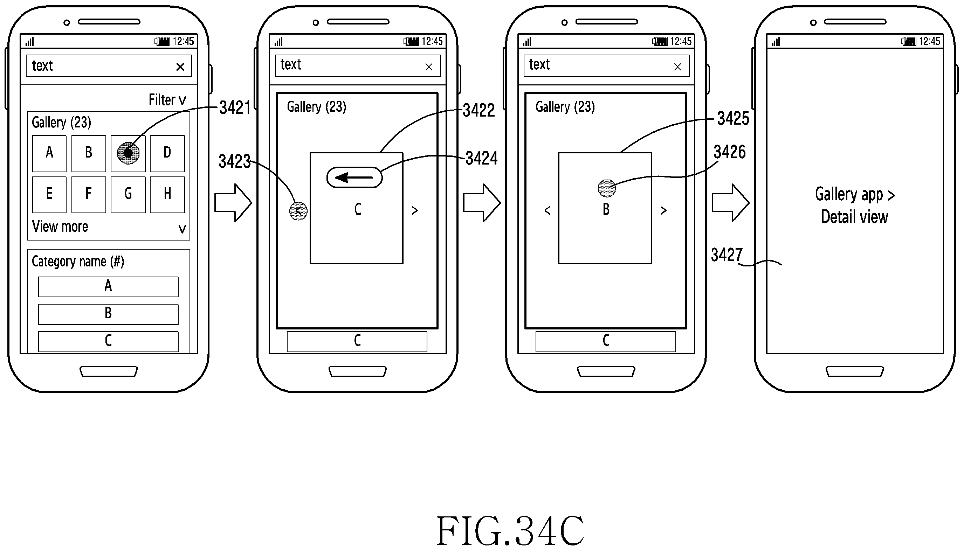

Referring to FIG. 34C, the electronic device may execute the search application by user input and display search results for the corresponding text divided for each category on the search result screen as described in FIGs. 34A and 34C. For example, when a plurality of multimedia contents (for example, videos and photos) is found by searching for particular text, the electronic device may classify the plurality of found multimedia contents as a gallery category and display thumbnail images of the plurality of multimedia contents belonging to the gallery category. When touch input 3421 having a strength of pressure or force larger than or equal to a threshold value is detected in a thumbnail image area of the gallery category, the electronic device may display a pop-up window 3422 for providing a preview for the corresponding multimedia content. In addition, the pop-up window 3422 may include operation buttons for reproducing and managing the corresponding multimedia content. When a drag touch 3424 in a particular direction is detected in the pop-up window 3422 or when a touch 3423 for a button indicating movement in the particular direction is detected, the electronic device may display multimedia content corresponding to the corresponding direction in a pop-up window 3425. According to an embodiment, when a touch 3426 is detected in the pop-up window 3422, the electronic device may execute an application for reproducing the corresponding multimedia content and reproduce the corresponding multimedia content. Although the gallery category has been described as an example, the electronic device may perform the above-described operation for content belonging to memo, contact, message, and music categories.

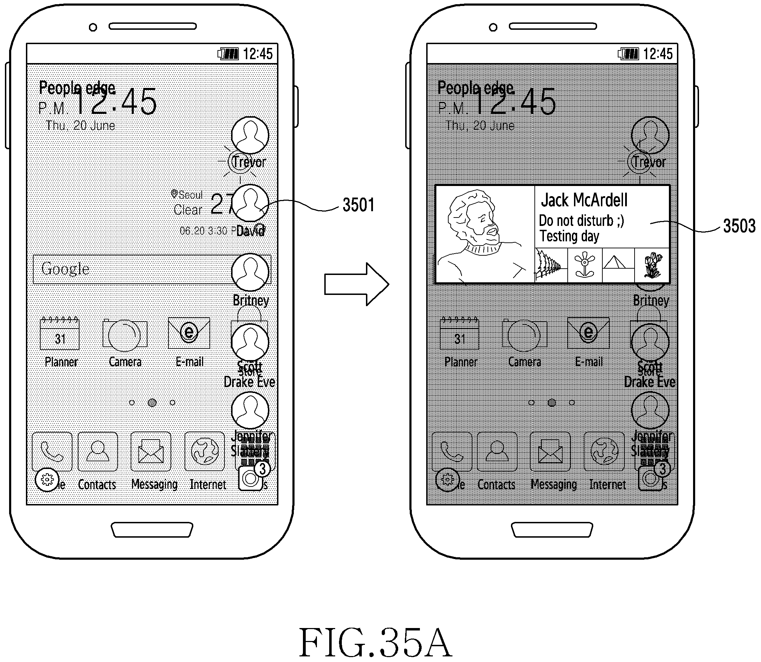

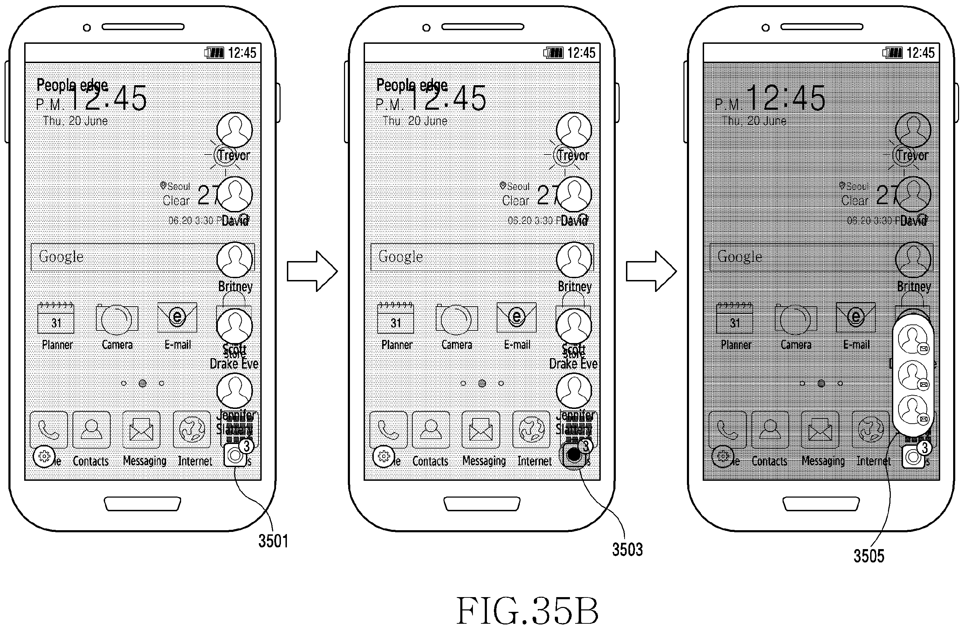

FIGs. 35A and 35B illustrate screen examples in which the electronic device operates on the basis of a touch input type for a contact application displayed in an edge area according to various embodiments of the present disclosure.

Referring to FIG. 35A, the electronic device may display predetermined contacts in the edge area. When touch input 3501 having a strength of pressure or force larger than or equal to a threshold value is detected in a particular contact area displayed in the edge area, the electronic device may display a pop-up window 3503 including information on the corresponding contact. For example, the electronic device may display the pop-up window 3503 including a profile photo, a contact name, and status information of the corresponding contact.

Referring to FIG. 35B, the electronic device may display predetermined contacts and an icon 3511 indicating the number of events occurring in the electronic device, which are related to the contacts together in the edge area. For example, the events occurring in the electronic device, which are related to the contacts, may include call reception, message reception, mail reception, and appointed time notification. When touch input 3513 having a strength of pressure or force larger than or equal to a threshold value is detected in an area of the icon 3511 indicating the number of events occurring in the electronic device, the electronic device may display a pop-up window 3515 indicating the occurring event and the contact for which the event occurs. For example, the electronic device may receive a text message from a first contact, receive multimedia content from a second contact, and display the pop-up window 3515 indicating the presence of a missing call from a third contact. At this time, the pop-up window 3515 may indicate the contact for which the event occurs through the profile image.

Referring to FIG. 35C, the electronic device may display the predetermined contacts and the icon 3501 indicating the number of events occurring in the electronic device, which are related to the contacts together in the edge area. For example, the events occurring in the electronic device, which are related to the contacts, may include call reception, message reception, mail reception, and appointed time notification. When touch input 3503 having a strength of pressure or force larger than or equal to a threshold value is detected in an area of the icon 3501 indicating the number of events occurring in the electronic device, the electronic device may display a pop-up window 3505 indicating the occurring event and the contact for which the event occurs.

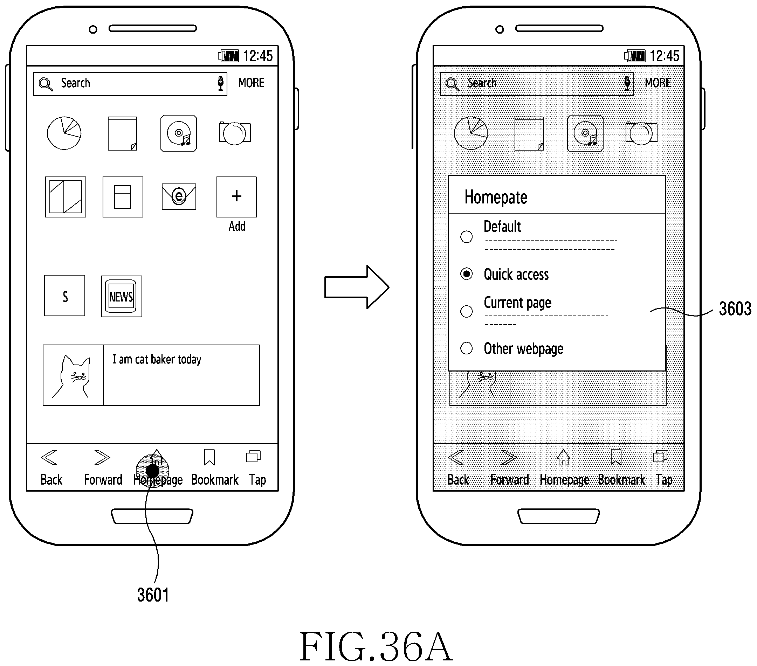

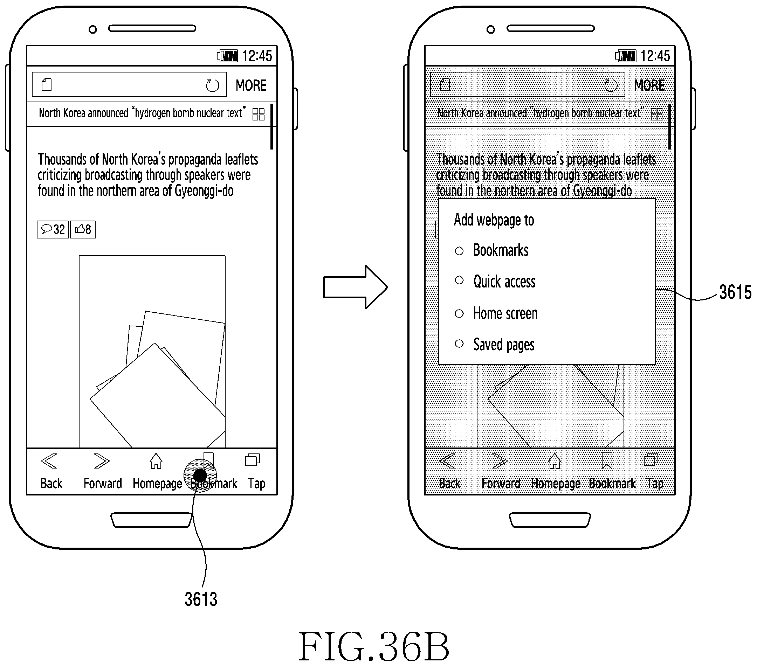

FIGs. 36A and 36B illustrate screen examples in which the electronic device operates on the basis of a touch input type for an Internet application according to various embodiments of the present disclosure.

Referring to FIG. 36A, the electronic device may display an execution screen of an Internet application by user input. When touch input 3601 having a strength of pressure or force larger than or equal to a threshold value is detected for a homepage button on the execution screen of the Internet application, the electronic device may display a pop-up menu 3603 including a function related to homepage settings. For example, the pop-up menu 3603 may provide a function of setting one of a default webpage predetermined as the homepage, a webpage to which quick access is possible, a current webpage, and another webpage as the homepage.

Referring to FIG. 36B, the electronic device may display the execution screen of the Internet application by user input. When touch input 3613 having a strength of pressure or force larger than or equal to a threshold value is detected for a bookmark button on the execution screen of the Internet application, the electronic device may display a pop-up menu 3615 including a function of setting the webpage displayed on the current screen. For example, the pop-up menu 3615 may include an item for setting bookmarks for the currently accessed webpage, an item for setting the currently accessed webpage as a webpage to which quick access is possible, an item for setting the currently accessed webpage as the home screen, and an item for storing the currently accessed webpage.

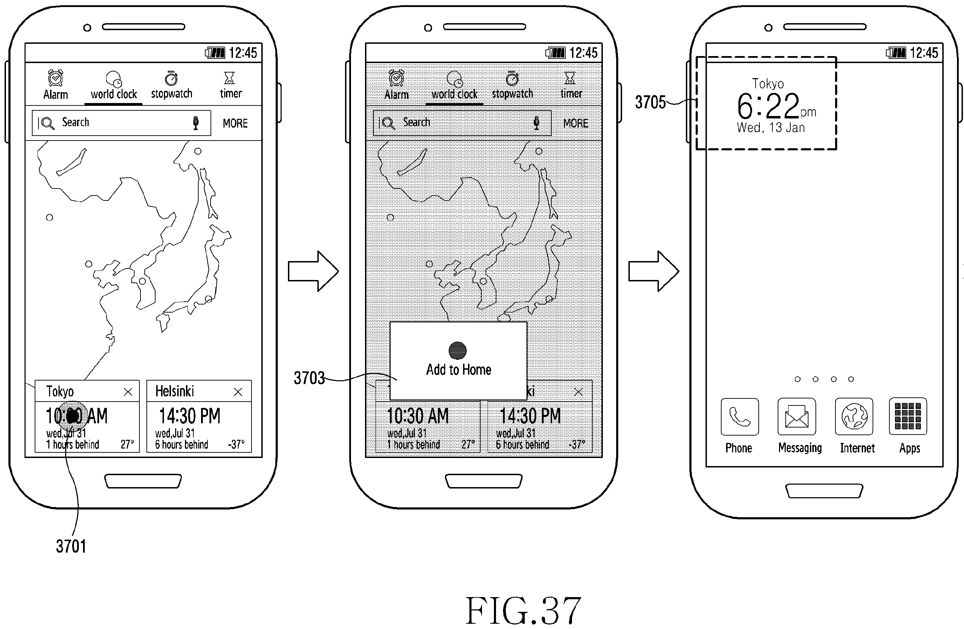

FIG. 37 illustrates screen examples in which the electronic device operates on the basis of a touch input type for a clock application according to various embodiments of the present disclosure.

Referring to FIG. 37, the electronic device may display an execution screen of a clock application by user input. The execution screen of the clock application may include time information in at least one region. When touch input 3701 having a strength of pressure or force larger than or equal to a threshold value is detected in a particular region area, the electronic device may display a pop-up window 3703 for performing a function of adding time information in the corresponding region to the home screen. When a touch is detected in the pop-up window 3703, the electronic device may display the home screen additionally including a widget application 3705 indicating time information in the corresponding region.

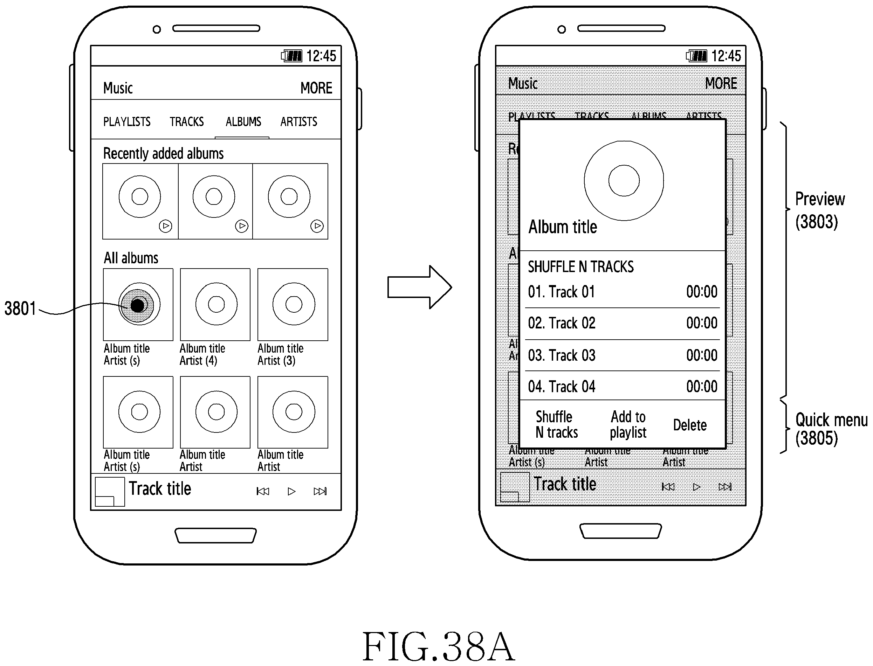

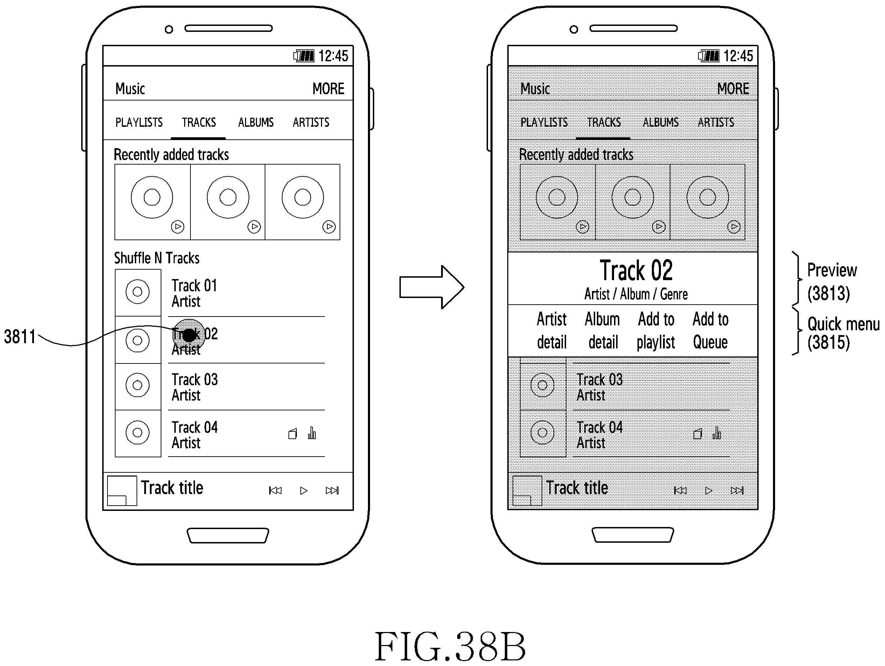

FIGs. 38A and 38B illustrate screen examples in which the electronic device operates on the basis of a touch input type for a music application according to various embodiments of the present disclosure.

Referring to FIG. 38A, the electronic device may display an execution screen of a music application by user input. For example, the electronic device may classify music contents into one or more groups based on playlists, tracks, albums, artists, genres, folders, and composers and display a list of a group requested by the user. When touch input 3801 having a strength of pressure or force larger than or equal to a threshold value is detected for music content belonging to a particular group (for example, an album group), the electronic device may display a pop-up window including a function of a preview 3803 for the corresponding group and a quick menu 3805 and reproduce the music content belonging to the corresponding group. For example, the pop-up window may include an image corresponding to the corresponding group and information on music contents belonging to the corresponding group, and the quick menu 3805 may include items for performing functions of shuffling music contents belonging to the corresponding group, adding music contents belonging to the corresponding group to the playlists, and deleting music contents belonging to the corresponding group.

Referring to FIG. 38B, the electronic device may display the execution screen of the music application by user input as described in FIG. 38A. When touch input 3811 having a strength of pressure or force larger than or equal to a threshold value is detected for particular music content, the electronic device may display a pop-up window including information 3813 on the corresponding music content and a quick menu 3815 and reproduce the corresponding music content. For example, the pop-up window may include metadata such as a track name, an artist, an album, and a genre of the corresponding music content, and the quick menu 3815 may include items for performing functions of viewing artist detail for the corresponding music content, viewing album detail for the corresponding music content, adding the corresponding music content to the playlists, and adding the corresponding music content as the last song in the currently reproduced list.

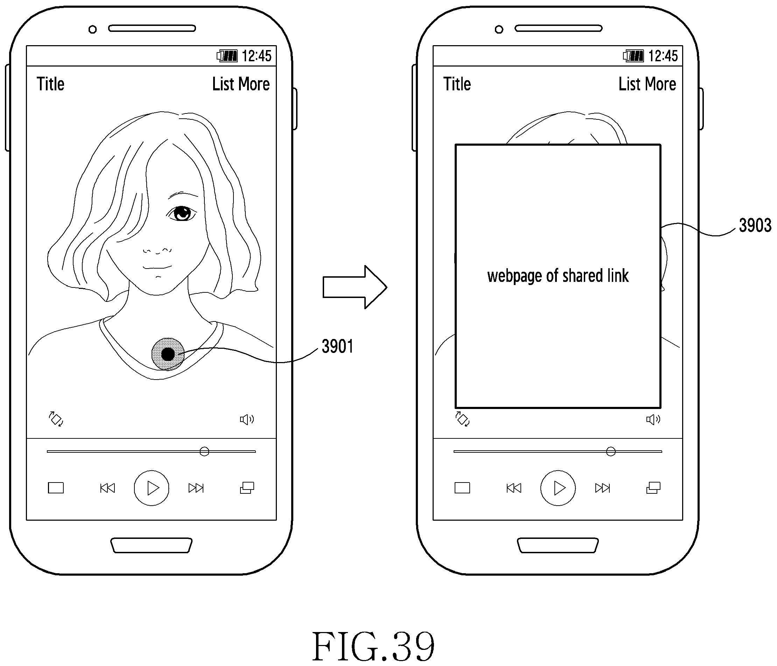

FIG. 39 illustrates a screen example in which the electronic device operates on the basis of a touch input type for a video reproduction application according to various embodiments of the present disclosure.

Referring to FIG. 39, the electronic device may receive a message (for example, a social network service message) including a web link from another electronic device. When a web link is selected by user input, the electronic device may reproduce and display content of the corresponding web link by executing a video reproduction application. When touch input 3901 having a strength of pressure or force larger than or equal to a threshold value is detected on a reproduction screen of content corresponding to the corresponding web link, the electronic device may display a pop-up window 3903 including a webpage image corresponding to the corresponding web link and web link information.

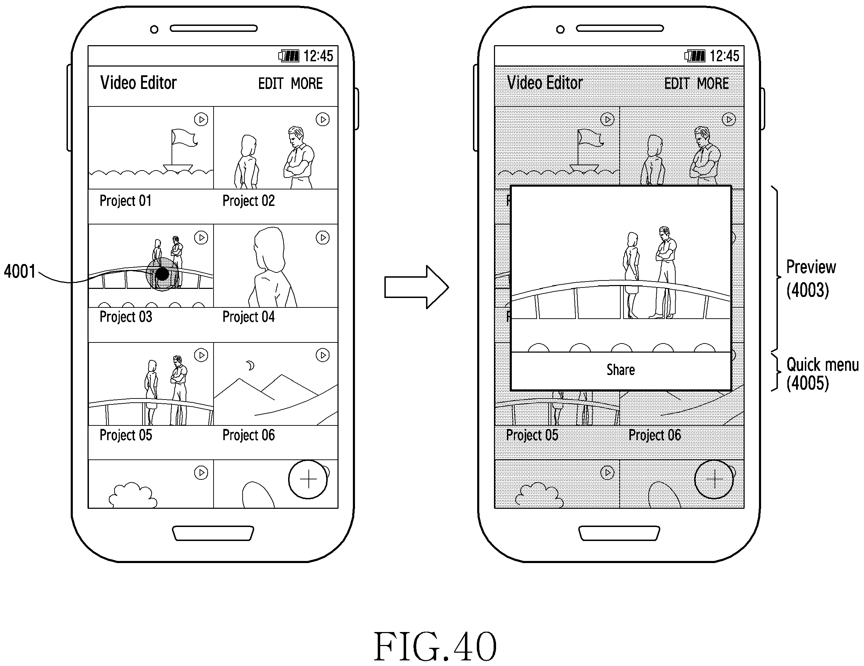

FIG. 40 illustrates a screen example in which the electronic device operates on the basis of a touch input type for a video editing application according to various embodiments of the present disclosure.

Referring to FIG. 40, the electronic device may display an execution screen of a video editing application by user input. The execution screen of the video editing application may include preview images, names, total reproduction time, and saved time or edited time for video contents which can be edited. When touch input having a strength of pressure or force larger than or equal to a threshold value is detected in a particular video content area, the electronic device may display a pop-up window including a preview 4003 and a quick menu 4005 for the corresponding video content. For example, the quick menu may include a function item for sharing the corresponding video content with another electronic device.

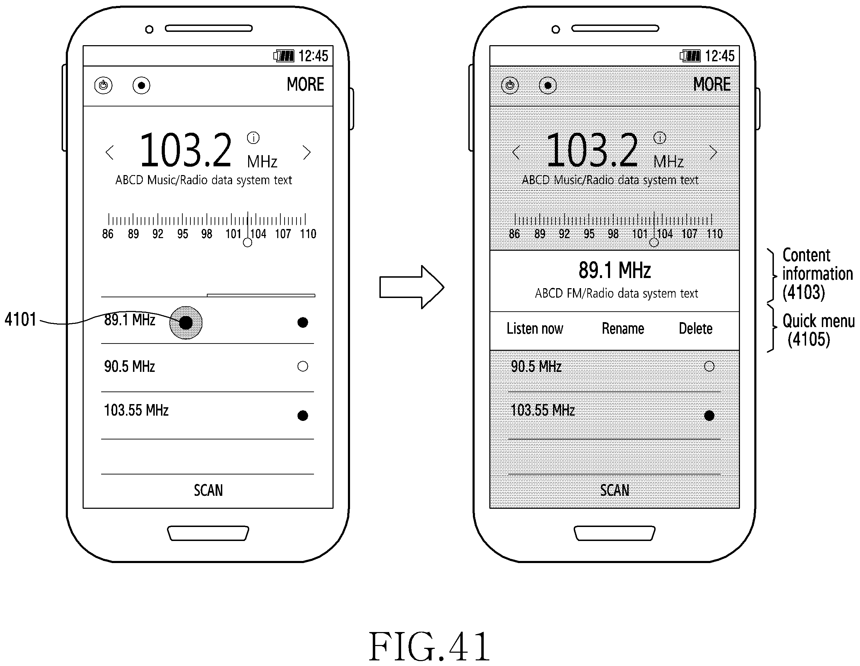

FIG. 41 illustrates a screen example in which the electronic device operates on the basis of a touch input type for a radio application according to various embodiments of the present disclosure.

Referring to FIG. 41, the electronic device may display an execution screen of a radio application according to user input. The execution screen of the radio application may include information on a currently received radio channel, a total radio channel list, a preferred radio channel list, and a broadcasting channel list. When touch input having a strength of pressure or force larger than or equal to a threshold value is detected in an area in which particular radio channel information is displayed, the electronic device may display a pop-up window including content information 4103 and a quick menu 4105. For example, the content information 4103 may include frequency information of the corresponding radio channel, a broadcast name, and radio system text information. Further, the quick menu 4105 may include items for performing functions of listening now to the corresponding radio channel, providing a rename pop-up for the corresponding radio channel, and deleting a broadcast.

The term "module" used in the present document, for example, may refer to a unit that includes one of hardware, software, or firmware, or a combination thereof. The "module," for example, may be interchangeably used with the terms, such as a unit, logic, a logical block, a component, or a circuit. The "modules" may be the minimum unit of a component, which is integrally formed, or a portion thereof. The "module" may be the minimum unit, which performs one or more functions, or a portion thereof. The "module" may be implemented mechanically or electronically. For example, the "module" may include at least one of an ASIC (application specific integrated circuit) chip, an FPGA (field-programmable gate array), or a programmable logic device, which is known or will be developed in the future, and which performs some operations.

At least some of the device (e.g., modules or functions) or the method (e.g., operations), according to various embodiments, for example, may be implement by instructions that are stored, in the form of a program module, in a computer-readable storage medium. One or more processors may perform the function corresponding to the instruction when the instruction is executed by the processor (e.g., the processor 120). The computer-readable storage medium, for example, may be the memory 130.

The computer-readable recording medium may include a hard disk, a floppy disk, a magnetic medium (e.g., a magnetic tape), an optical medium (e.g., a CD-ROM (compact disc read only memory), a DVD (digital versatile disc), or a magneto-optical medium (e.g., a floptical disk)), hardware devices (e.g., a read only memory (ROM), a random access memory (RAM), or a flash memory, or the like). In addition, the program instruction may include a machine language code that is produced by a compiler, as well as a high-level language code that may be executed by the computer by using an interpreter. The above-described hardware device may be configured to operate as one or more software modules in order to perform the operations of various embodiments, and vice versa.

The module or the program module, according to various embodiments, may: include one or more elements described above; exclude some of them; or further include other elements. The operations performed by the module, the program module, or other elements, according to various embodiments, may be executed in a sequential, parallel, iterative, or heuristic method. In addition, some operations may be executed in a different order, or may be omitted, or other operations may be added. In addition, the embodiments disclosed in the present document are intended for the explanation and understanding of the technical matter, and shall not limit the scope of the technology described in the present document. Accordingly, the scope of the present disclosure should be construed to encompass all modifications or various other embodiments based on the technical concept of the present disclosure.

While the present disclosure has been shown and described with reference to certain embodiments thereof, it will be understood by those skilled in the art that various changes in form and details may be made therein without departing from the scope of the present disclosure. Therefore, the scope of the present disclosure should not be defined as being limited to the embodiments, but should be defined by the appended claims and equivalents thereof.

## Claims

1. An electronic device comprising:
a touch detection display;
a unit configured to measure an input strength of a touch detected on the touch detection display; and
at least one processor configured to:
detect an area in which the touch is detected; and
perform a control command corresponding to the input strength of the touch among a plurality of control commands mapped to the area in which the touch is detected.

2. The electronic device of claim 1, wherein the processor is configured to determines the plurality of control command mapped to the area in which the touch is detected based on attributes of an application displayed on a screen.

3. The electronic device of claim 1, further comprising a memory configured to map a plurality of control commands to a touch area of the touch detection display and store the mapped control commands, and map different touch input strengths to the plurality of control commands and store the touch input strengths.

4. The electronic device of claim 1, wherein the processor is configured tomeasures a change in the input strength of the touch while the input of the touch is maintained, determines a number of times the input strength of the touch is measured to be larger than or equal to a threshold value while the input of the touch is maintained, and determines a control command according to the number of times among the plurality of control commands mapped to the area in which the touch is detected.

5. The electronic device of claim 1, wherein the processor is configured to display one screen according to the input strength of the touch among a plurality of screens mapped to the area in which the touch is detected.

6. The electronic device of claim 1, wherein the processor is configured to compare the input strength of the touch with a threshold value and perform one of a first control command and a second control command mapped to the area in which the touch is detected based on a result obtained by comparing the input strength of the touch with the threshold value.

7. The electronic device of claim 1, wherein, when the area in which the touch is detected is an area corresponding to one item among a plurality of items displayed on the screen, the processor is configured to perform a control command for fixing the item to the list according to the input strength of the touch.

8. The electronic device of claim 1, wherein the processor is configured to perform a control command for moving a content area displayed on the screen based on at least one of the area in which the touch is detected, and a movement direction and a movement amount corresponding to the input strength of the touch.

9. The electronic device of claim 1, wherein the processor is configured to perform a control command for displaying a preview screen of an item displayed in the area in which the touch is detected according to the input strength of the touch.

10. The electronic device of claim 1, wherein the processor is configured to change a control parameter for attributes of control command mapped to the area in which the touch is detected according to the input strength of the touch and perform the control command based on the changed control parameter.

11. A method of operating an electronic device, the method comprising:
detecting input of a touch;
measuring an input strength of the touch;
detecting an area in which the touch is detected; and
performing a control command corresponding to the input strength of the touch among a plurality of control commands mapped to the area in which the touch is detected.

12. The method of claim 11, wherein the performing of the control command corresponding to the input strength of the touch among the plurality of control commands mapped to the area in which the touch is detected comprises determining the plurality of control commands mapped to the area in which the touch is detected based on attributes of an application displayed on a screen.

13. The method of claim 11, wherein the area in which the touch is detected corresponds to a plurality of control commands, and the plurality of control commands corresponds to different touch input strengths.

14. The method of claim 11, wherein the performing of the control command corresponding to the input strength of the touch among the plurality of control commands mapped to the area in which the touch is detected comprises:
measuring a change in the input strength of the touch while the input of the touch is maintained;
determining a number of times the input strength of the touch is measured to be larger than or equal to a threshold value while the input of the touch is maintained; and
determining a control command according to the number of times among the plurality of control commands mapped to the area in which the touch is detected.

15. The method of claim 11, wherein the performing of the control command corresponding to the input strength of the touch among the plurality of control commands mapped to the area in which the touch is detected comprises displaying one screen according to the input strength of the touch among a plurality of screens mapped to the area in which the touch is detected.
